(19) Europäisches Patentamt
European Patent Office
Office européen des brevets

(11) **EP 2 917 041 B1**

(12) **EUROPÄISCHE PATENTSCHRIFT**

(45) Veröffentlichungstag und Bekanntmachung des Hinweises auf die Patenterteilung:
**01.11.2017   Patentblatt 2017/44**

(21) Anmeldenummer: **13788969.7**

(22) Anmeldetag: **06.11.2013**

(51) Int Cl.:
***B42D 15/00*** (2006.01)

(86) Internationale Anmeldenummer:
**PCT/EP2013/073193**

(87) Internationale Veröffentlichungsnummer:
**WO 2014/072358 (15.05.2014 Gazette 2014/20)**

(54) **MEHRSCHICHTKÖRPER SOWIE VERFAHREN ZUR HERSTELLUNG EINES SICHERHEITSELEMENTS**

MULTILAYER BODY AND METHOD FOR PRODUCING A SECURITY ELEMENT

CORPS MULTICOUCHE ET PROCÉDÉ DE PRODUCTION D'UN ÉLÉMENT DE SÉCURITÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.11.2012   DE 102012110630**

(43) Veröffentlichungstag der Anmeldung:
**16.09.2015   Patentblatt 2015/38**

(73) Patentinhaber: **OVD Kinegram AG**
**6301 Zug (CH)**

(72) Erfinder:
• **WALTER, Harald**
**CH-8810 Horgen (CH)**
• **TOMPKIN, Wayne Robert**
**CH-5400 Baden (CH)**

(74) Vertreter: **Louis Pöhlau Lohrentz**
**Patentanwälte**
**Postfach 30 55**
**90014 Nürnberg (DE)**

(56) Entgegenhaltungen:
WO-A1-2011/104551    WO-A1-2012/136777
DE-A1-102007 061 979    US-A- 5 714 231

## Beschreibung

Die Erfindung betrifft einen Mehrschichtkörper, insbesondere ein Sicherheitselement für Sicherheitsdokumente, sowie ein Verfahren zur Herstellung eines Sicherheitselements.

Es ist bekannt, auf Banknoten Sicherheitselemente aufzubringen, welche ein Hologramm oder ein computergeneriertes Beugungsgitter aufweisen. Derartige Sicherheitselemente generieren üblicherweise einen optisch variablen Effekt durch gezielte Beugung des einfallenden Lichts in die erste oder in höhere Beugungsordnungen und zeigen so in direkter Reflexion üblicherweise lediglich den Eindruck einer Spiegelfläche.

Weiter ist es bekannt, Farbeffekte in direkter Reflexion durch die Verwendung von Interferenzfilter zu generieren, welche beispielsweise in Form von Interferenzschichtpigmenten einer Druckfarbe zugesetzt werden können. Diese Interferenzfilter basieren auf Mehrschichtsystemen aus leitfähigen und/oder nichtleitenden (dielektrischen) Schichten, z.B. Metall/Nichtleitend/Metall oder Nichtleitend/Nichtleitend/Nichtleitend, wobei die nichtleitenden Schichten unterschiedliche Brechungsindizes aufweisen.

Weiter wird in der WO 03/059643 A1 der Aufbau eines speziellen Sicherheitselements beschrieben, welches einen integrierten optischen Wellenleiter aus einem transparenten Dielektrikum aufweist. Der Wellenleiter ist zwischen Schichten aus Kunststoff eingebettet, in welche ein Beugungsgitter nullter Ordnung abgeformt ist. Durch das Ein- und Auskoppeln des einfallenden Lichts in den Wellenleiter können hierbei Farbeffekte auch in direkter Reflexion generiert werden.

Die WO 2012/136777 A1 beschreibt einen Mehrschichtkörper nach dem Oberbegriff des Anspruchs 1, mit einer optischen Sicherheitskomponente mit Plasmonenwirkung, wobei sie zwei Schichten aus transparentem dielektrischen Material und ein Metallschicht aufweist, wobei die Metallschicht strukturiert ist, um mindestens auf einem Teil ihrer Oberfläche Wellen zu bilden.

Die DE 10 2007 061 979 A1 offenbart ein Sicherheitselement mit einem einfallende elektromagnetische Strahlung selektiv beeinflussenden Merkmalsbereichs.

Die WO 2011/104551 A1 beschreibt eine Sicherheitsvorrichtung, die zunächst ein transparentes, farbiges Element in einem ersten Bereich umfasst und in einer Oberfläche davon eine erste optisch variablen Effekt erzeugende Reliefstruktur gebildet wird, und eine Reflexion verbessernde Schicht, die sich über die erste optisch variablen Effekt erzeugende Relief-Mikrostruktur erstreckt.

Der Erfindung liegt die Aufgabenstellung zugrunde, einen Mehrschichtkörper sowie ein Verfahren zur Herstellung eines Sicherheitselements anzugeben, welches sich durch eine hohe Fälschungssicherheit auszeichnet.

Diese Aufgabe wird durch einen Mehrschichtkörper nach Anspruch 1 und ein Verfahren nach Anspruch 14 gelöst. Plasmonen werden die quantisierten Schwankungen der Ladungsträgerdichte in Halbleitern, Metallen und Isolatoren genannt; quantenmechanisch werden sie als Quasiteilchen behandelt. Der Begriff Plasmon ist eine gebräuchliche Abkürzung für Plasmaschwingungsquanten. Was das Photon für elektromagnetische Wellen darstellt, ist das Plasmon für Schwingungen im Fermigas von Metallen. Man unterscheidet, Partikelplasmon, Oberflächenplasmon und Volumenplasmon. Die ersten beiden gehören zu den Plasmon-Polaritonen, da hier Schwankungen der Elektronendichte mit elektromagnetischen Feldern außerhalb des Metalls koppeln. Streng genommen müssten Oberflächen- und Partikelplasmonen somit den Zusatz Polariton erhalten. Die Plasmonen-Resonanz in den in diesem Dokument beschriebenen Sicherheitselementen fällt unter die Kategorie Plasmon-Polariton. Klassisch kann man sich Plasmonen als Elektronen vorstellen, die relativ zu den positiven Ionen oszillieren. Zur besseren Verdeutlichung kann man sich einen kubischen Metallklotz in einem nach rechts gerichteten Feld vorstellen. Die freien Elektronen bewegen sich nun nach links, bis das Feld im Inneren ausgeglichen ist. Dabei werden am rechten Rand positive Ionen freigelegt. Schaltet man das äußere Feld nun ab, wandern die Elektronen infolge der gegenseitigen Abstoßung und der Anziehung durch die positiven Ionen wieder nach rechts. So oszillieren die Elektronen nun mit der Plasmafrequenz hin und her, bis die Energie durch Reibung oder andere Dämpfungen aufgebraucht ist. Plasmonen sind die Quantisierung dieser Eigenschwingung.

Die Erfindung bietet den Vorteil, Sicherheitselemente mit einem optischen Erscheinungsbild bereitzustellen, das sich deutlich von den bisher bekannten silbrig glänzenden und/oder regenbogenfarbigen Hologramm-Effekten abhebt, und neuartige Farbeffekte bereitzustellen, welche die Fälschungssicherheit von Sicherheitsdokumenten weiter erhöhen. Weiter können diese Effekte auch nicht mittels üblicher holographischer Techniken nachgeahmt werden und auch nicht mittels Dot-Matrix und Kinemax-Geräten kopiert werden, sodass auch hierdurch eine deutliche Erhöhung der Fälschungssicherheit bewirkt wird. Ferner kann dieser Mehrschichtkörper kostengünstiger hergestellt werden als die bekannten Interferenzfilter (z.B. Fabry-Perot Filter), welche meist aus drei oder mehr Schichten mit teils sehr geringen Dickentoleranzen aufgebaut sind.

Das optische Erscheinungsbild des Mehrschichtkörpers zeichnet sich insbesondere durch einen definierten (d.h. weitgehend einfarbigen) Farbeindruck (z.B. rot) aus, welcher in direkter Reflexion und oder Transmission (also unter "normalen" Betrachtungsbedingungen) zu sehen ist. Der Farbeindruck ist stabil über einen relativ breiten Kippwinkelbereich (typischerweise mindestens 10° bis 20°). Dieser Farbeindruck verändert sich beim starken Verkippen (z.B. um 30°) zu einem zweiten definierten und stabilen Farbeindruck (z.B. grün), ähnlich wie bei sogenannten Fabry-Perot Dünnschichtfiltern. Durch diese Stabilität gegen leichte Verkippung unterscheidet er sich deutlich von sogenannten Regenbogenfarbeffekten von Diffraktionsgittern erster oder höherer Ordnung, welche oftmals bereits beim Verkippen um 10° die gesamte Farbpalette des Regenbogens durchlaufen. Ferner erscheinen die Regenbogenfarbeffekte von Diffraktionsgittern nicht in direkter Reflexion, sondern unter anderen Winkeln, welche sich mit der Beugungsgleichung berechnen lassen.

Erfindungsgemäß weist die erste Reliefstruktur eine in Bezug auf eine Spiegelung an der Grundfläche asymmetrische Profilform auf. Überraschend hat sich nach langwierigen Untersuchungen gezeigt, dass derartige Profilformen für den menschlichen Betrachter einen deutlich sichtbareren und klareren Farbeindruck als symmetrische Profilformen, beispielsweise symmetrisch, sinusförmige oder rechteckförmige Profilformen erzeugen. In diesem Sinne symmetrische Profilformen zeichnen sich durch eine Spiegelsymmetrie bezüglich der Grundflächen aus. Diese Profilformen bleiben bei dieser Spiegelung gleich, die Reliefstruktur wird lediglich um eine halbe Periode P verschoben. Die optischen Effekte bei Betrachtung von beiden Seiten (unter gleichem Winkel und gleichen Beleuchtungsbedingungen) sind bei diesen spiegelsymmetrischen Profilformen gleich, wenn die erste Reliefstruktur in beiden Oberflächen der Metallschicht abgeformt ist und die Metallschicht auf beiden Seiten in ein Material mit gleichem Brechungsindex eingebettet ist. Asymmetrische Profilformen in diesem Sinne weisen diese Spiegelsymmetrie in der von der Grundfläche aufgespannten Ebene nicht auf. Diese Profilformen unterscheiden sich bei Betrachtung von beiden Seiten. Beispielsweise kann eine erste Reliefstruktur mit einer derartig asymmetrischen Profilform von der einen Seite betrachtet aus einer Anordnung schmaler Spitzen mit breiten Tälern bestehen und von der anderen Seite betrachtet aus breiten Hügeln mit schmalen tiefen Tälern bestehen. So haben Untersuchungen auch überraschend gezeigt, dass bei einer derartigen Ausbildung der Profilformen die Vertiefungen bezüglich der Plasmonen-Resonanz wie Subwellenlängenlöcher in einer Metallschicht wirken und die Erzeugung von Plasmonen begünstigen.

Das anregende elektrische Feld wird durch die asymmetrische Profilform stärker lokalisiert (z.B. an den schmalen Spitzen der Reliefstruktur), was zu einer ausgeprägteren Resonanz, z.B. Absorption, führen kann.Die Anregung von den Plasmonen unterscheidet sich ferner auf beiden Seiten bei asymmetrischen Profilformen.

Weiter wird die Profilform der ersten Reliefstruktur so gewählt, dass die Breite der Erhebungen und Vertiefungen der ersten Reliefstruktur (mit Periode P und Relieftiefe t), bezogen auf einen Abstand von t/2 von der Grundfläche (d.h. die Halbwertsbreite oder im Englischen "full width at half maximum" FWHM), mindestens 0,6 x P, vorzugsweise mindestens 0,7 x P oder höchstens 0,4 x P, insbesondere höchstens 0,3 x P beträgt ("x" steht für die mathematische Operation "mal"). Es wird so die Breite der Erhebungen oder die Breite der Vertiefungen in einem Abstand der Hälfte der Relieftiefe t von der Grundfläche parallel zur Grundfläche bestimmt, d.h. der Abstand benachbarter Flanken der ersten Reliefstruktur bezogen auf einen Abstand von t/2 bestimmt, und dieser so gewählt, dass die oben angeführten Bedingungen erfüllt sind. Es hat sich gezeigt, dass bei Einhaltung dieser Bedingungen für die Profilformen der ersten Reliefstruktur besonders starke und ästhetische, d.h. wohl definierte, Farbeindrücke für den menschlichen Betrachter erzielt werden können.

Gemäß einem bevorzugten Ausführungsbeispiel der Erfindung beträgt die Flankensteilheit der ersten Reliefstruktur, bezogen auf einen Abstand von t/2 von der Grundfläche zwischen 60° und 90°, weiter bevorzugt zwischen 70° und 85°.

Unter Flankensteilheit der ersten Reliefstruktur wird hierbei der von den Flanken der Reliefstruktur in Bezug auf einen Abstand von t/2 mit der Grundfläche geschlossene Winkel verstanden, d. h. der von den an den Flanken in einem Abstand von t/2 von der Grundfläche anliegenden Tangenten mit der Grundfläche eingeschlossene Winkel verstanden. Der Abstand von der Grundfläche wird hierbei in einer senkrecht auf der Grundfläche stehenden Richtung bestimmt.

Untersuchungen haben gezeigt, dass auch durch Einhalten dieser Bedingungen die Stärke des von der ersten Reliefstruktur insbesondere in direkter Reflexion oder direkter Transmission generierten Farbeindruck weiter verbessert werden kann.

Vorzugsweise wird die Flankensteilheit der ersten Reliefstruktur bezogen auf jeden Abstand zwischen 1/4 x t und 3/4 x t von der Grundfläche so gewählt, dass dieser zwischen 40° und 90°, weiter bevorzugt zwischen 50° und 85° beträgt. Auch hierdurch lässt sich die Stärke des Farbeindrucks, welcher durch die erste Reliefstruktur generiert wird, weiter verbessern.

Weiter ist es vorteilhaft, die Flankensteilheit der ersten Reliefstruktur, bezogen auf jeden Abstand zwischen 0 und 1/4 x t und/oder zwischen 3/4 x t und t von der Grundfläche zwischen 0° und 50°, bevorzugt zwischen 0° und 40° zu wählen. Auch hierdurch lässt sich die Stärke des Farbeindrucks, welcher von erster Reliefstruktur generiert wird, weiter verbessern.

Gemäß einem bevorzugten Ausführungsbeispiel der Erfindung wird die Schichtdicke d der Metallschicht im Bereich der Flanken der ersten Reliefstruktur, bezogen auf einen Abstand von t/2 von der Grundfläche so gewählt, dass diese gegenüber der Dicke der Metallschicht im Bereich der Maxima der Erhebungen und/oder Minima der Vertiefungen um mindestens 30%, weiter bevorzugt um mindestens 50%, weiter bevorzugt zwischen 50% und 100% reduziert ist. Es hat sich gezeigt, dass auch durch diese Maßnahmen der im ersten Bereich generierte Farbeindruck weiter verstärkt werden kann und damit das optische Erscheinungsbild des Mehrschichtkörpers verbessert wird.

Gemäß einem bevorzugten Ausführungsbeispiel der Erfindung beträgt die Relieftiefe t der ersten Reliefstruktur zwischen 80 nm und 500 nm, insbesondere zwischen 100 nm und 400 nm und bevorzugt zwischen 120 nm und 300 nm. Es hat sich gezeigt, dass insbesondere bei Wahl der Relieftiefe t in dem Bereich zwischen 150 nm und 300 nm die Stärke des in dem ersten Bereich generierten Farbeindrucks verbessern lässt.

Die Periode P der ersten Reliefstruktur wird vorzugsweise kleiner als eine Wellenlänge des sichtbaren Lichtes (= Spektralbereich zwischen 400 nm und 700 nm) gewählt, vorzugsweise zwischen 200 nm und 500 nm, insbesondere zwischen 220 nm und 400 nm, weiter bevorzugt zwischen 220 nm und 350 nm gewählt. Es hat sich gezeigt, dass durch die Einstellung der Periode P der ersten Reliefstruktur sich die im ersten Bereich für den menschlichen Betrachter in direkter Reflexion / Transmission zeigende Farbe verändert wird und somit der Farbton des Farbeindrucks bzw. der sich in direkter Reflexion bzw. Transmission unter unterschiedlichen Einfalls- und Ausfallswinkeln zeigende Farbeffekt durch Veränderung der Periode P der Reliefstruktur in den oben angegebenen Bereichen verändern lässt.

Die erste Reliefstruktur kann als Lineargitter ausgebildet sein, welches in eine Richtung eine Abfolge von Erhebungen und Vertiefungen aufweist. Die Liniengitter können aus geraden oder auch gekrümmten, insbesondere schlangenförmigen, (für sogenannte "snake gratings") Linien aufgebaut sein. Es ist jedoch auch möglich, dass die erste Reliefstruktur als ein Kreuzgitter oder hexagonales Gitter oder Kreisgitter ausgebildet ist, welches in zwei Richtungen eine Abfolge von Erhebungen und Vertiefungen aufweist. Im Fall eines Kreuzgitters wird die Periode P der Abfolge von Erhebungen und Vertiefungen bezüglich beider Richtungen vorzugsweise in dem oben angegebenem Bereich gewählt. Hierbei kann bei Kreuzgitter die Periode in den beiden Richtungen gleich sein. Die Periode kann aber auch unterschiedlich sein. Für hexagonale Gitter und Kreisgitter gilt dies analog. Untersuchungen haben weiter gezeigt, dass die Ausbildung der ersten Reliefstruktur als Kreuzgitter oder als hexagonales Gitter vorzuziehen ist, da sich bei diesen Gittern stärkere Farbeindrücke zeigen.

Die Metallschicht ist im ersten Bereich vorzugsweise in einer Schichtdicke d zwischen 10 nm und 100 nm, bevorzugt zwischen 15 nm bis 80 nm und weiter bevorzugt zwischen 20 nm bis 50 nm, auszubilden, wenn der Mehrschichtkörper zur Betrachtung im Auflicht ausgelegt ist.

Die beschriebenen Effekte lassen sich bereits mit nur einer Metallschicht erzielen, da der Kerneffekt nicht auf einer Dünnschicht-Interferenz beruht.

Vorzugsweise weist der Mehrschichtkörper in dem mindestens einen ersten Bereich lediglich eine Metallschicht, nämlich die Metallschicht auf, in dessen erster und/oder zweiter Oberfläche die erste Reliefstruktur abgeformt ist.

Vorzugsweise weist der Mehrschichtkörper im ersten Bereich neben der Metallschicht und der an die Oberfläche bzw. Oberflächen mit abgeformter erster Reliefstruktur der Metallschicht angrenzenden Schicht bzw. Schichten keine weiteren Schichten mehr auf, in die die erste Reliefstruktur abgeformt ist. Hierdurch kann vermieden werden, dass der von der Metallschicht mit der ersten Reliefstruktur generierte Effekt von Interferenzeffekten überlagert und in seiner Brillanz beeinträchtigt wird.

Weiter ist es auch möglich, durch Kombination mit zusätzlichen dünnen Schichten noch weitere, auf einem anderen Funktionsprinzip beruhende Effekte, insbesondere Interferenzeffekte, zu erreichen. Optional kann folglich auf die Metallschicht noch eine HRI-Schicht, oder auch eine Schichtabfolge aus HRI- und LRI-Schichten, z.B. eine LRI- und anschließend eine HRI-Schicht, aufgebracht sein (HRI = High Refractive Index; LRI = Low Refractive Index). Bevorzugt ist die HRI-Schicht aus ZnS oder TiO$_2$ gebildet. Die Schichtdicke der HRI-Schicht ist bevorzugt im Bereich von 20 nm bis 500 nm und weiter bevorzugt im Bereich von 50 nm bis 200 nm. Die LRI-Schicht kann z.B. Polymer oder SiO$_2$ oder MgF$_2$ sein. Bevorzugt ist die Dicke der LRI-Schicht zwischen 20 nm und 1000nm und weiter bevorzugt im Bereich von 50 nm bis 500 nm.

Die Plasmonenresonanz hängt u.a. von dem Brechungsindex des die Metallschicht umgebenden Materials ab. Folglich verändert z.B. eine HRI-Schicht mit hohem Brechungsindex die Resonanz und damit den Farbeindruck.

Weiter hat sich gezeigt, dass ein erfindungsgemäßer Mehrschichtkörper bei entsprechender Ausgestaltung der Schichtdicke der Metallschicht nicht nur im Auflicht, sondern auch im Durchlicht Farbeffekte generiert. Hierbei hat sich gezeigt, dass die optische Dicke (OD) der Metallschicht hierzu vorzugsweise zwischen 0,5 und 2,5, insbesondere zwischen 0,7 und 2,3, weiter bevorzugt zwischen 1,0 und 2,0 zu wählen ist. Die Einheit optischer Dicke (OD) bezieht sich hierbei auf die Transmission der Metallschicht bezogen auf eine unstrukturierte und damit glatte Fläche und steht in folgendem Verhältnis zu der Transmission T:

$$T = 10^{-(OD)}$$

Zwischen Transmission T und optischer Dicke OD besteht so ein algorithmischer Zusammenhang. Eine optische Dicke von 1,0 entspricht einer Transmission von 10% und eine optische Dicke von 2,0 einer Transmission von 1%. Eine optische Dicke von 0,5 bis 2,5 entspricht so eine Aluminiumschicht einer Dicke von 6 nm bis 34 nm, eine optische Dicke von 0,7 bis 2,3 einer Schichtdicke einer Aluminiumschicht von 8 nm bis 31 nm und eine optische Dicke von 1,0 bis 2,0 einer Schichtdicke einer Aluminiumschicht von 13 nm bis 27 nm.

Überraschend hat sich hierbei gezeigt, dass in dem Bereich, in welchem die erste Reliefstruktur in die Metallschicht abgeformt ist, sich das Transmissionsspektrum und damit die in Transmission gesehene Farbe verändert und hierbei die Transmission für bestimmte Wellenlängen des Lichts höher ist, als dies bei einer Spiegelfläche der Fall wäre. Der Grund für die erhöhte Transmission im Bereich der ersten Reliefstruktur liegt wohl in der Anregung von Plasmonen durch das einfallende Licht. Die Plasmonen an der oberen "Grenzfläche" der Metallschicht regen Plasmonen an der unteren "Grenzfläche" an und erhöhen durch diese Kopplung die Intensität des transmittierten Lichts für diesen Wellenlängenbereich. In der unmittelbaren Nähe der Metallschicht entstehen hierbei wohl elektrische Felder mit überhöhter Feldstärke, welche es den Plasmonen ermöglicht, Licht durch die Metallschicht zu "schleusen".

Damit ist es möglich, mittels eines erfindungsgemäßen Schichtkörpers ein metallisiertes Sicherheitsmerkmal bereitzustellen, welches in Auflichtbetrachtung an der Oberseite einen ersten optisch variablen Effekt zeigt, bei Betrachtung von der Unterseite - bei entsprechender Ausgestaltung der Reliefform, wie oben ausgeführt - einen hiervon unterschiedlichen zweiten optischen Effekt zeigt und, bei entsprechender Ausgestaltung - wie oben beschrieben - in Durchlichtbetrachtung (je nach eingestellter optischer Dichte OD des Metalls) ebenfalls einen optischen Effekt zeigt. Im Weiteren ergibt sich bei Durchlichtbetrachtung auch der große Vorteil, dass - im Gegensatz zum Einsatz von transmissiven Beugungsstrukturen erster oder höherer Ordnung - auch bei direkter Transmission, d. h. auch bei Betrachtung in einem senkrechten Winkel, ein entsprechender optischer Effekt sichtbar wird und so ein Sicherheitsmerkmal bereitgestellt wird, welches durch bestehende Technologie nur sehr schwer nachahmbar ist.

Vorzugsweisende ist der Mehrschichtkörper so ausgestaltet, dass eventuell oberhalb der Metallschicht vorgesehenen ein oder mehreren Schichten des Mehrschichtkörpers und/oder unterhalb der Metallschicht eventuell vorgesehene ein oder mehrere Schichten des Mehrschichtkörpers transparent oder teil-transparent ausgebildet sind, insbesondere eine Transmission von mehr als 15%, insbesondere von mehr als 50%, weiter bevorzugt von mehr als 90% in zumindest in einem Teilbereich des ersten Bereichs aufweisen. Hierdurch wird sichergestellt, dass der von der Metallschicht und der ersten Reliefstruktur generierte optische Effekt in Auflichtbetrachtung von der Oberseite, in Auflichtbetrachtung von der Unterseite und/oder in Durchlichtbetrachtung sichtbar ist. Hierbei ist es auch möglich, dass dieser Teilbereich musterförmig ausgebildet ist und der diesen Teilbereich umgebene Teilbereich des ersten Bereichs zumindest eine Schicht aufweist, welche opak ausgebildet ist, sodass der von der Metallschicht und der ersten Reliefstruktur generierte optische Effekt lediglich in dem durch die Formgebung des ersten Teilbereichs bestimmten Bereich sichtbar ist. Hierbei ist es auch möglich, dass oberhalb der Metallschicht und/oder unterhalb der Metallschicht eine Maskenschicht in dem Mehrschichtkörper vorgesehen ist, welche über eine dem ersten Teilbereich entsprechende Ausnehmung verfügt, wobei die Ausnehmung der oberhalb der Metallschicht vorgesehenen Maskenschicht und der der unterhalb der Metallschicht vorgesehenen Maskenschicht auch eine unterschiedliche Formgebung besitzen kann, sodass unterschiedliche Informationen bei Auflichtbetrachtung von der Oberseite bzw. Unterseite sichtbar werden.

Weiter ist es vorteilhaft, wenn die erste Oberfläche der Metallschicht mit einer ersten dielektrischen Schicht und die Unterseite der Metallschicht mit einer zweiten dielektrischen Schicht beschichtet ist, wobei sich die Brechungsindizes der ersten dielektrischen Schicht und der zweiten dielektrischen Schicht um zumindest 0,1, weiter bevorzugt um mindestens 0,2 unterscheiden. Hierdurch kann erreicht werden, dass sich das optische Erscheinungsbild des ersten Bereichs bei Auflichtbetrachtung und/oder Durchlichtbetrachtung von der Oberseite von dem entsprechenden Erscheinungsbild bei Auflichtbetrachtung und/oder Durchlichtbetrachtung von der Unterseite unterscheidet.

Weiter ist es vorteilhaft, wenn die erste Oberfläche der Metallschicht und/oder die zweite Oberfläche der Metallschicht bereichsweise mit transparenten dielektrischen Schichten mit unterschiedlichem Brechungsindex belegt ist und hierdurch in unterschiedlichen Teilbereichen des ersten Bereichs das optische Erscheinungsbild des Mehrschichtkörpers bedingt durch die unterschiedlichen Brechungsindices dieser dielektrischen Schicht voneinander abweicht.

Vorzugsweise wird die Profilform und/oder Relieftiefe t der ersten Reliefstruktur so gewählt, dass die Metallschicht bei direkter Reflexion für das unter dem ersten Einfallswinkel einfallende Licht im ersten Bereich in einem für das menschliche Auge sichtbaren ersten Spektralbereich mit einer Breite von mindestens 50 nm eine Reflexion von weniger als 15% aufweist, insbesondere von weniger als 10% aufweist, und in einem für das menschliche Auge sichtbaren zweiten Spektralbereich einer Breite zwischen 10 nm und höchstens 200 nm, insbesondere 20 nm bis 150 nm, eine mindestens zweifach, ferner mindestens 2,5-fach, bevorzugt mindestens 3-fach und insbesondere mindestens 4-fach höhere direkte Reflexion aufweist bezogen auf den Mittelwert der Reflexion im ersten Spektralbereich.

Dies resultiert in einen für den menschlichen Betrachter definierten und relativ stabilen Farbeindruck bzw. farbige Erscheinung. Für einen definierten und relativ stabilen Farbeindruck in Transmission können die Transmissionswerte deutlich geringer sein als in Reflexion und sogar im Bereich weniger Prozent liegen. Wichtig ist hier, dass in einem für das menschliche Auge sichtbaren zweiten Spektralbereich einer Breite zwischen 10 nm und höchstens 200 nm, insbesondere 20 nm bis 150 nm, eine mindestens zweifach, ferner mindestens 2,5-fach, bevorzugt mindestens 3-fach und insbesondere mindestens 4-fach höhere direkte Transmission vorliegt bezogen auf den Mittelwert der Transmission in einem ersten Spektralbereich mit einer Breite von mindestens 50 nm. Die Breite des ersten Spektralbereichs ist weiter bevorzugt mindestens 100 nm.

Vorzugsweise ist die Profilform und/oder die Relieftiefe der ersten Reliefstruktur weiter so gewählt, dass bei einem vom ersten Einfallswinkel unterschiedlichen zweiten Einfallswinkel die farbige Erscheinung des im ersten Teilbereich direkt reflektierten bzw. durch die Metallschicht direkt transmittierten Lichts unterschiedlich verändert wird und sich unter diesen Einfallswinkeln bei Auflichtbetrachtung bzw.

Durchlichtbetrachtung für den menschlichen Betrachter insbesondere unterschiedliche, relativ stabile Farben zeigen (z.B. rot bei nahezu senkrechter Betrachtung und grün bei Verkippung um z.B. 30°). Dies entspricht einem definierten Farbwechsel beim Verkippen. Vorzugsweise unterscheidet sich der erste Einfallswinkel von dem zweiten Einfallswinkel um einen Wert zwischen 10° und 45°.

Für eine einfache Erkennung des Farbwechsels ist es vorteilhaft, wenn die laterale Ausdehnung des ersten Bereiches mindestens 10mm$^2$ beträgt, weiter bevorzugt mindestens 20 mm$^2$ beträgt und dadurch für das unbewaffnete menschliche Auge deutlich als Flächenbereich erkennbar ist.

Gemäß einem bevorzugten Ausführungsbeispiel der Erfindung weist der Mehrschichtkörper in dem ersten Bereich oder in mindestens einem der ersten Bereiche mindestens einen Farbstoff und/oder Lumineszenzstoff auf, welcher weniger als 2 $\mu$m, insbesondere weniger als 1 $\mu$m, bevorzugt weniger als 500 nm, weiter bevorzugt weniger als 300 nm weit von der ersten Oberfläche und/oder der zweiten Oberfläche der Metallschicht entfernt angeordnet ist. Überraschenderweise hat sich gezeigt, dass Farbstoffe und/oder Lumineszenzstoffe bei einer derart nahen Anordnung an der Oberflächen der mit der ersten Reliefstruktur versehenden Metallschicht eine massiv verstärkte Absorption bzw. Fluoreszenz aufweisen, als dies bei diesen Stoffen üblicherweise der Fall ist, beispielsweise bei Anordnung in der Nähe einer Spiegelfläche oder "normalen" diffraktiven Strukturen, der Fall ist. Dieser Effekt ist wohl darauf zurückzuführen, dass die durch die erste Reliefstruktur bedingte Plasmonen-Anregung eine erhöhte Feldstärke erzeugt. Diese erhöhte Feldstärke liegt im Nahfeld, d. h. vor allem bis zu einer Entfernung von ca. einer Wellenlänge des anregenden Lichts vor. Diese erhöhte Feldstärke ist für die Erhöhung der Absorption bzw. Fluoreszenz der Farbstoffe bzw. Lumineszenzstoffe verantwortlich.

Analoge Effekte werden z.B. in der Analytik in der sogenannten oberflächenverstärkten Raman-Streuung (Surface Enhanced Raman Scattering (SERS)) verwendet. Wenn sich das Molekül nahe einer metallischen Oberfläche (vor allem Silber und Gold) befindet, kann das Raman-Signal extrem verstärkt werden. Die elektromagnetische Verstärkung beruht auf Anregung von Oberflächenplasmonen im Metall, welche an Spitzen an der Oberfläche oder in Partikeln lokal sehr hohe Felder erzeugen kann. Dieses Feld zusammen mit dem einfallenden Licht regen das Molekül an und führt so zu einer verstärkten Raman-Streuung. Über der Oberfläche fällt dieser Effekt rasch ab aber das Molekül braucht nicht an der Oberfläche gebunden zu sein.

Die Verstärkungsmechanismen dahinter werden Plasmonen verstärkte Absorption (surface plasmon polariton bzw. SPP-enhanced absorption) sowie Plasmonen gekoppelte Emission (surface plasmon coupled emission (SPCE)) genannt.

Dieser aufgefundene Effekt einer Farbstoffschicht und/oder Lumineszenzstoffschicht kann, wie im Folgenden beschrieben, in vielfältiger Weise eingesetzt werden, um einprägsame und nur schwer nachahmbare Sicherheitsmerkmale bereitzustellen:

> Die erste und/oder zweite Schicht ist hierbei vorzugsweise auf die erste bzw. zweite Oberfläche der ersten Metallschicht bereichsweise oder vollflächig im ersten Bereich aufgebracht und bedeckt somit die erste Oberfläche bzw. zweite Oberfläche im ersten Bereich bereichsweise oder vollflächig. Die erste und/oder zweite Schicht grenzt somit bereichsweise unmittelbar an die Oberfläche oder Oberflächenbereiche der Metallschicht an, in welche die erste Reliefstruktur in die Metallschicht abgeformt ist. Die erste Reliefstruktur ist damit vorzugsweise bereichsweise oder vollständig von der ersten bzw. zweiten Schicht bedeckt. Weiter ist es auch vorteilhaft, wenn die erste bzw. zweite Schicht lediglich im ersten Bereich auf die Metallschicht aufgebracht ist und damit lediglich dort vorgesehen ist, wo diese an die erste Reliefstruktur angrenzt und damit die oben beschriebenen Effekte generiert werden.

Vorzugsweise weist der Mehrschichtkörper mindestens eine an die erste Oberfläche der Metallschicht angrenzende erste Schicht und/oder mindestens eine an die zweite Oberfläche der Metallschicht angrenzende zweite Schicht auf, welche mindestens einen Farbstoff und/oder mindestens einen Lumineszenzstoff aufweist. Mit dem Begriff Lumineszenzstoffe sind hier insbesondere fluoreszierende oder phosphoreszierende Stoffe umfasst.

Die Schichtdicke der mindestens einen ersten Schicht und/oder der mindestens einen zweiten Schicht beträgt vorzugsweise zwischen 20 nm und 2 $\mu$m, insbesondere zwischen 50 nm und 1 $\mu$m, insbesondere zwischen 100 nm und 500 nm. Durch eine entsprechende Wahl der Schichtdicke der ersten Schicht und/oder der zweiten Schicht kann hierbei sichergestellt werden, dass der vorgehend geschilderte Effekt in dem Bereich, in dem die mindestens eine erste Schicht und/oder zweite Schicht den ersten Bereich überdeckt, überwiegt, sodass sich ein deutlich unterschiedlicher optischer Eindruck in dem Bereich ergibt, in dem die mindestens eine erste Schicht und/oder mindestens eine zweite Schicht den ersten Bereich überdeckt, und in dem Bereich, in denen die mindestens eine erste Schicht und/oder zweite Schicht den ersten Bereich nicht überdeckt.

Vorzugsweise ist die Konzentration der Farbstoffe bzw. Lumineszenzstoffe in dem von der ersten bzw. zweiten Oberflächen der Metallschicht weniger als 1 μm, weiter bevorzugt weniger als 500 nm, weiter bevorzugt weniger als 300 nm entfernten Bereich der ersten und/oder zweiten Schicht höher als in dem übrigen Bereich der ersten bzw. der zweiten Schicht. Hierdurch kann die oben beschriebene Wirkung weiter verstärkt werden.

Die mindestens eine erste Schicht und/oder zweite Schicht kann auf der Metallschicht direkt beispielsweise mittels einem Druckverfahren aufgebracht werden, und insbesondere aus einer Lackschicht oder aus einer Schutzlackschicht bestehen, welcher der mindestens eine Farbstoff bzw. Lumineszenzstoff zugesetzt worden ist. Weiter ist es auch möglich, dass die mindestens eine erste Schicht und/oder zweite Schicht von einer Replizierlackschicht oder einer auf einer Replizierlackschicht aufgebrachten Schicht gebildet wird und die Metallschicht auf diese Replizierlackschicht bzw. auf die auf die Replizierlackschicht aufgebrachte Schicht abgeschieden wird, beispielsweise auf dieser im Vakuum aufgedampft wird.

Vorzugsweise handelt es sich bei dem mindestens einen Farbstoff und/oder Lumineszenzstoff um einen löslichen Farbstoff bzw. Lumineszenzstoff. Alternativ kommen auch Nanopartikel wie z.B. Quantum dot (Q-dot) oder auch Hybridmaterialien wie z.B. farbstoffdotierte Zeolith-Kristalle (wie beispielsweise in der EP 1873202 A1 beschrieben) in Frage. Vorzugsweise werden als Farbstoff Farbstoffe folgender Stoffgruppen eingesetzt: Metallkomplexfarbstoffe, insbesondere mit $Cr^{3+}$ oder $Co^{2+}$ als Zentralatom. Beispiele sind die NeoZapon Farbstoffe von BASF und Orasol-Farbstoffe von BASF (ehemals Ciba). Vorzugsweise werden Lumineszenzstoffe der folgenden Stoffgruppen eingesetzt: Cumarine, Rhodamine und Cyanine.

Die mindestens eine erste Schicht und/oder die mindestens eine zweite Schicht weisen vorzugsweise eine Transmissivität von mindestens 70%, bevorzugt von mindestens 90% in dem für das menschliche Auge sichtbaren Wellenlängenbereich auf. Insbesondere wenn der Farbstoff vollflächig aufgebracht ist, ist es vorteilhaft, wenn die Transmission der gefärbten Schicht durch den Farbstoff nur minimal verändert wird, so dass keine Färbung außerhalb der ersten Bereiche erkennbar ist. Gemäß einem bevorzugten Ausführungsbeispiel der Erfindung wird die Konzentration des mindestens einen Farbstoffs und/oder Lumineszenzstoffes in der mindestens einen ersten Schicht und/oder der mindestens einen zweiten Schicht so gewählt, dass deren optische Wirkung in einem zweiten Bereich, in welchem das Oberflächenrelief von einer Spiegelfläche, einer diffraktiven Struktur, einer Makrostruktur oder einer Mattstruktur gebildet ist, für den menschlichen Betrachter bei einem Betrachtungsabstand von mehr als 30 cm und bei einer Beleuchtung mit weißem Licht (D65) mit einer Beleuchtungsstärke von mindestens 100 Lux, bevorzugt mindestens 500 Lux und gleichzeitig weniger als 10000 Lux nicht sichtbar ist, jedoch im ersten Bereich aufgrund der vorhergehend beschriebenen Verstärkung der Absorption bzw. Lumineszenz eine optisch erkennbare Wirkung entfaltet.

Alternativ wird der Farbstoff, insbesondere in höherer Konzentration, aber nur dort aufgebracht, wo die Strukturen des ersten Bereichs repliziert wurden oder diese Strukturen des ersten Bereichs werden (mit den üblichen Passertoleranzen) dort repliziert, wo der Farbstoff vorliegt. Dadurch ist ein stärkerer Einfluss auf den Farbeffekt möglich, ohne gleichzeitig Bereiche außerhalb des ersten Bereichs für das menschliche Auge erkennbar einzufärben.

Neben dem partiellen Aufbringen des Farbstoffs im ersten Bereich ist es auch möglich, den Farbstoff in unterschiedlicher Konzentration innerhalb und außerhalb des ersten Bereichs oder zwei unterschiedliche Farbstoffe innerhalb und außerhalb des ersten Bereichs aufzubringen.

Der Gewichtsprozentanteil des mindestens einen Farbstoffes bzw. Lumineszenzstoffes an der Trockenmasse der ersten und/oder zweiten Schicht beträgt vorzugsweise zwischen 0,1% und 20% insbesondere zwischen 0,5% und 10%.

Der Gewichtsanteil des Farbstoffes bzw. Lumineszenzstoffes an der Trockenmasse der ersten und/oder zweiten Schicht beträgt vorzugsweise zwischen 1 $mg/m^2$ und 200 $mg/m^2$, weiter zwischen 2 $mg/m^2$ und 50 $mg/m^2$ und bevorzugt zwischen 3 $mg/m^2$ und 30 $mg/m^2$ und insbesondere bevorzugt 3 $mg/m^2$ und 15 $mg/m^2$. Dies hat sich als vorteilhaft zur Erzielung des oben angegebenen Effekts erwiesen.

Die Farbe des mindestens einen Farbstoffes bzw. Lumineszenzstoffes der mindestens einen ersten und/oder mindestens einen zweiten Schicht wird vorzugsweise so gewählt, dass dessen Farbe bzw. dessen Farbe bei Anregung der von der ersten Reliefstruktur für einen bestimmten Einfallswinkel des einfallenden Lichts in direkter Reflexion bzw. Transmission generierten Farbe entspricht oder sich von dieser Farbe unterscheidet. Je nach Farbe können so bei unterschiedlichen Betrachtungswinkeln in direkter Reflexion bzw. in direkter Transmission durch entsprechende Farbmischungen unterschiedliche Farbeffekte generiert werden, welche so durch andere Technologien zumindest nur sehr schwer nachgeahmt werden können und so die Fälschungssicherheit weiter erhöhen.

Vorzugsweise sind zwei oder mehr erste Schichten und/oder zweite Schichten vorgesehen, deren Farbstoffe bzw. Lumineszenzstoffe so gewählt sind, dass sich die Farbe der Farbstoffe dieser Schichten bzw. die Farbe der Lumineszenzstoffe dieser Schichten bei Anregung wechselseitig unterscheidet. So ist es beispielsweise möglich, dass in einer ersten Region, welche den ersten Bereich teilweise überlappt, auf die erste Oberfläche der Metallschicht eine erste Schicht mit einem ersten Farbstoff aufgebracht ist, in einer zweiten Region, welche den ersten Bereich bereichsweise überlappt, eine erste Schicht mit einem zweiten Farbstoff auf die erste Oberfläche der Metallschicht aufgebracht ist, und in einer dritten Region, welche den ersten Bereich zumindest bereichsweise überlappt und die erste und zweite Region bereichsweise überlappt, eine zweite Schicht mit einem dritten Farbstoff auf die zweite Oberfläche der Metallschicht aufgebracht ist, wobei sich die Farbe des ersten, zweiten und dritten Farbstoffs unterscheidet. Hierdurch ergibt sich zum Einen bei entsprechender Wahl der Schichtdicke der ersten Schichten und der zweiten Schichten der bereits oben beschriebene Effekt, dass die Wirkung der ersten, zweiten und dritten Farbstoffe in den Bereich, in dem diese Schichten den ersten Bereich überlappen, deutlich stärker als außerhalb ist. Im Weiteren ergeben sich entsprechende Farbmischeffekte mit den von der ersten Reliefstruktur der Metallschicht im ersten Bereich generierten optischen Effekte, sodass bei Auflichtbetrachtung von der Vorder- und der Rückseite sowie bei Durchlichtbetrachtung jeweils auch entsprechend unterschiedliche optische Effekte bewirkt werden.

Weiter ist es auch möglich, dass ein oder mehrere erste Schichten oder ein oder mehrere zweite Schichten sich bereichsweise überlappen. Auch hierdurch lassen sich interessante optische Effekte erzielen: Wie bereits oben ausgeführt, hängt die Filterwirkung der Farbstoffe sowie die Lumineszenz der Lumineszenzstoffe von der Entfernung dieser Stoffe von der ersten bzw. zweiten Oberfläche der Metallschicht ab, sodass je nach Reihenfolge, in der diese Schichten übereinanderliegen, diese unterschiedliche Farbwirkungen entfaltet, im Gegensatz zu einer üblichen Farbmischung übereinanderliegender Farbschichten, bei der deren Reihenfolge keinen Einfluss auf die sich ergebende Mischfarbe hat.

Gemäß einem bevorzugten Ausführungsbeispiel der Erfindung wird das Oberflächenrelief in ein oder mehreren zweiten Bereichen und/oder weiteren Bereichen von einer zweiten und/oder weiteren Reliefstruktur gebildet. Bei der zweiten und/oder weiteren Reliefstruktur handelt es sich um eine Reliefstruktur, welche vorzugsweise von einer diffraktiven Reliefstruktur, einer holographischen Reliefstruktur, einer Mattstruktur, einer Spiegelflächen, einer refraktiven, nahezu achromatischen Makrostruktur (d.h. einer Struktur mit einer Periode von mehr als 5 $\mu$m), einer Linse, einem Mikrolinsenraster oder einer Kombination solcher Reliefstrukturen gebildet wird.

Unter diffraktiver Reliefstruktur wird insbesondere eine Reliefstruktur verstanden, welche eine Spatialfrequenz zwischen 200 und 2000 Linien/mm aufweist und insbesondere durch Beugung des einfallenden Lichts in die erste oder eine höhere Beugungsordnung einen optisch variablen Effekt generiert. Beispiele hierfür sind Linear- oder Kreuzgitter. Weiter können diffraktive Reliefstrukturen auch von computergenerierten Hologrammen, beispielsweise von Kinoformen gebildet werden. Als Mattstrukturen können isotrope oder anisotrope Mattstrukturen eingesetzt werden. Unter Mattstruktur wird eine Struktur mit Licht streuenden Eigenschaften bezeichnet, welche vorzugsweise über ein stochastisches Oberflächenmattprofil verfügt. Mattstrukturen weisen vorzugsweise eine Relieftiefe (Peak-to-Valley = P-V) zwischen 100 nm und 5000 nm, weiter bevorzugt zwischen 200 und 2000 auf. Mattstrukturen weisen vorzugsweise eine Oberflächenrauigkeit ($R_a$) zwischen 50 nm und 2000 nm, weiter bevorzugt zwischen 100 nm und 1000 nm auf. Der Matteffekt kann entweder isotrop, d.h. gleich unter allen Azimutwinkeln, oder anisotrop, d.h. variierend bei verschiedenen Azimutwinkel, sein. Unter Makrostruktur wird eine Struktur verstanden, deren Spatialfrequenz kleiner als 100 Linien/mm ist und welche einen optischen Effekt im Wesentlichen durch Refraktion generieren. Der Effekt ist somit nahezu achromatisch. Linsen können als refraktiv wirkenden Linsen oder auch als diffraktive Linsen ausgeformt sein. Ein Mikrolinsenraster wird vorzugsweise von einer eindimensionalen oder zweidimensionalen Anordnung von Mikrolinsen, beispielsweise Zylinderlinsen oder sphärischen Linsen gebildet. Die Rasterweite eines Mikrolinsenrasters beträgt vorzugsweise zwischen 300 $\mu$m und 50 $\mu$m.

Vorzugweise werden die zweite und die weitere Reliefstruktur von Reliefstrukturen gebildet, die sich zumindest in einem Strukturparameter unterscheiden und so unterschiedliche optische Effekte generieren.

Vorzugsweise wird der mindestens eine erste Bereich oder einer der ersten Bereiche und der mindestens eine zweite Bereich jeweils von einer Vielzahl von Teilbereichen gebildet. Diese Teilbereiche weisen hierbei vorzugsweise zumindest eine laterale Abmessung auf, welche kleiner als 300 $\mu$m ist.

Die Teilbereiche des ersten Bereichs und die Teilbereiche des zweiten Bereichs sind weiter bevorzugt ineinandergerastert (interleaved) angeordnet. Bevorzugt erfolgt die Ineinanderrasterung mit einer Größe der Teilbereiche unterhalb der Auflösungsgrenze des menschlichen Auges, d.h. insbesondere kleiner als 300 $\mu$m. So ist es beispielsweise möglich, dass in eine Richtung oder in zwei Richtungen Teilbereiche des ersten Bereichs und in Teilbereiche des zweiten Bereichs abwechseln aufeinander abfolgen. Hierdurch ist es möglich, dass für den menschlichen Betrachter der Effekt erzielt wird, dass der von der ersten Reliefstruktur in dem ersten Bereich generierte optische Effekte und der von der zweiten Reliefstruktur in dem zweiten Bereich generierte optische Effekt sich überlagern. So ist beispielsweise unter einem ersten Blickwinkel der von der ersten Reliefstruktur generierte optische Effekt und unter einem zweiten Betrachtungswinkel der von der zweiten Reliefstruktur generierte optische Effekt für den menschlichen Betrachter an ein und derselben Stelle des Mehrschichtkörpers sichtbar. Vorzugsweise ist zumindest in dem Bereich, in dem die Teilbereiche des ersten Bereichs und des zweiten Bereichs ineinandergerastert sind, das Flächenverhältnis der Gesamtfläche der Teilbereiche der ersten Bereichs zu der Gesamtfläche der Teilbereiche des zweiten Bereichs größer als 5:1, weiter bevorzugt größer als 10:1 gewählt. Dieser hohe Anteil des ersten Bereiches ist hilfreich, um einen gut sichtbaren Farbeffekt zu gewährleisten.

Weiter ist es vorteilhaft, wenn der mindestens eine zweite Bereich von einer Vielzahl von voneinander getrennten Teilbereichen gebildet ist und der erste Bereich dieser Teilbereiche als Hintergrundbereich umschließt. So ist es beispielsweise möglich, die Teilbereiche des zweiten Bereichs pseudo-zufällig anzuordnen oder deren Flächenorientierung, beispielsweise die Orientierung ihrer Längsachsen pseudozufällig zu wählen und diese so pseudo-zufällig angeordneten und/oder orientierten Teilbereiche mit dem ersten Bereich als Hintergrundbereich zu umschließen. Die erste Reliefstruktur kann hierbei beispielsweise von einer Spiegelfläche oder von einer achromatischen Struktur gebildet sein, um so die Überlagerung des optischen Erscheinungsbildes des ersten Bereichs mit einem Glitzereffekt oder Glimmereffekt zu erzielen. Die Teilbereiche des zweiten Bereichs weisen hierbei vorzugsweise laterale Flächenabmessungen zwischen 50 $\mu$m und 300 $\mu$m auf.

Gemäß einem weiteren Ausführungsbeispiel der Erfindung besitzt der erste Bereich oder mindestens einer der ersten Bereiche eine musterförmige Formgebung und ist so beispielsweise in Form von Buchstaben, Zahlen, eines Symbols oder eines Motivs ausgeformt. Dieser erste Bereich kann konturartig von einem zweiten Bereich umrahmt sein, wobei dieser zweite Bereich eine zweite Struktur z.B. eine Mattstruktur, aufweist. Dies hebt die Kontur des ersten Bereichs noch hervor.

Vorteilhaft ist hierbei weiter, wenn die Formgebung des ersten Bereichs oder mindestens eines der ersten Bereiche hierbei so gewählt ist, dass diese eine lediglich mithilfe eines Hilfsmittels sichtbar machbare Information enthält. So ist es beispielsweise möglich, dass der erste Bereich oder mindestens einer der ersten Bereiche in Form eines Nanotextes ausgebildet ist, welcher von dem menschlichen Betrachter nur unter Zuhilfenahme einer Vergrößerungsvorrichtung sichtbar gemacht werden kann. Weiter ist es auch möglich, dass der erste Bereich oder mindestens einer der ersten Bereiche in Form eines Moire-Musters ausgeformt ist, in welchem eine versteckte Information kodiert ist, die beispielsweise mittels eines Mikrolinsenrasters oder einer entsprechend ausgeformten Maskenschicht, z.B. ein Linienraster, sichtbar gemacht werden kann, welches bzw. welche ebenfalls Teil des Mehrschichtkörpers sein kann.

Gemäß einem bevorzugten Ausführungsbeispiel der Erfindung weist der erste Bereich oder mindestens einer der ersten Bereiche ein oder mehrere erste Zonen und ein oder mehrere zweite Zonen auf, in welchen sich ein oder mehrere Parameter der ersten Reliefstruktur unterscheiden. Vorzugsweise unterscheidet sich die erste Reliefstruktur in den ersten Zonen von der in den zweiten Zonen in ein oder mehreren der Parametern: Periode P, Azimutwinkel, Relieftiefe t, Grundfläche und Profilform. So unterscheidet sich beispielsweise die erste Reliefstruktur in den ein oder mehreren ersten Zonen von der ersten Reliefstruktur in den ein oder mehreren zweiten Zonen in der Azimuthorientierung, um beispielsweise lediglich mittels einem Polarisator erkennbare Information zu kodieren oder auch in der Periode, Relieftiefe oder in der Neigung der Grundfläche zu einer Grundebene, um beispielsweise Bewegungseffekte oder 3D-Effekte zu generieren.

Weiter ist es auch möglich, dass der erste Bereich oder mindestens einer der ersten Bereiche noch ein oder mehrere dritte oder weitere Zonen umfasst, welche sich von den ersten Zonen und zweiten Zonen darin unterscheiden, dass ein oder mehrere der vorgenannten Parameter der ersten Reliefstruktur in diesen unterschiedlich zu den ersten und zweiten Zonen gewählt sind.

Vorzugsweise sind benachbarte erste und zweite und/oder erste, zweite, dritte und weitere Zonen weniger als 10 $\mu$m, bevorzugt weniger als 1000 nm voneinander beabstandet.

Vorzugsweise sind die Parameter der ersten Reliefstruktur in den ersten Zonen identisch gewählt, in den zweiten Zonen identisch gewählt, in den dritten Zonen identisch gewählt und/oder in den weiteren Zonen identisch gewählt.

Gemäß einem bevorzugten Ausführungsbeispiel weisen die ersten und zweiten Zonen jeweils laterale Abmessungen von mehr als 300 $\mu$m auf, insbesondere eine Breite und eine Länge von jeweils mehr als 500 $\mu$m auf und weiter bevorzugt mehr als 2 mm auf. Die ein oder mehreren ersten und zweiten Zonen sind weiter vorzugsweise zur Ausbildung eines Motivs ausgeformt, wobei die ersten Zonen einen Vordergrundbereich des Motivs ausbilden und die zweiten Zonen einen Hintergrundbereich des Motivs ausbilden. Weiter ist es auch möglich, dass ein oder mehrere erste Zonen zur Ausbildung eines ersten Motivs und ein oder mehrere zweiten Zonen zur Ausbildung eines zweiten Motivs ausgeformt sind.

Gemäß einem bevorzugten Ausführungsbeispiel weisen die ersten, zweiten und/oder dritten Zonen zumindest eine laterale Abmessung von weniger als 300 $\mu$m auf, insbesondere von weniger als 150 $\mu$m, bevorzugt von weniger als 80 $\mu$m auf. Weiter sind die ersten, zweiten und/oder dritten Zonen zumindest bereichsweise ineinandergerastert angeordnet. So ist es beispielsweise möglich, dass erste, zweite und dritte Zonen in einer oder in zwei Richtungen abwechselnd aufeinander abfolgend angeordnet sind.

Durch eine derartige Ausbildung und Anordnung von ersten, zweiten und dritten Zonen ist es beispielsweise möglich, Bewegungseffekte, Morphing-Effekte (Verwandlungseffekte), mehrfarbige Darstellungen oder farbige Darstellungen zu generieren, welche mittels additiver Farbmischung generiert werden. So ist es beispielsweise möglich, erste Zonen zur Darstellung eines ersten Motivs, zweiten Zonen zur Darstellung eines zweiten Motivs und gegebenenfalls dritte Zonen zur Darstellung eines dritten Motivs ineinandergerastert anzuordnen, wobei das erste, zweite und dritte Motiv für den Betrachter jeweils unter einem zugeordneten Blickwinkel sichtbar ist. Weiter können beispielsweise die Parameter der ersten Reliefstruktur in der ersten, zweiten und dritten Zone so gewählt werden, dass unter einem bestimmten Betrachtungswinkel in den ersten, zweiten und dritten Zonen unterschiedliche Farben, beispielsweise Rot, Grün und Blau, generiert werden. Durch die entsprechende Wahl der Anordnung von ersten, zweiten und dritten Zonen in einem einem Bildpunkt zugeordneten Bereich, kann sodann die unter diesem Blickwinkel generierte Farbe des Bildpunkts durch additive Farbmischung generiert werden.

Gemäß einem bevorzugten Ausführungsbeispiel der Erfindung wird in dem ersten Bereich oder in mindestens einem der ersten Bereiche die Grundfläche der ersten Reliefstruktur von einer Grobstruktur oder einer Mattstruktur gebildet. Die Grundfläche ist so nicht in Form einer ebenen Fläche ausgebildet, sondern gemäß der Grobstruktur oder Mattstruktur modelliert. Unter Grobstruktur wird hierbei eine Struktur verstanden, deren Periode um mindestens den Faktor 5, weiter um den Faktor 10 größer als die Periode P der ersten Reliefstruktur ist, und insbesondere zwischen 1 $\mu$m und 10 $\mu$m beträgt. Die Relieftiefe der Grobstrukturen beträgt vorzugsweise zwischen 50 nm und 5000 nm, bevorzugt zwischen 100 nm und 2000 nm. Die Grobstruktur kann so bereichsweise unterschiedlich geneigte Flächen aufweisen, sodass der von ersten Reliefstrukturen in direkte Reflexion/Transmission generierte Effekt sich entsprechend in seinem Winkelbereich verschiebt und so in verschiedenen Teilbereichen des ersten Bereichs unter unterschiedlichen Betrachtungswinkeln sichtbar ist oder - bei entsprechend zufälliger Anordnung bei Verwendung einer Mattstruktur, über einen breiteren Betrachtungswinkelbereich sichtbar ist.

Gemäß einem bevorzugten Ausführungsbeispiel der Erfindung ist in dem ersten Bereich oder in mindestens einem der ersten Bereiche die Periode P der ersten Reliefstruktur bereichsweise variiert. Die Variation der Periode P der ersten Reliefstruktur beträgt hierbei vorzugsweise bis zu 10%, weiter vorzugsweise bis zu 5%. Vorzugsweise wird die Periode P der ersten Reliefstruktur in ein oder mehreren der Randbereiche des erste Bereichs erhöht/verringert oder in Abhängigkeiten von der Entfernung vom Flächenschwerpunkt des ersten Bereichs erhöht oder verringert. Es hat sich gezeigt, dass hierdurch interessante optisch variable Effekte generiert werden können und beispielsweise ein "rolling bar"-Effekt generiert werden kann. Alternativ oder zusätzlich hierzu kann weiter auch der Azimutwinkel der ersten Reliefstruktur bereichsweise (geringfügig) variiert werden.

Unter einem "rolling bar"-Effekt wird meist ein optischer Effekt ähnlich einer reflektierenden Zylinderlinse verstanden. Dabei erscheinen die Bereiche der Zylinderlinse, welche das Licht in die Richtung eines Beobachters reflektieren heller, als die Bereiche, welche das Licht in andere Richtungen reflektieren. Somit erzeugt diese Funktion eine Art "Lichtband", welches scheinbar über die Zylinderlinse wandert, wenn der Mehrschichtkörper in Richtung des Blickwinkels gekippt wird. Im Fall der in diesem Dokument beanspruchten Strukturen ergibt sich ein etwas anderer "rolling bar"-Effekt, bei welchem anstatt des "Lichtbandes" nun ein "Farbband" scheinbar über die Zylinderlinse wandert. Beispielsweise kann ein rötlicher Kern einer Zylinderlinse (mit einem gelblich oder grünlichen Außenbereich der Zylinderlinse) wandern, wenn der Mehrschichtkörper in Richtung des Blickwinkels gekippt wird.

Gemäß einem weiteren bevorzugten Ausführungsbeispiel der Erfindung weist der erste Bereich oder mindestens einer der ersten Bereiche eine Vielzahl von Teilbereichen auf. Jeder der Teilbereiche weist eine kleinste Abmessung von mehr als 3 $\mu$m und eine größte Abmessung von weniger als 300 $\mu$m auf. Ein oder mehrere der Parameter ausgewählt aus der Gruppe: Form des Teilbereichs, Flächengröße des Teilbereichs, Position des Flächenschwerpunkts des Teilbereichs, Neigungswinkel der Grundfläche der ersten Reliefstruktur gegen eine Grundebene, Drehwinkel der Grundfläche der ersten Reliefstruktur um eine auf der Grundebene senkrecht stehenden Achse, Azimutwinkel der ersten Reliefstruktur, Periode P der Reliefstruktur wird, für den jeweiligen Teilbereich pseudo-zufällig innerhalb eines jeweils für den ersten Bereich vordefinierten Variationsbereich variiert.

Für die vorgenannten Parameter werden vorzugsweise folgende Variationsbereiche gewählt:

1) Form des Teilbereichs: Rechteck, Quadrat, Kreis, Oval, Sechseck, Achteck, Raute.

2) Flächengröße des Teilbereichs: Zwischen 5 $\mu$m$^2$ und 6000 $\mu$m$^2$, weiter bevorzugt zwischen 5 $\mu$m$^2$ und 300 $\mu$m$^2$. Wird die Flächengröße der Teilbereiche pseudo-zufällig variiert so beträgt der Variationsbereich vorzugsweise 10 % bis 50 % der mittleren Flächengröße der Teilbereiche.

3) Position des Flächenschwerpunkts des Teilbereichs: Hierbei hat es sich besonders bewährt den Variationsbereich der zufälligen Verschiebung zwischen dem +D/2 und dem -D/2 zu wählen, wobei D die Abmessung der Teilbereiche in Richtung der x-Achse bzw. der y-Achse ist und die Rasterweite des Rasters in Richtung der x-Achse und/oder der y-Achse auf das 3/2 -fache der Abmessung D der Teilbereiche in Richtung der x-Achse bzw. y-Achse festzusetzen.

4) Neigungswinkel der Grundfläche der ersten Reliefstruktur gegen eine Grundebene: Vorzugsweise wird der Neigungswinkel, insbesondere der Neigungswinkel $A_x$ und/oder $A_y$, der Teilbereiche pseudo-zufällig in einem Variationsbereich von -45° bis +45°, weiter bevorzugt von -30° bis +30°, besonders bevorzugt -15° bis +15°, insbesondere zur Erzielung eines Glitzereffekts variiert. Die Grundebene wird hierbei von der x-Achse und der y-Achse aufgespannt und der Neigungswinkel $A_x$ stellt den Neigungswinkel bei einer Drehung um die x-Achse und der Neigungswinkel $A_y$ den Neigungswinkel bei einer Drehung um die y-Achse dar.

5) Drehwinkel der Grundfläche der ersten Reliefstruktur um eine auf der Grundebene senkrecht stehende Achse: Es ist vorteilhaft, diesen Drehwinkel der Teilbereiche pseudozufällig in einem Variationsbereich von -90° bis +90°, weiter bevorzugt von -45° bis +45° und besonders bevorzugt -15° bis +15° zu variieren.

6) Azimutwinkel der ersten Reliefstruktur: Variationsbereich von -90° bis +90°, weiter bevorzugt von -45° bis +45° und besonders bevorzugt -15° bis +15°.

7) Periode P der Reliefstruktur: Die Variation der Periode P beträgt vorzugsweise bis zu 10%, weiter vorzugsweise bis zu 5% um einen Mittelwert herum.

Weiter ist es auch vorteilhaft, wenn der ersten Bereich oder mindestens einer der ersten Bereiche eine Vielzahl von Teilbereichen aufweist und die Parameter der ersten Reliefstruktur in jedem der Teilbereiche gemäß einer Reliefstruktur gewählt wird, die pseudo-zufällig für den jeweiligen Teilbereich aus einem Satz von vordefinierten Reliefstrukturen ausgewählt wird.

Durch diese Vorgehensweise lassen sich interessante optisch variable Effekte generieren, beispielsweise farbige Bewegungen, Glitzer-, Glimmer- und 3D-Effekte generieren.

Der Mehrschichtkörper ist vorzugsweise als Transferfolie, Laminierfolie oder Sicherheitsfaden ausgebildet. Der Mehrschichtkörper weist neben der metallischen Schicht vorzugsweise noch ein oder mehrere weitere Schichten ausgewählt aus der Gruppe: Replizierschicht, Lackschicht, Haftvermittlungsschicht, Kleberschicht, Schutzlackschicht, Trägerschicht und Dekorschicht auf. Der Mehrschichtkörper weist so beispielsweise eine Trägerfolie, vorzugsweise eine transparente Kunststofffolie z.B. aus PET, PC, PE, BOPP mit einer Dicke zwischen 10 µm und 500 µm, eine transparente Replizierschicht, beispielsweise aus einem thermoplastischen oder UVhärtbaren Replizierlack und eine Kleberschicht auf, beispielsweise eine Kaltkleberschicht, eine Heißkleberschicht oder eine UV-härtbare Kleberschicht.

Vorzugsweise ist der Mehrschichtkörper weiter als ein Sicherheitselement eines Sicherheitsdokuments, insbesondere einer Banknote oder eines ID-Dokuments ausgebildet und so beispielsweise in Form eines Patches oder eine Streifes ausgeformt. Weiter ist es auch möglich, dass der Mehrschichtkörper ein Sicherheitsdokument, beispielsweise eine Banknote, eine Karte (z.B. Kreditkarte, ID-Karte) oder ein ID-Dokument ausbildet. Das Sicherheitsdokument kann außerdem ein Etikett/Label, eine Verpackung eines kommerziellen Produkts, ein Ticket, ein Zertifikat oder eine Steuerbanderole oder Steuermarke sein.

Wird der Mehrschichtkörper als Transferfolie ausgebildet, so wird vorzugsweise ein Teilbereich des Mehrschichtkörpers mittels eines musterförmig ausgebildeten Prägestempels auf ein Substrat abgeprägt. Weist der Mehrschichtkörper beispielsweise eine homogene erste Reliefstruktur auf, welche einen der oben beschriebenen Farbeffekte generiert, beispielsweise einen Farb-Shift bei einer Drehung von Rot nach Grün, so kann durch einen Prägestempel mit einer entsprechenden Formgebung, beispielsweise der Formgebung eines Diamanten, auf dem Zielsubstrat ein Element mit dieser Formgebung, beispielsweise ein Diamant, mit diesem Farbeffekt hergestellt werden. Weiter ist es auch möglich, dass der Mehrschichtkörper in diesem Fall mittels einer unspezifischen Laminierwalze auf ein Substrat vollflächig aufgebracht wird. Besonders vorteilhaft ist hier weiter, wenn die Oberfläche des Substrats, auf das der Mehrschichtkörper abgeprägt wird, eine Oberflächenstruktur aufweist, insbesondere eine Grobstruktur oder eine Mattstruktur aufweist und der Prägedruck so gewählt wird, dass die Grundfläche der ersten Reliefstruktur gemäß der Grobstruktur oder Mattstruktur beim Abprägen verformt wird.

Weiter ist es auch möglich und auch vorteilhaft, den Mehrschichtkörper in einem Arbeitsgang mit einem Blindprägewerkzeug zu bearbeiten, in dessen Prägefläche eine Grobstruktur abgeformt wird. Der Prägedruck wird hierbei so gewählt, dass die Grundfläche der ersten Reliefstruktur gemäß der Grobstruktur des Blindprägewerkzeugs beim Aufpressen das Blindprägewerkzeug verformt wird. Auch durch dieses Verfahren ist es möglich, in einem nachträglich Arbeitsschritt den Mehrschichtkörper durch entsprechende Verformung der Grundfläche der ersten Reliefstruktur nachträglich zu individualisieren und so die bereits oben beschriebenen zusätzlichen optischen Effekte in ein Sicherheitselement oder ein Sicherheitsdokument einzubringen.

Im Folgenden wird die Erfindung anhand von mehreren Ausführungsbeispielen unter Zuhilfenahme der beiliegenden Zeichnungen beispielhaft erläutert.

Fig. 1 a zeigt eine schematische Draufsicht auf ein Sicherheitsdokument mit einem Sicherheitselement.

Fig. 1b zeigt eine schematische Schnittdarstellung des Sicherheitsdokuments nach Fig. 1a.

Fig. 2 zeigt eine schematische Schnittdarstellung eines Ausschnitts eines Sicherheitselements.

Fig. 3 zeigt eine schematische Schnittdarstellung eines Ausschnitts eines Sicherheitselements.

Fig. 4a zeigt eine schematische Darstellung einer Reliefstruktur.

Fig. 4b zeigt eine schematische Draufsicht auf die Reliefstruktur nach Fig. 4a.

Fig. 4c zeigt eine schematische Schnittdarstellung einer Reliefstruktur.

Fig. 4d zeigt eine schematische Schnittdarstellung einer Reliefstruktur.

Fig. 4e zeigt ein Diagramm zur Verdeutlichung des Reflexionsverhaltens einer Metallschicht mit in einer Oberfläche abgeformten Reliefstruktur.

Fig. 4f und 4g zeigen jeweils eine schematische Schnittdarstellung einer Reliefstruktur.

Fig. 5a bis Fig. 5g zeigen Diagramme zur Verdeutlichung des Reflexionsverhaltens bzw. Transmissionsverhaltens einer Metallschicht mit einer in eine Oberfläche abgeformte Reliefstruktur.

Fig. 6a zeigt eine schematische Schnittdarstellung eines Ausschnitts eines Sicherheitselements.

Fig. 6b zeigt eine schematische Schnittdarstellung eines Ausschnitts eines Sicherheitselements.

Fig. 6c zeigt ein Diagramm zur Verdeutlichung des Reflexionsverhaltens des Sicherheitselements nach Fig. 6a.

Fig. 6d zeigt eine schematische Schnittdarstellung eines Ausschnitts eines Sicherheitselements.

Fig. 6e und Fig. 6f zeigen Diagramme zur Verdeutlichung des Reflektionsverhaltens eines Sicherheitselements.

Fig. 7a zeigt eine schematische Draufsicht auf ein Sicherheitselement.

Fig. 7b zeigt eine schematische Draufsicht auf das Sicherheitselement nach Fig. 7a nach Aufbringung zweier Schichten enthaltend einen Farbstoff oder Lumineszenzstoff.

Fig. 8a und Fig. 8b zeigen schematische Draufsichten auf einen Bereich eines Sicherheitselements.

Fig. 9a und Fig. 9b zeigen schematische Draufsichten auf einen Bereich eines Sicherheitselements.

Fig. 9c zeigt ein Diagramm zur Verdeutlichung des Reflexionsverhaltens des Sicherheitselements nach Fig. 9a und b.

Fig. 10a und Fig. 10b zeigen schematische Draufsichten auf einen Bereich eines Sicherheitselements.

Fig. 11 zeigt eine schematische Draufsicht auf einen Ausschnitt eines Sicherheitselements umfassend einen aus mehreren Teilbereichen gebildeten zweiten Bereich und einen ersten Bereich.

Fig. 12a zeigt eine schematische Schnittdarstellung einer Transferfolie.

Fig. 12b zeigt eine schematische Schnittdarstellung einer Anordnung zum Abprägen der Transferfolie nach Fig. 12a auf ein Substrat.

Fig. 12c zeigt eine schematische Draufsicht eines Ausschnitts der Transferlage der Transferfolie nach Fig. 12a.

Fig. 12d zeigt eine schematische Draufsicht auf einen Ausschnitt des Substrats nach Fig. 12b nach dem Abprägen.

Fig. 13 zeigt eine schematische Schnittdarstellung eines Ausschnitts eines Sicherheitselements.

Fig. 14a zeigt eine schematische Darstellung eines Ausschnitts eines Sicherheitselements, bei dem ein mit einer Reliefstruktur belegter Bereich von mehreren Teilbereichen gebildet ist.

Fig. 14b zeigt eine schematische Darstellung zur Verdeutlichung der Orientierung der Grundfläche einer in den Teilbereichen nach Fig. 14a vorgesehenen Reliefstruktur.

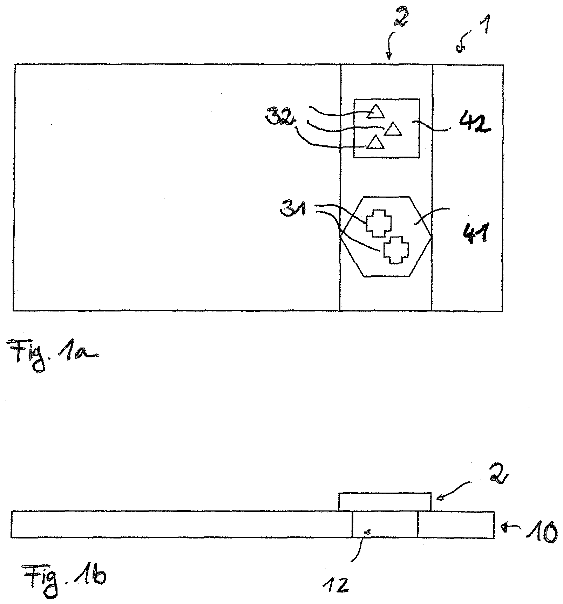

Fig. 1a und Fig. 1b zeigen ein Sicherheitsdokument 1. Bei dem Sicherheitsdokument 1 handelt es sich vorzugsweise um eine Banknote. Es ist jedoch auch möglich, dass es sich bei dem Sicherheitsdokument 1 beispielsweise um ein ID-Dokument, ein Etikett zur Produktsicherung, eine ID-Karte oder Kreditkarte, Geldkarte, ein Hang-Tag eines kommerziellen Produkts oder ein Zertifikat insbesondere Software-Zertifikat handelt.

Das Sicherheitsdokument 1 weist ein Trägersubstrat 10 und ein auf dem Trägersubstrat 10 appliziertes Sicherheitselement 2 auf.

Bei dem Trägersubstrat 10 handelt es sich vorzugsweise um ein Papiersubstrat, beispielsweise mit einer Schichtdicke zwischen 50 oder 500 $\mu$m. Es ist jedoch auch möglich, dass es sich bei dem Substrat 10 um ein Kunststoffsubstrat oder um ein Substrat aus ein oder mehreren Kunststoff- und/oder Papierschichten handelt. Weiter ist es auch möglich, dass auf dem Substrat 10 neben dem Sicherheitselement 2 auch ein oder mehrere weitere Sicherheitselemente appliziert oder in den Schichtaufbau oder die Schichten des Substrats 10 integriert sind. Das Substrat 10 weist so beispielsweise als weitere Sicherheitselemente ein oder mehrere der folgenden Elemente auf: Ein Wasserzeichen, ein Sicherheitsdruck, einen Sicherheitsfaden, einen Patch mit ein oder mehreren Sicherheitsmerkmalen, welche beispielsweise von einer holographischen oder beugungsoptischen Struktur erbracht werden.

Das Sicherheitselement 2 hat in dem Ausführungsbeispiel nach Fig. 1 a und Fig. 1 b eine streifenförmigen Formgebung und erstreckt sich über die gesamte Breite oder Länge des Sicherheitsdokuments 1. Weiter deckt das Sicherheitselement 2 einen Fensterbereich 12 des Substrats 10 ab, in dem das Substrat 10 eine Ausnehmung bzw. Durchbrechung aufweist oder transparent ausgebildet ist. Damit ist in diesem Bereich das Sicherheitselement 2 sowohl bei Betrachtung von der Vorderseite, als auch bei Betrachtung von der Rückseite des Sicherheitsdokuments 1 sichtbar. Es ist jedoch auch möglich, dass das Sicherheitselements 2 eine andere Formgebung besitzt, beispielsweise als Patch ausgebildet ist, oder nicht in einem Fensterbereich des Sicherheitsdokuments 1 angeordnet ist, sondern vollständig auf einem opaken Bereich des Substrats 10 appliziert ist.

Bei dem Sicherheitselement 2 handelt es sich vorzugsweise um eine Laminierfolie, welche ein Trägersubstrat, eine Metallschicht ein oder mehrere optionale Dekorschichten und eine Kleberschicht aufweist, mit der die Laminierfolie an dem Substrat 10 festgelegt ist. Bei dem Trägersubstrat handelt es sich vorzugsweise um eine transparente Kunststofffolie mit einer Schichtdicke zwischen 10 $\mu$m und 500 $\mu$m, insbesondere zwischen 15 $\mu$m und 150 $\mu$m, beispielsweise aus BOPP oder PET oder PC (Polycarbonat). Bei der Kleberschicht handelt es sich vorzugsweise um eine Heißkleberschicht, eine Kaltkleberschicht oder um eine UV-härtbare Kleberschicht oder um eine wärmehärtbare bzw. wärmevernetzende Kleberschicht oder um eine hybride Kleberschicht mit thermoplastischen und wärme- und/oder strahlenhärtenden Komponenten.

Weiter ist es auch möglich, dass das Sicherheitselement 2 als Transferfolie oder Übertragungslage einer Transferfolie ausgebildet ist. In diesem Fall ist zwischen der Trägerschicht und der Metallschicht auch eine Ablöseschicht vorgesehen bzw. es fehlt die Trägerfolie. Weiter ist es auch möglich, dass das Sicherheitselement 2 als Sicherheitsfaden ausgebildet ist und nicht, wie in Fig. 1b gezeigt, auf die Oberfläche des Substrats 10 appliziert ist, sondern zumindest bereichsweise in das Substrat 10 eingebettet ist oder abwechselnd auf der Oberseite und der Unterseite des Substrats 10 angeordnet ist. In diesem Fall besteht das Sicherheitselement 2 vorzugsweise aus einer Trägerfolie, der Metallschicht ein oder mehreren optionalen Dekorschichten und optional einer Haftvermittlungsschicht, welche auf der Oberseite und/oder der Unterseite des Sicherheitselements 2 vorgesehen ist.

Weiter ist es auch möglich, dass das Sicherheitselement 2 von Schichten des Substrats 10 bereitgestellt wird, insbesondere wenn es sich bei dem Sicherheitsdokument 1 um ein kartenförmiges Sicherheitsdokument handelt. In diesem Fall besteht das Sicherheitselement aus einer Metallschicht und ein oder mehreren optionalen Dekorschichten, welche die im Folgenden beschriebenen Funktionen erbringen.

Das Sicherheitselement 2 weist vorzugsweise ein oder mehrere Bereiche 31, 32, 41 und 42 auf, in welchen zumindest bereichsweise eine Metallschicht vorgesehen ist. In die zur Oberseite des Sicherdokuments weisenden Oberfläche und/oder die zur Unterseite des Sicherheitsdokuments 1 weisende Oberfläche der Metallschicht ist zumindest bereichsweise ein optisch aktives Oberflächenrelief abgeformt. In den ein oder mehreren Bereichen 31 und 32 wird hierbei dieses Oberflächenrelief von einer ersten Reliefstruktur gebildet, die in zumindest einer durch einen zugeordneten Azimutwinkel bestimmten Richtung eine Abfolge von Erhebungen und Vertiefungen aufweist, deren Erhebungen mit einer Periode P aufeinander abfolgen, welche kleiner als eine Wellenlänge des sichtbaren Lichtes ist. Der genauere Aufbau dieser ersten Reliefstruktur wird im Folgenden noch anhand von zahlreichen Ausführungsbeispielen erläutert. In den ein oder mehreren Bereichen 41 und 42 wird das Oberflächenrelief von einer zweiten und/oder weiteren Reliefstruktur gebildet, die ausgewählt ist bzw. ausgewählt sind aus der Gruppe: diffraktive Reliefstruktur, holographische Reliefstruktur, Spiegelfläche, Mattstruktur, Makrostruktur, Linse oder Mikrolinsenraster. Weiter ist es auch möglich, dass in ein oder mehreren der Bereiche 41 und 42 die zweite und/oder weitere Reliefstruktur nicht in einer Oberfläche einer Metallschicht abgeformt ist, sondern zwischen zwei transparenten Schichten des Sicherheitselements 2 abgeformt ist, welche sich in ihrem Brechungsindex um mehr als 0,2 unterscheiden, oder in der Oberfläche einer hoch- oder niedrigbrechenden dielektrischen Schicht abgeformt ist, beispielsweise einer ZnS-Schicht abgeformt ist.

Die Bereiche 32 und 42 überlappen hierbei den Fensterbereich 12 zumindest bereichsweise, sodass das Sicherheitselement 2 in den Bereichen 32 und 42 zumindest bereichsweise von der Oberseite und Unterseite des Sicherheitsdokuments 1 sichtbar sind. In den Bereichen 32 und 42 ist so der von der ersten bzw. zweiten Reliefstruktur generierte optische Effekt bei Betrachtung von der Oberseite des Sicherheitsdokuments 1, bei der Betrachtung von der Unterseite des Sicherheitsdokuments 1 und/oder bei Betrachtung im Durchlicht sichtbar. Die Bereiche 31 und 41 sind vorzugsweise nicht im Fensterbereich 12 angeordnet. Der von der ersten Reliefstruktur bzw. zweiten Reliefstruktur in den Bereichen 31 bzw. 41 gebildete optische Effekt ist so vorzugsweise lediglich bei Auflichtbetrachtung von der Vorderseite des Sicherheitsdokuments 1 sichtbar.

Weiter ist es auch möglich, dass das Sicherheitselement 2 noch weitere Sicherheitsmerkmale aufweist, beispielsweise einen Sicherheitsdruck aufweist, ein oder mehrere Schichten enthaltend optisch variable Pigmente aufweist, ein oder mehrere Schichten enthaltend fluoreszierende oder phosphoreszierende Stoffe aufweist oder ein oder mehrere Schichten aufweist, welche ein maschinenlesbares Sicherheitsmerkmal, z.B. einen Barcode, einen Magnetstreifen, maschinenlesbare Pigmente, Merkmalsstoffe oder Taggants, bereitstellen.

Wie auch in den Figuren Fig. 1a und Fig. 1b dargestellt, stellen die Bereiche 31, 32, 41 und 42 Bereiche des Sicherheitsdokuments 1 bzw. Sicherheitselements 2 dar, welche sich bei einer Draufsichtbetrachtung des Sicherheitselements 2 ergeben, d.h. Bereiche bezüglich einer Betrachtung senkrecht zu einer von der Oberseite bzw. Unterseite des Sicherheitsdokuments 1 bzw. Sicherheitselements 2 definierten Ebene ausbilden. Dies gilt auch für die sonstigen hier beschriebenen Bereiche, Zonen und Teilbereiche.

Weiter ist die Anzahl der Bereiche 31, 32, 41 und 42 und deren Ausformungen in Fig. 1 a beispielhaft dargestellt, sodass die Bereiche 31, 32, 41 und 42 eine andere Formgebung besitzen können, in einer anderen Anzahl vorgesehen sein können und im Weiteren auch ausreichend ist, wenn in dem Sicherheitselement 2 nur ein Bereich 31 oder ein Bereich 32 vorgesehen ist.

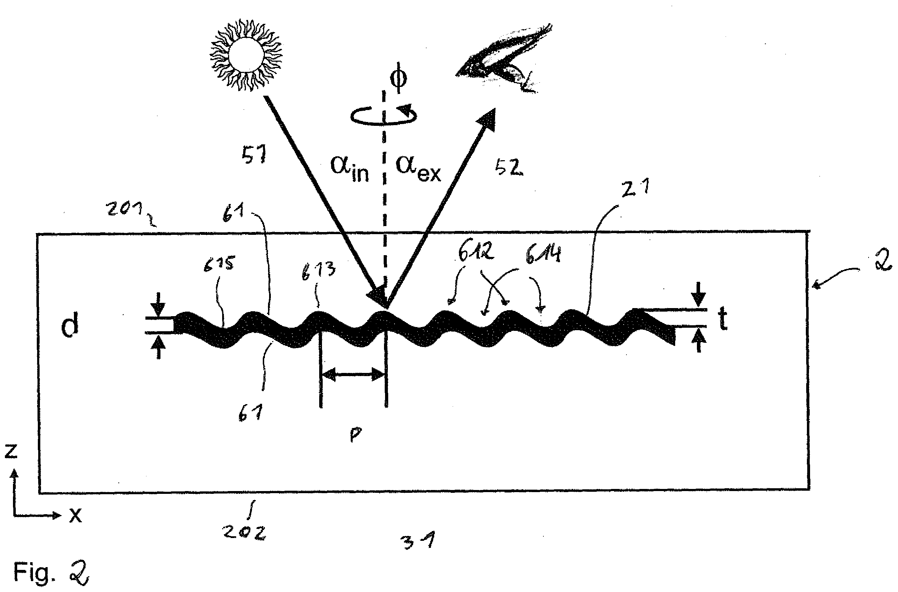

Der Aufbau des Sicherheitselements 2 in einem Teilbereich 31 wird im Folgenden beispielhaft anhand von Fig. 2 erläutert.

Fig. 2 zeigt einen Ausschnitt des Sicherheitselements 1, welches eine Oberseite 201 und eine Unterseite 202 aufweist. Weiter weist das Sicherheitselement 2 eine - ggf. auch lediglich partiell vorgesehene - Metallschicht 21 auf, in deren zur Oberseite 201 weisenden Oberfläche eine Reliefstruktur 61 ausgeformt ist und/oder in deren zur Unterseite 202 weisenden Oberfläche eine Reliefstruktur 61 ausgeformt ist. Wie in Fig. 2 gezeigt, ist die Reliefstruktur 61 hierbei vorzugsweise in beiden Oberflächen die Metallschicht 21 abgeformt.

Neben der Metallschicht 21 weist das Sicherheitselement 2 vorzugsweise noch ein oder mehrere, in Fig. 2 nicht gezeigte Schichten auf, beispielsweise eine Replizierlackschicht, ein oder mehrere Lackschichten, ein oder mehrere Haftvermittlungsschichten und ein oder mehrere weitere Dekorschichten auf.

Vorzugsweise bildet die obere Oberfläche der Metallschicht 21 die Oberseite 201 des Sicherheitselements 2 aus oder die ein oder mehreren Schichten des Sicherheitselements 2, welche zwischen der Oberseite 201 und der Metallschicht 21 vorgesehen sind, sind - zumindest in den Bereichen 31 - transparent oder transluzent ausgebildet und weisen vorzugsweise zumindest in dem Bereichen 31 eine Transmission in dem für das menschliche Auge sichtbaren Wellenlängenbereich von mehr als 30%, insbesondere mehr als 50%, bevorzugt von mehr als 80% auf.

Bei der Herstellung des Sicherheitselements 2 wird beispielsweise auf eine vorzugsweise transparente Trägerfolie, ggf. unter Zwischenschaltung einer vorzugsweise transparenten Haftvermittlungsschicht, eine vorzugsweise transparente Replizierlackschicht aufgebracht. In die Replizierlackschicht wird sodann mittels UV-Replikation oder mittels Wärme/Druck ein Oberflächenrelief zumindest bereichsweise abgeformt. In den Bereichen 31 und 32 wird hierbei die Reliefstruktur 61 als erste Reliefstruktur und in den Bereichen 41 und 42 ggf. die oben beschriebenen zweiten Reliefstrukturen abgeformt. Sodann wird die Metallschicht 21 beispielsweise mittels Aufdampfens im Vakuum aufgebracht und ggf. mittels eines Demetallisierungsverfahrens musterförmig strukturiert. Sodann wird optional eine vorzugsweise transparente Schutzlackschicht und/oder Kleberschicht aufgebracht. Weiter ist es auch möglich, dass bei der Fertigung des Sicherheitselements 2 noch ein oder mehrere weitere Schichten in das Sicherheitselement 2 eingebracht werden, wie bereits oben ausgeführt.

Die Reliefstruktur 61 weist in zumindest einer durch einen zugeordneten Azimutwinkel bestimmten Richtung eine Abfolge von Erhebungen 612 und Vertiefungen 614 auf, deren Erhebungen mit einer Periode P aufeinander abfolgen, welche kleiner als eine Wellenlänge des sichtbaren Lichtes ist. Die Reliefstruktur 61 weist eine Relieftiefe t auf, welche durch die Beabstandung der Maxima 613 der Erhebungen 612 der Reliefstrukturen 61 von einer Grundfläche bestimmt ist, welche durch Minima 615 der Vertiefung 614 der Reliefstruktur 61 definiert ist, bezogen auf eine senkrecht auf dieser Grundfläche stehenden Richtung.

Aus der Beugungsgleichung ergibt sich folgender Zusammenhang, wobei m für Beugungsordnung (m = 0, +1, +2, ...), $\theta_m$ für den Winkel der Diffraktion und $\theta_{inc}$ für den Winkel des einfallenden Lichts steht:

$$\frac{m\lambda}{P} = \sin\theta_m + \sin\theta_{inc}$$

Falls P < λ (und m ungleich 0) ergibt sich bei senkrechtem Lichteinfall hieraus Folgendes:

$$|\sin\theta_m| = |\frac{m\lambda}{P}| > 1$$

Hieraus ergibt sich, dass bei einer Periode P, welche zwischen λ und λ/2 liegt in nahezu allen Betrachtungssituationen keine Beugung des Lichts mehr in höhere Beugungsordnungen stattfindet und bei P < λ/2 für keinen Winkel mehr eine Beugung in höhere Beugungsordnungen stattfindet, sodass "klassische" Beugungserscheinungen nur noch von untergeordneter Bedeutung sind.

Die Reliefstruktur 61 wird nun so gewählt, dass die Periode P in dem Bereich zwischen 200 nm und 500 nm, insbesondere zwischen 220 nm und 400 nm und bevorzugt im Bereich zwischen 220 nm und 350 nm gewählt ist. Die Tiefe t der Reliefstruktur 61 wird vorzugsweise zwischen 80 nm und 500 nm, insbesondere zwischen 100 nm und 400 nm und besonders bevorzugt zwischen 150 nm und 300 nm gewählt.

Die Metallschicht 21 besteht vorzugsweise aus Aluminium, Kupfer, Gold, Silber, Chrom oder einer Legierung mit diesen Metallen.

Die Dicke der Metallschicht d wird vorzugsweise zwischen 10 nm und 100 nm, insbesondere zwischen 15 nm und 80 nm und besonders bevorzugt zwischen 20 nm und 50 nm gewählt.

Die Reliefstruktur 61 wird vorzugsweise von einem linearen Gitter, einem Kreuzgitter, einem hexagonalen Gitter, einem Kreisgitter oder noch komplexeren Gitterformen gebildet.

Der Farbeindruck bzw. Farbeffekt der Reliefstruktur 61 ist in direkter Reflexion sichtbar, d. h. im Spiegelreflex bzw. unter der Bedingung, dass $\alpha_{in} = \alpha_{ex}$ ist, $\alpha_{in}$ ist der Winkel des einfallenden Lichts 51 und $\alpha_{ex}$ der Winkel des direkten Lichts 52, gegen die Flächennormen der Grundfläche 616, wie in Fig. 2 gezeigt. Bevorzugt wird durch entsprechende Wahl der Relieftiefe t und der Profilform der Reliefstruktur 61 weiter auch ein klar erkennbarer Farbwechsel erzeugt, wenn der Einfalls- und Ausfallswinkel gleichzeitig von beispielsweise 10° auf 30° geändert wird. Derartige Farbwechsel sind auch für Laien einfach verifizierbar und insbesondere auch in diffusem Licht leicht erkennbar. Teilweise tritt ein Wechsel von einer Farbe (z.B. rot) zu einer anderen auf (z.B. grün), teilweise tritt ein Wechsel von einer intensiven Farbe insbesondere mit hoher Farbsättigung (z.B. dunkelgelb) zu einer schwachen Farbe insbesondere mit geringer Farbsättigung (z.B. hellgelb) auf und teilweise wechselt eine Farbe zu einem silbernen, insbesondere achromatischen, Farbeindruck.

Die Profilform der Reliefstruktur 61 ist vorzugsweise so gewählt, dass die Kanten in dem Reflexionsspektrum relativ stark sind, insbesondere eine Änderung der Reflexion von mehr als 10%, bevorzugt von mehr als 15% über einen Wellenlängenbereich von 50 nm aufweisen. Die mittlere Steigung mindestens einer Kante bzw. Flanke im Reflexionsspektrum ist folglich bevorzugt größer als 2% / 10 nm über einen Wellenlängenbereiche von mindestens 50 nm. Ferner weist das Reflexionsspektrum vorzugsweise einen ersten Bereich von mindestens 50 nm Breite mit einer Reflexion unter 15%, bevorzugt unter 10% auf und einen zweiten Bereich von mindestens 10 nm Breite und höchstens 200 nm Breite (Reflexionskante) mit einer Reflexion auf, die mindestens zweimal höher, bevorzugt 2,5 mal höher als im ersten Bereich ist. Weiter ist der zweite Bereich mindestens 20 nm breit, vorzugsweise höchstens 150 nm breit.

100% Reflexion ist hierbei vorzugsweise definiert als die gemessene Reflexion der Metallschicht an einer glatten, d.h. unstrukturierten Grenzfläche mit sonst gleichen Rahmenbedingungen (wie z.B. Metallschicht eingebettet oder an Oberfläche etc.).

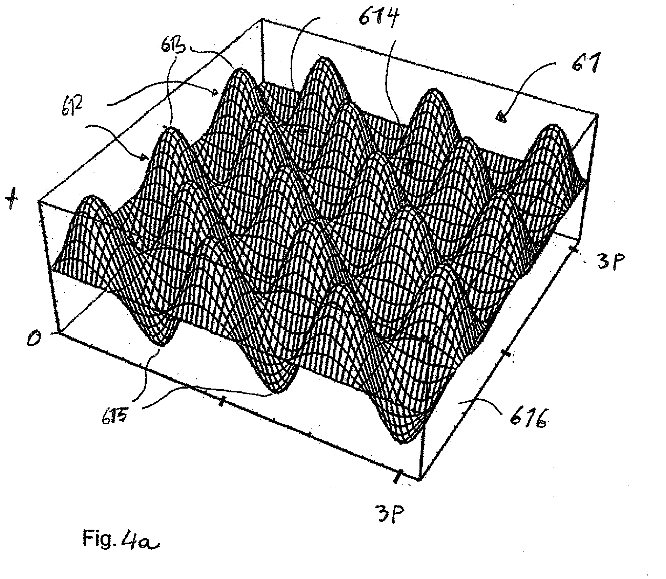

Überraschenderweise hat sich nun ergeben, dass die Profilform der Reliefstruktur 61 von entscheidender Bedeutung für die Erzielung von deutlich sichtbaren Farbeindrücken in direkter Reflexion ist. Dies wird nun im Folgenden anhand der Figuren Fig. 4a bis Fig. 4g näher erläutert:

Fig. 4a zeigt eine schematische 3D-Ansicht einer Reliefstruktur 61 in Form eines Kreuzgitters mit einer Periode P in einer x-Richtung und einer auf der x-Richtung senkrecht stehenden y-Richtung von beispielsweise jeweils 350 nm sowie einer Relieftiefe von beispielsweise 200 nm. Die in Fig. 4a gezeigte Reliefstruktur 61 weist so in x-Richtung und in y-Richtung eine Abfolge von Erhebungen 612 und Vertiefungen 614 auf. Der Abstand zwischen den Maxima 613 der Erhebungen 612 und den Minima 615 der Vertiefungen 614 definiert hierbei die Relieftiefe. Die Maxima 613 der Erhebungen 612 stellen hierbei jeweils den höchsten Punkt oder, wenn die Erhebungen an ihrem höchsten Punkt eine ebene Fläche aufweisen, die höchsten Punkte der Erhebungen 612 dar. Die Minima 615 der Vertiefungen stellen jeweils den tiefsten Punkt der Vertiefungen bzw. die tiefsten Punkte der Vertiefungen dar.

Tief und hoch ist hierbei auf eine Draufsicht-Betrachtung der Oberfläche der Metallschicht 21 bezogen, in die die Reliefstruktur 61 abgeformt ist, d.h. hier auf eine Betrachtung von der Oberseite des Sicherheitselements 2 bezogen. In diesem Sinne zeigt Fig. 4a eine Draufsicht auf die Oberseite der Metallschicht 21 des Sicherheitselements 2.

Durch die Minima 615 der Vertiefungen wird weiter, wie in Fig. 4a gezeigt, eine Grundfläche 616 definiert, bei der es sich in dem in Fig. 4a gezeigten Fall um eine ebene Fläche handelt. Es ist jedoch auch möglich, dass die Grundfläche 616 nicht von einer ebenen Fläche gebildet wird, sondern beispielsweise von einer Grobstruktur oder einer Mattstruktur oder einer gebogenen bzw. gekrümmten Fläche gebildet wird, wie später noch eingehend erläutert.

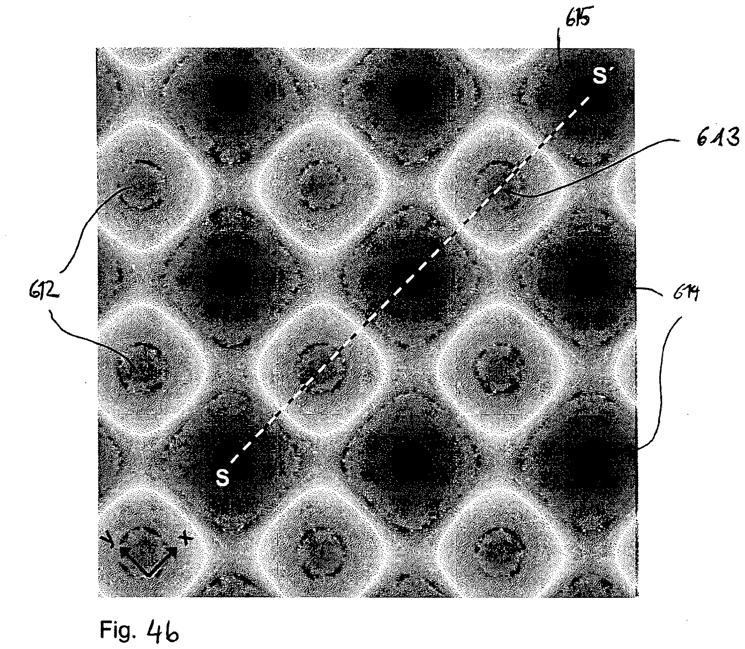

Fig. 4b zeigt eine schematische Draufsicht auf die Reliefstruktur 61 nach Fig. 4a mit den Erhebungen 612, den Vertiefungen 614, den Maxima 613 der Erhebungen 612 und den Minima 615 der Vertiefungen 614. Weiter sind in Fig. 4b auf die Koordinatenachsen x und y eingezeichnet, welche die Richtungen beschreiben, in welche die Erhebungen 612 und Vertiefungen 614 aufeinander abfolgen.

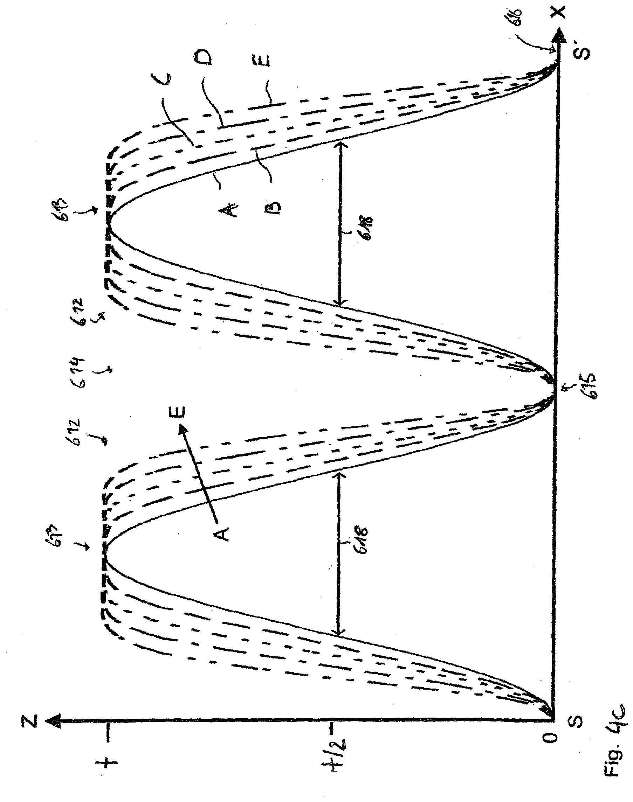

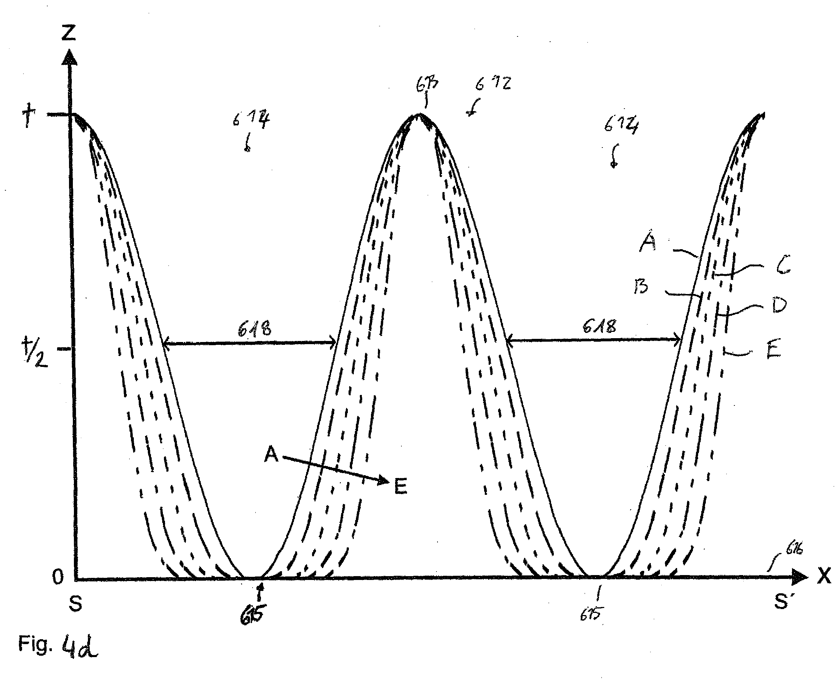

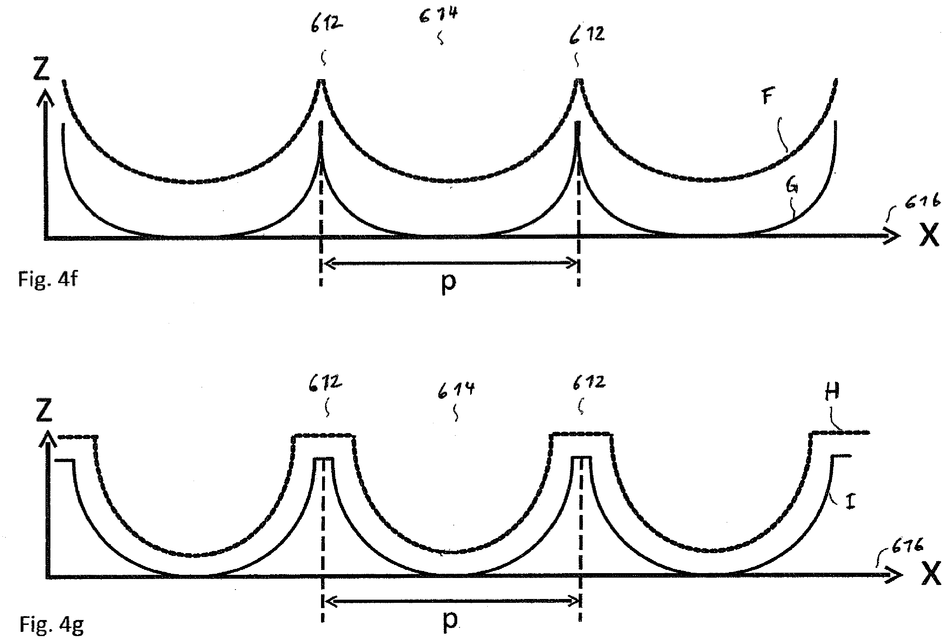

Fig. 4c und 4d sowie Fig. 4f und Fig. 4g verdeutlichen nun einen Schnitt durch die Reliefstruktur 61 nach Fig. 4a und Fig. 4b entlang der in Fig. 4b verdeutlichten Schnittlinie S-S'.

In Fig. 4c und Fig. 4d sowie Fig. 4f und Fig. 4g ist jeweils ein Ausschnitt aus der Reliefstruktur 61 nach Fig. 4a und Fig. 4b mit mehreren Erhebungen 612 und Vertiefungen 614 gezeigt, in einer senkrecht auf der Grundfläche 616 stehenden und entlang der Linie S-S' verlaufenden Schnittebene.

Wie in Fig. 4c und Fig. 4d gezeigt, weisen die Erhebungen 612 Maxima 613 und die Vertiefungen 614 Minima 615 auf. Weiter ist in Fig. 4c noch die Breite 618 der Erhebungen 612 bezogen auf einen Abstand t/2 von der Grundfläche 616 und in Fig. 4d die Breite 618 der Vertiefungen 614 ebenfalls bezogen auf einen Abstand t/2 eingezeichnet. Beides entspricht der Halbwertsbreite bzw. dem "full width half maximum" (FWHM).

Überraschenderweise hat sich nun gezeigt, dass Profilformen, welche im Bezug auf eine Spiegelung an der Grundfläche 616 asymmetrisch sind, und so insbesondere, wie bereits oben erläutert, mit ihrer an der Grundfläche gespiegelten Profilform sich um mehr als nur einen Phasenversatz unterscheiden, für das menschliche Auge deutlich stärkere sowie ästhetische Farbeindrücke erzeugen, als symmetrische Profilformen. Symmetrische Profilformen in diesem Sinne zeichnen sich durch eine Spiegelsymmetrie in der Grundfläche 616, d. h. bei dem Ausführungsbeispiel nach Fig. 4a bis Fig. 4d durch eine Spiegelsymmetrie in der x/y-Ebene aus. Die Profilform bleibt bei solchen Reliefstruktur bei einer solchen Spiegelung gleich, die Reliefstruktur wird lediglich um eine halbe Periode verschoben (siehe sinusförmiges Profil A in Fig. 4c und 4d). Die optischen Effekte bei Betrachtung von beiden Seiten (unter gleichen Winkel- und Beleuchtungsbedingungen) sind somit bei diesen symmetrischen Profilformen gleich, wenn die Metallschicht 21 auf beiden Seiten in ein Material mit gleichem Brechungsindex eingebettet ist. Asymmetrische Profilformen in diesem Sinne weisen diese Spiegelsymmetrie in der Grundfläche 616 bzw. x/y-Ebene nicht auf. Die Profilform unterscheidet sich deutlich bei Betrachtung von beiden Seiten (siehe z.B. Profil E in Fig. 4c und 4d). Beispielsweise besteht eine derartige Reliefstruktur von der einen Seite betrachtet aus einer Anordnung schmaler Spitzen mit breiten Tälern und von der anderen Seite betrachtet aus breiten Hügeln mit schmalen tiefen Tälern. Überraschenderweise hat sich gezeigt, dass die so gebildeten "Plateaus" bezüglich der Erzeugung von Plasmonen ähnlich wirken wie Löcher in einer Metallschicht, wodurch wohl die Vorteile gegenüber symmetrischen Profilformen erzielt werden. Zur Bestimmung der Symmetrie einer Reliefstruktur wird somit die Reliefstruktur an der Grundfläche 616 bzw. an der x/y-Ebene gespiegelt und dann überprüft, ob die Profilform noch identisch ist, d. h. der ungespiegelten Profilform entspricht und die Reliefstruktur somit bis auf eine Verschiebung um eine halbe Periode identisch bleibt. Experimente und Theorie (Berechnungen auf Basis sogenannter rigoroser Diffraktion) haben gezeigt, dass das optische Verhalten derart unsymmetrischer Gitter verschieden ist, wenn man das Gitter von beiden Seiten betrachtet.

Weiter ist vorteilhaft, wenn die Breite der Erhebungen 612 oder Vertiefungen 614 der Reliefstruktur, bezogen auf einen Abstand von t/2 von der Grundfläche mindestens 0,6 x P, vorzugsweise mindestens 0,7 x P oder höchstens 0,4 x P, insbesondere höchstens 0,3 x P beträgt. Dies ist in den Figuren Fig. 4c und Fig. 4d bezüglich Reliefstrukturen 61 mit mehreren Profilformen A bis E erläutert.

Fig. 4c verdeutlich nun die Breite 618 der Erhebungen 612 bezogen auf einen Abstand t/2 von der Grundfläche 616. Wie dort gezeigt wird hier die Breite 618 der Erhebungen 612 in Richtung der Abfolge der Erhebungen 612 und Vertiefungen 614 ermittelt, in einem Abstand t/2 von der Grundfläche 616. Die Profilform A weist eine Breite 618 von 0,5P, die Profilform B von 0,57 x P, die Profilform C von 0,63 x P, die Profilform D von 0,69 x P und die Profilform E von 0,75 x P auf. Die Profilform A stellt eine bezüglich einer Spiegelung an der Grundfläche 616 bzw. x/y-Ebene spiegelsymmetrische Profilform dar, welche, wie oben dargelegt, hier nicht bevorzugt zu wählen ist. Die Profilformen B bis E stellen in obigem Sinne asymmetrische Profilformen dar, welche bevorzugt gewählt werden.

Fig. 4d zeigt eine entsprechende Ausbildung von Reliefstrukturen 61 mit Profilformen A bis E, wobei hier die Profilform A bis E durch eine entsprechende Breite 618 der Vertiefungen 614 bezogen auf einen Abstand von t/2 von der Grundfläche 616 bestimmt sind.

Es hat sich nun gezeigt, dass die Breite 618 ≥ 0,6 x P bzw. ≤ 0,4 x P zu wählen ist, insbesondere ≥ 0,7 x P bzw. ≤ 0,3 x P zu wählen ist, um für das menschliche Auge besonders ästhetisch klare Farbeindrücke und/oder Farbeffekte zu generieren. Weiter ist die Breite 618 bevorzugt in dem Bereich von 0,9 x P bis 0,6 x P bzw. 0,1 x P bis 0,4 x P, weiter bevorzugt von 0,85 x P bis 0,7 x P, bzw. 0,15 x P bis 0,3 x P zu wählen.

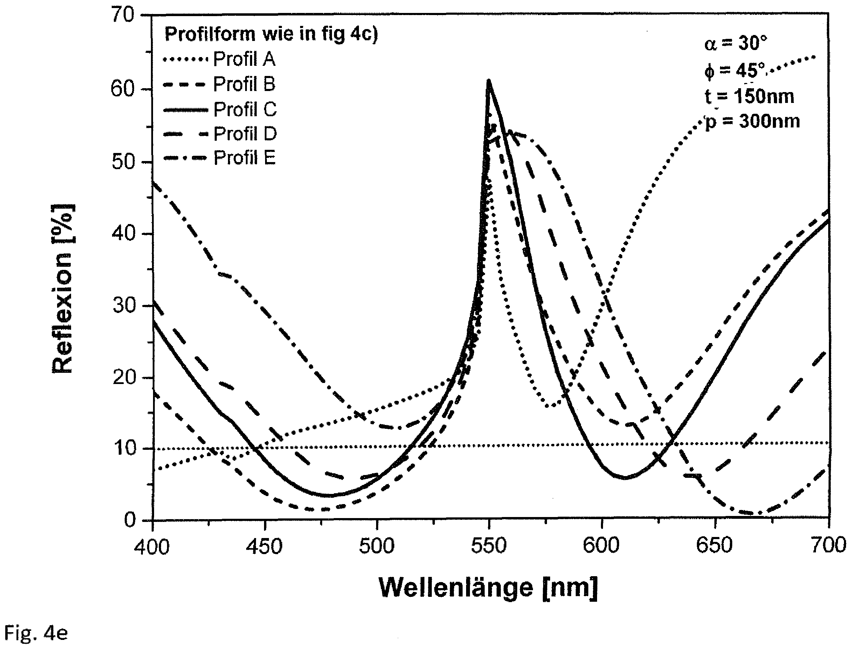

Berechnungen auf Basis sogenannter rigoroser Diffraktion mit den Profilformen A bis E aus Fig. 4c ergaben für ein beispielhaftes Kreuzgitter mit den folgenden Parametern und Beleuchtungsbedingungen die in Fig. 4e dargestellten Reflexionsspektren: P=300nm, t=150nm, $\alpha$=30°, $\phi$=45°

Wie zu sehen ist, liegt die Reflexion der symmetrischen Profilform A fast im gesamten sichtbaren Spektralbereich bei deutlich über 10%. Dies ergibt einen hellen, kontrastarmen Farbeindruck. Ferner ist der Reflexionspeak bei ca. 550nm sehr schmal ausgebildet. Der Farbeindruck ist ein relativ helles Gelb.

Mit zunehmender Breite 618 der Profilform - und damit mit zunehmender Asymmetrie - verändert sich das Reflexionsspektrum signifikant. Der Reflexionspeak wird breiter und die Reflexionsminima werden tiefer (Reflexion <10%), was für eine kontraststarke Farbe notwendig ist. Die Profilform C zeigt beispielsweise auf beiden Seiten des Peaks bei ca. 550nm tiefe Reflexionsminima mit bis zu nur 3% Reflexion, was zu einem klaren und starken grünen Farbeindruck führt. Die asymmetrischen Profilformen sind folglich bevorzugt.

Fig. 4f und Fig. 4g zeigen noch je zwei weitere beispielhafte asymmetrische Profilformvarianten (gestrichelt und durchgezogen), die Profilformen F, G, H und I. Die gestrichelten Profilformen F und H wurden für eine bessere Übersichtlichkeit in z-Richtung verschoben. Fig. 4f zeigt beispielhafte Profilformen F und G mit ausgeprägten Spitzen bei den Erhebungen 612. Fig. 4g zeigt asymmetrische Profilformen mit einem schmalen Plateau bei den Erhebungen 612.

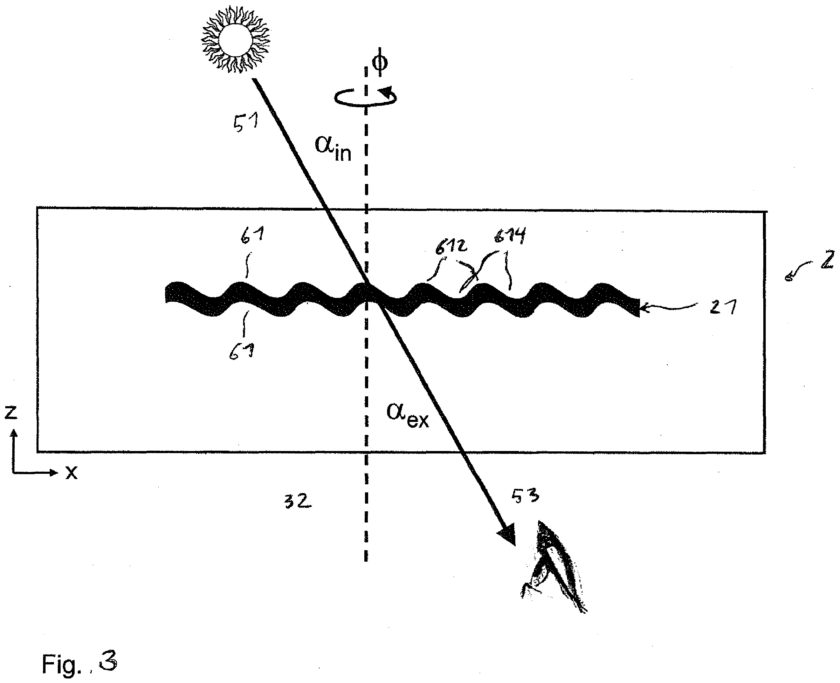

Weiter hat sich auch überraschend gezeigt, dass auch in Transmission ein klar erkennbarer Farbeindruck und/oder Farbeffekt mittels Abformung der Reliefstruktur 61 in eine Metallschicht erzielbar ist. Dies wird im Folgenden anhand von Fig. 3 verdeutlicht.

Fig. 3 zeigt einen Ausschnitt des Sicherheitselements 2 im Bereich 32. Das Sicherheitselement 2 ist wie das Sicherheitselement 2 nach Fig. 2 aufgebaut und weist so die Metallschicht 21 und die in die obere Oberfläche und/oder untere Oberfläche der Metallschicht 21 abgeformte Reliefstruktur 61 auf, welche, wie oben bereits anhand der Figuren Fig. 2 und Fig. 4a bis Fig. 4d erläutert - aus einer Abfolge von Erhebungen 612 und Vertiefungen 614 besteht.

Im Gegensatz zu dem Ausführungsbeispiel nach Fig. 2 ist hierbei die Metallschicht 21 so gewählt, dass die Metallschicht eine optische Dicke OD im Bereich von 0,5 bis 2,5, insbesondere von 0,7 bis 2,3 und besonders bevorzugt von 1,0 bis 2,0 aufweist.

Die Einheit optischer Dicke (OD) wird hierbei bezogen auf eine unstrukturierte und damit glatte Fläche (entspricht einer Spiegelfläche) ermittelt. Zwischen der optischen Dicke OD und der Transmission T besteht hierbei folgender Zusammenhang:

$$T = 10^{-(OD)}$$

Es besteht damit ein algorithmischer Zusammenhang zwischen optischer Dicke und Transmission T. Eine optische Dicke von 1,0 entspricht einer Transmission von 10% und eine optische Dicke von 2,0 einer Transmission von 1 %.

Überraschenderweise hat sich gezeigt, dass der Farbeindruck bzw. der Farbeffekt der Reliefstruktur 61 in direkter Transmission sichtbar ist, d. h. unter der Bedingung, dass $\alpha_{in} = \alpha_{ex}$ ist bzw. das einfallende und ausfallende Licht, auf einer Linie liegt (unter Vernachlässigung der Lichtbrechung im Inneren des Sicherheitselements 2) sichtbar ist, wobei $\alpha_{in}$ der Winkel des einfallenden Lichts 51 und $\alpha_{ex}$ der Winkel des transmittierten Lichts 53 gegen die Flächennormale der Grundfläche 616 ist.

Bevorzugt wird auch hier die Relieftiefe t und die Profilform so gewählt, dass ein klar erkennbarer Farbwechsel erkennbar ist, wenn der Ein- und Ausfallswinkel gleichzeitig geändert wird, beispielsweise von 0° auf 20° geändert wird. Derartige Farbwechsel sind auch für einen Laien einfach verifizierbar.

Überraschend ist, dass ein derartiger Effekt in Transmission bei einer Metallschicht auftritt und des Weiteren auch deutlich mehr Licht in einem Spektralbereich des einfallenden Lichts durch Bereiche der Metallschicht 21, welche mit der Reliefstruktur 61 belegt sind, hindurch transmittiert wird, als durch einen Bereich mit Spiegelflächen oder auch mit "normalen" holographischen Gittern.

Dieser Unterschied in der Transmission ergibt sich, obwohl die Massedichte an Metallen in allen Bereichen gleich ist. Die Reliefstruktur 61 bewirkt so, dass ein Spektralbereich des sichtbaren Lichts bevorzugt, d. h. mit höherer Intensität, durch die Metallschicht 21 hindurch transmittiert wird, wodurch das transmittierte Licht farbig erscheint. Das Transmissionsspektrum ist hierbei unter anderem abhängig von der Periode P und der Relieftiefe t, der Profilform, sowie vom Beleuchtungs- und Betrachtungswinkel. Das Transmissionsspektrum und damit auch der Farbeindruck kann sich sowohl beim Verkippen (d.h. bei Drehung um eine in der von dem Mehrschichtkörper aufgespannten Ebene liegenden Achse) als auch beim Verdrehen des Sicherheitselements 2 ändern, wodurch sich die bereits oben beschriebenen einfach verifizierbaren Effekte ergeben.

Der Grund für die selektiv erhöhte Transmission im Bereich 32 der Reliefstrukturen 61 liegt wohl in der Anregung von Plasmonen durch das einfallende Licht. In der unmittelbaren Nähe der Metallschicht entsteht hierdurch ein elektrisches Feld mit erhöhter Feldstärke. Die Plasmonen an der "oberen Grenzfläche" der Metallschicht 21 regen Plasmonen an der "unteren Grenzfläche" an und erhöhen durch diese Kopplung die Transmission des transmittierten Lichts. Durch entsprechende Wahl der Schichtdicke der Metallschicht wird bewirkt, dass sich eine derartige Kopplung ergibt und so Licht durch die Metallschicht 21 "geschleust" werden kann.

Sowohl in Transmission als auch in Reflexion hat sich hierbei gezeigt, dass durch die Veränderung der Parameter der Reliefstruktur 61 folgende Effekte erzielt werden können:

Es hat sich herausgestellt, dass die in direkter Reflexion bzw. Transmission generierten Farben und Farbeffekte stark von der Periode P der Reliefstruktur 61 abhängen. Mit zunehmender Periode P verschiebt sich in den Reflexion- bzw. Transmissionsspektren der Reflexionspeak bzw. die Reflexionskante bzw. der Transmissionspeak und die Transmissionskante zu größeren Wellenlängen.

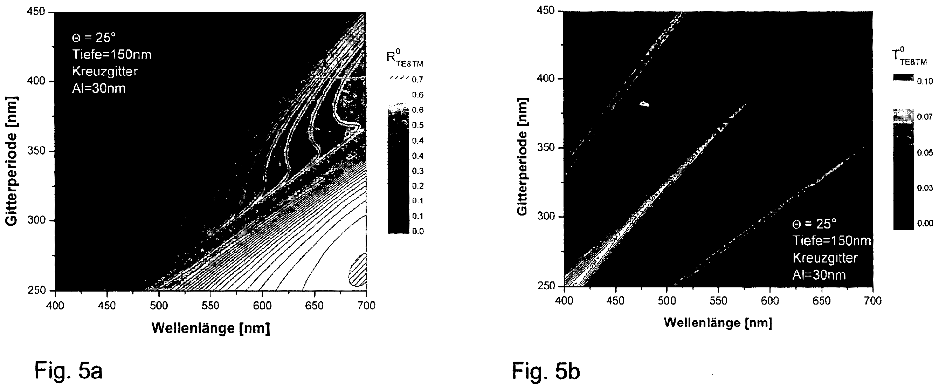

Die Figuren Fig. 5a und Fig. 5b zeigen Simulationsdaten berechnet auf Basis sogenannter rigoroser Diffraktion, für die reflektierte ($R^0$) bzw. transmittierte ($T^0$) Intensität als Funktion der Wellenlänge $\lambda$ und der Periode P. Die Simulationsdaten sind gemittelt über die TE- und TM-Polarisation und entsprechen somit dem Fall unpolarisierter Beleuchtung und Betrachtung. Verwendet wurde die symmetrische Profilform A. Die (relativ langsam steigende) Hochpasskante der Reflexion korreliert mit Peaks in der Transmission. Hohe Intensität ist in den Figuren Fig. 5a und Fig. 5b hell, niedrige Intensität dunkel dargestellt. Die Helligkeitsskala ist für Reflexion von 0 bis 70% und für Transmission von 0 bis 10% dargestellt.

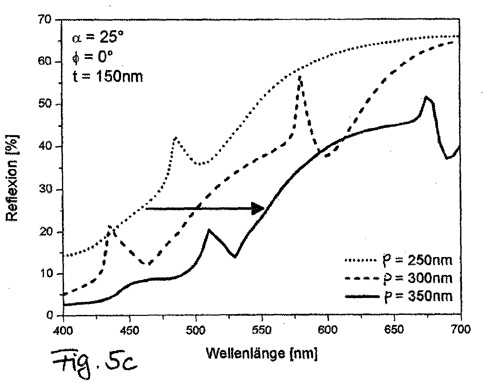

Fig. 5c zeigt nun ein entsprechendes Diagramm für drei simulierte Reflexionsspektren für die Perioden P = 250 nm, P = 300 nm und P = 350 nm. Wie sich in den drei in den Fig. 5c zusammengefassten Reflexionsspektren ergibt, wandert die Reflexionskante bei den drei dargestellten Perioden über den sichtbaren Spektralbereich und verschiebt sich um etwa 80 nm von der Periode 250 nm zu Periode 350 nm. Es verändert sich allerdings auch die Form der Spektren mit zunehmender Periode.

Die Periode P kann so zum Einstellen eines bestimmten Farbeindrucks benutzt werden. Für eine Optimierung des Farbkontrastes ist allerdings für jede Periode die Profilform sowie Gittertiefe anzupassen. Dies wurde in Fig. 5c nicht durchgeführt, um nur einen Parameter zu variieren und den Peakshift zu zeigen.

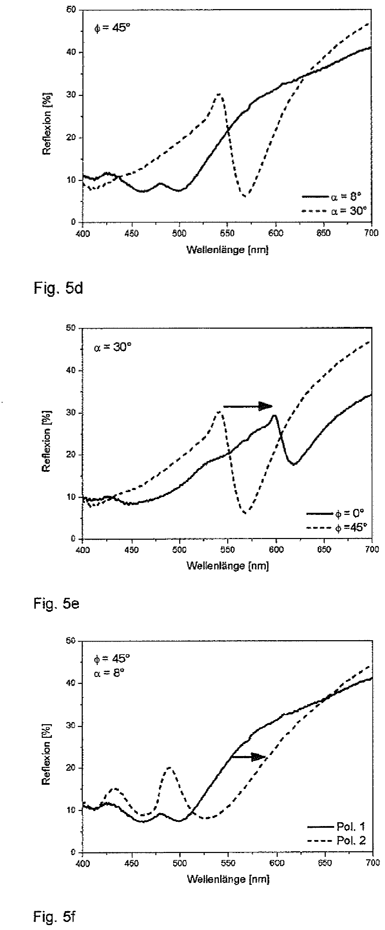

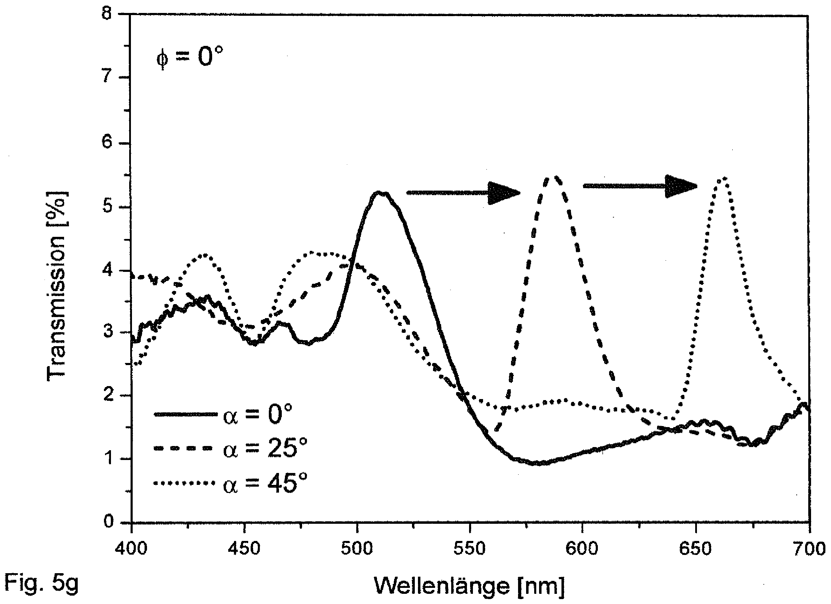

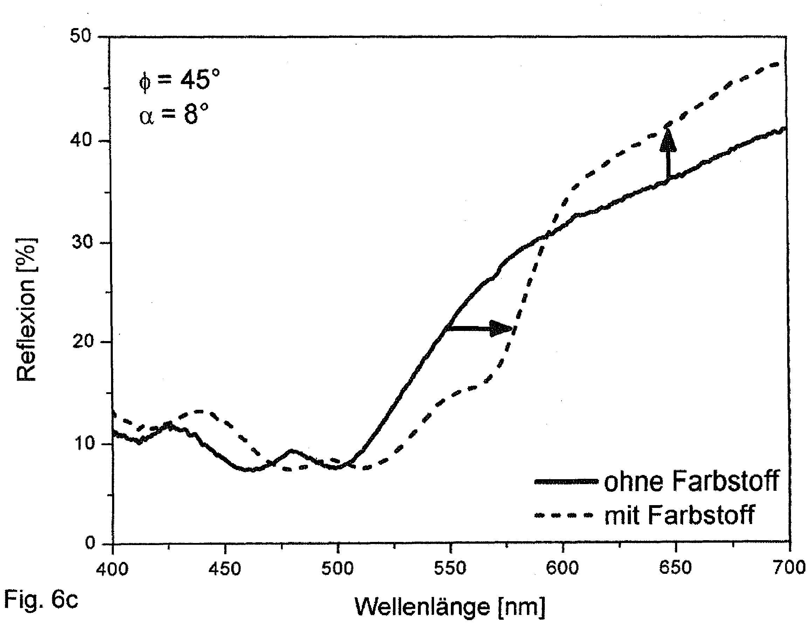

In den Fig. 5d bis 5f wird der Einfluss der Wahl der Parameter der Reliefstruktur 61 auf die sich zeigenden optischen Effekte in Reflexion anhand mehrerer Beispiele weiter verdeutlicht. Fig. 5g zeigt den optischen Effekt in Transmission. Die Daten in Fig. 5d bis 5g sowie 6c sind gemessene Reflexionsspektren von Folienmustern. Das verwendete Spektrometer AvaSpec-2048 ist von der Firma Avantes. Die Beleuchtung erfolgte mit der Weißlichtquelle LS-1 mit einer Farbtemperatur von 3100°K von Ocean Optics über optische Fasern und einen Messkopf, welcher für verschiedene Einfalls- und Ausfallswinkel (u.a. $\alpha$=8° und $\alpha$=30°) verwendet werden kann. Die Dunkelreferenz wurde gegen eine matt schwarze Oberfläche gemessen. Die Hellreferenz (definiert 100%) für Reflexion wurde gegen einen Aluminiumspiegel gemessen. Für Transmission wurde als Hellreferenz das direkt aus der Beleuchtungsfaser in die Messfaser einfallende Licht verwendet.

Als Reliefstruktur 61 ist hier ein asymmetrisches Kreuzgitter einer Periode P von 300 nm, einer Gittertiefe von 150 nm und einer Breite 618 der Vertiefungen 614 von 0,7 x P gewählt, siehe hierzu auch die Ausführungen in den Figuren 4a bis Fig. 4d. Als Metallschicht 21 wird eine Schicht aus Aluminium einer Dicke d=24 nm verwendet.

Die Beleuchtung und Messung der Reflexionsspektren erfolgt in der x/z-Ebene, d.h. bei einem Azimutwinkel $\phi$ = 45°. Bzgl. der Achsendefinition wird auf die Figuren Fig. 4a bis Fig. 4d verwiesen. Die durchgezogene Linie zeigt das gemessene Reflexionsspektrum in direkter Reflexion bei einem Winkel $\alpha$ = 8°, die gestrichelte Linie bei $\alpha$ = 30°.

Wie aus Fig. 5d erkennbar, wird bei $\alpha$ = 8° das Licht bei einer Wellenlänge von ca. 530 nm mit zunehmender Wellenlänge immer stärker reflektiert, während die Reflexion unterhalb von 530 nm weitgehend unterhalb von 10% liegt. Dies resultiert in einen guten, auch unter üblichen Betrachtungsbedingungen rötlichen Farbeindruck. Das bei einem Einfallswinkel von 30° gemessene Reflexionsspektrum (gestrichelte Linie) zeigt hingegen einen Reflexionspeak bei einer Wellenlänge von ca. 535 nm sowie eine Reflexionskante oberhalb von 600 nm. Dieses Spektrum resultiert in einem metallisch-grünen Farbeindruck.

Weiter zeigt ein Sicherheitselement mit einer derartigen Reliefstruktur 61 auch einen Farbeffekt bei Drehung in der x/y-Ebene, d.h. bei einer Änderung des Azimutwinkels $\phi$. Dies ist in Fig. 5e gezeigt. Fig. 5e zeigt die gemessenen Reflexionsspektren bei einem Beleuchtungs- und Betrachtungswinkel $\alpha$ von 30°, wobei die gestrichelte Linie das Spektrum an einem Gitter orientiert mit dem Azimutwinkel $\phi$ = 45°, d.h. gemäß der x/z-Ebene und die durchgezogene Linie das Spektrum nach Drehung um 45°, d.h. bei $\phi$ = 0° zeigt.

Wie in Fig. 5e gezeigt, ist ein klarer Shift des Reflexionspeak von 535 nm auf ca. 600 nm zu erkennen. Auch die Reflexionskante verschiebt sich zu größeren Wellenlängen. Der Farbeindruck verändert sich von metallisch-grün zu gelblich.

Da die wie oben dargelegt gewählte Reliefstruktur 61 asymmetrisch ist, unterscheiden sich in Folge auch die Farbeindrücke, welche sich bei Betrachtung von der Oberseite 201 (Pol. 1) und von der Unterseite 202 (Pol. 2) ergeben. Dies ist in Fig. 5f gezeigt.

Fig. 5f zeigt zwei gemessenen Spektren bei einem Beleuchtungs- und Betrachtungswinkel $\alpha$ = 8° sowie bei einer Blickrichtung in der x/z-Ebene ($\phi$ = 45°). Die durchgezogene Linie stellt das Spektrum bei Auflichtbetrachtung von der Vorderseite (entspricht der Betrachtungssituation nach Fig. 5d) und die gestrichelte Linie das Spektrum bei Betrachtung von der Rückseite dar (Pol. 2). Die gestrichelte Linie weist einen klaren Reflexionspeak bei ca. 490 nm auf. Ferner ist die Reflexionskante um etwa 25 nm zu höheren Wellenlängen verschoben sowie etwas weniger steil ausgeprägt. Der Farbeindruck bei Betrachtung von der Rückseite ist aufgrund des Reflexionspeaks ein weniger starker roter Farbeindruck (sprich ein helleres Rot) als bei Betrachtung von der Vorderseite. Pol. 1 ist in diesem Beispiel bevorzugt.

Fig. 5g zeigt drei gemessene Spektren in Transmission. Die Beleuchtung und Messung der Transmissionsspektren erfolgt bei einem Azimutwinkel $\phi$ = 0°. Bzgl. der Achsendefinition wird auf die Figuren Fig. 4a bis Fig. 4d verwiesen. Die durchgezogene Linie zeigt das gemessene Transmissionsspektrum in direkter Transmission bei einem Winkel $\alpha$ = 0°, die gestrichelte Linie bei $\alpha$ = 25° und die gepunktete Linie bei $\alpha$ = 45°. Es ist ein klarer Transmissionpeak-Shift von 512 nm über 587 nm zu 662 nm zu erkennen. Der Farbeindruck, welchen diese Transmissionspeaks erzeugen, wird noch durch die anderen spektralen Merkmale, z.B. die Peaks bzw. Plateaus zwischen 450 nm und 500 nm, verändert. Insgesamt resultieren diese Transmissionsspektren in einen Farbshift von grünlich ($\alpha$ = 0°) über gräulich ($\alpha$ = 25°) zu rötlich ($\alpha$ = 45°).

Sowohl der Farbeindruck in Reflexion als auch der in Transmission kann durch eine zusätzliche HRI-Schicht signifikant verändert werden. So zeigt das Muster gemäß Fig. 5d statt des roten Farbeindruck bei $\alpha$=8° einen dunkelgrünen Farbeindruck, wenn eine ca. 60nm dicke HRI-Schicht aus z.B. ZnS auf der Betrachtungsseite an die Aluminiumschicht angrenzt. Bevorzugt ist die Dicke dieser HRI-Schicht im Bereich von 20nm bis 80nm.

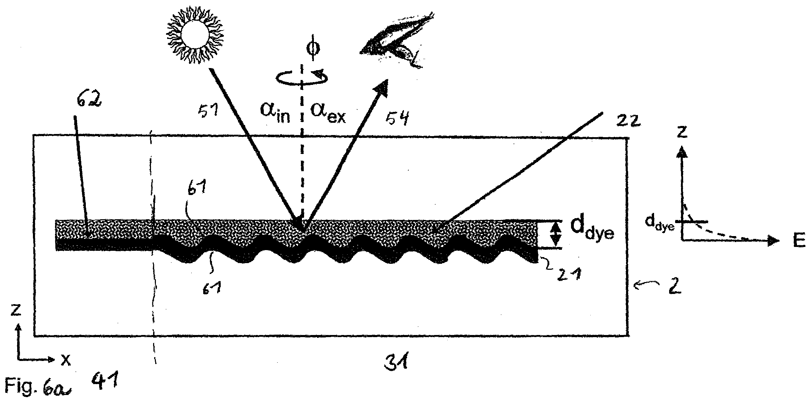

Fig. 6a zeigt eine weitere Ausbildung des Sicherheitselements 2, bei dem in unmittelbarer Nähe zur Metallschicht 21 Farbstoffe und/oder Lumineszenzstoffe angeordnet sind.

Fig. 6a zeigt das Sicherheitselement 2 mit der Metallschicht 21. In dem Bereich 31 ist die Reliefstruktur 61 in die Metallschicht 21 abgeformt und in dem Bereich 41 ist eine zweite Reliefstruktur 62 oder (nicht gezeigt) eine Spiegelfläche abgeformt. Bzgl. der Ausgestaltung der Metallschicht 21 sowie der Reliefstruktur 61 und des Schichtaufbaus des Sicherheitselements 2 wird auf vorgehende Ausführungen nach Fig. 1 bis Fig. 5f verwiesen. Das Sicherheitselement 2 nach Fig. 6a weist weiterhin noch eine Schicht 22 auf, welche die ein oder mehrere Farbstoffe und/oder Lumineszenzstoffe enthält.

Überraschenderweise hat sich gezeigt, dass der Farbeindruck und/oder Farbeffekt, der durch die Reliefstruktur 61 wie vorgehend beschrieben generiert wird, noch deutlich verstärkt und auch spektral verändert werden kann, wenn sich in unmittelbarer Nähe zu der Metallschicht 21 ein Farbstoff und/oder Lumineszenzstoff befindet. Unmittelbare Nähe bedeutet hier näher als 2 $\mu$m, insbesondere näher als 1 $\mu$m, weiter bevorzugt näher als 500 nm, und weiter bevorzugt näher als 300 nm. Der Farbstoff und/oder Lumineszenzstoff ist hierbei vorzugsweise in einer dielektrischen Schicht des Sicherheitselements 2 vorgesehen, welche direkt an die Metallschicht 21 angrenzt, wie dies in Fig. 6a beispielhaft anhand der Schicht 22 gezeigt ist. Bei der dielektrischen Schicht 22 kann es sich hierbei um eine auf die Metallschicht 21 aufgebrachte, insbesondere musterförmig ausgebildete Schicht handeln. Es ist jedoch auch möglich, dass der Farbstoff bzw. Lumineszenzstoff in einer Schicht enthalten ist, welche vor Aufbringung der Metallschicht 21 in das Sicherheitselement 2 eingebracht wird. So kann es sich bei der Schicht 22 beispielsweise um eine Replizierlackschicht oder eine auf eine Replizierlackschicht aufgebrachte Schicht handelt. Es ist auch möglich, dass die Replizierlackschicht aus einem Stapel von zwei oder mehr Schichten besteht, von der nur die oberste Schicht, welche die Grenzfläche zu der Metallschicht 21 bildet, mit dem Farbstoff und/oder Lumineszenzstoff versehen ist. Dies hat den Vorteil, dass die Schicht 22 sehr dünn gewählt werden kann und trotzdem die Gesamtdicke der Replizierlackschicht in einem üblichen Dickebereich liegt, wie er sich in der Produktion bewährt hat. Alternativ kann die Schicht 22 auch aus dem Vakuum aufgebracht werden, z.B. aufgedampft oder mittels PECVD abgeschieden werden.

Als Farbstoffe und/oder Lumineszenzstoffe werden bevorzugt gelöste Farbstoffe und/oder Lumineszenzstoffe eingesetzt. Insbesondere hat sich der Einsatz von Metallkomplexfarbstoffen bewährt. Alternativ kommen auch Nanopartikel wie z.B. Quantum dot (Q-dot) in Frage oder auch Hybridmaterialien wie z.B. farbstoffdotierte Zeolith-Kristalle (wie beispielsweise in der EP 1873202 A1 beschrieben). Weiter hat sich der Einsatz folgender Lumineszenzstoffe bewährt: Cumarine, Rhodamine und Cyanine.

Bevorzugt ist die Schicht 22, der die ein oder mehreren Farbstoffe bzw. Lumineszenzstoffe zugesetzt werden, sehr lichtdurchlässig ausgebildet. Sie weist bevorzugt eine Transmission von mindestens 70%, insbesondere von 90% in dem Wellenlängenbereich von 400 bis 700 nm auf. Für viele Anwendungen ist es wichtig, dass die Transparenz der gefärbten Schicht 22 so hoch ist, dass in Bereichen mit der Struktur 62 kein Effekt des Farbstoffes erkennbar ist.

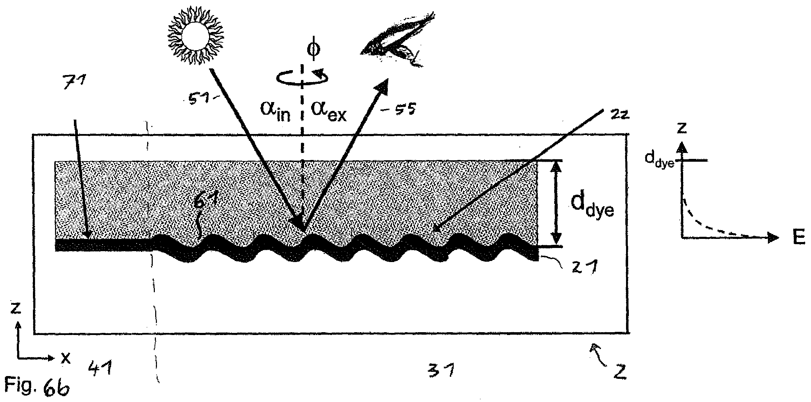

Es ist hier insbesondere vorteilhaft, wenn der Farbstoff bzw. Lumineszenzstoff zu einem Großteil in unmittelbarer Nähe zu der Oberfläche der Metallschicht 21 angeordnet ist, in der die Reliefstruktur 61 abgeformt ist. Dies ist in Fig. 6a gezeigt. Überraschenderweise hat sich gezeigt, dass bei einer Anordnung von Lumineszenzstoffen und Farbstoffen in unmittelbarer Nähe zu der Oberfläche der Metallschicht 21, in welcher die Reliefstruktur 61 abgeformt ist, die Absorption des Farbstoffes bzw. die Lumineszenz des Lumineszenzstoffes deutlich erhöht wird. Dies ist wohl darauf zurückzuführen, dass durch die von der Reliefstruktur 61 generierten Plasmonen eine erhöhte Feldstärke im Nahfeld, d.h. bis zu einer Entfernung von ca. einer Wellenlänge des anregenden Lichts, erzeugt wird. Das elektrische Feld (E-Feld), fällt, wie in Fig. 6a verdeutlicht, exponentiell mit dem Abstand von der Oberfläche, d.h. in z-Richtung ab. Dies führt wohl zu der deutlichen Erhöhung der Absorption/Lumineszenz der Farbstoffe bzw. Lumineszenzstoffe, wenn diese in unmittelbarer Nähe, wie oben dargelegt, zu der Oberfläche der Metallschicht 21 angeordnet sind, in der die Reliefstruktur 61 abgeformt ist. Ist so die Schicht 22, wie in Fig. 6a verdeutlicht, entsprechend dünn ausgestaltet oder die Konzentrationsverteilung des Farbstoffes in der Schicht 22 so gewählt, dass diese zu einem Großteil in unmittelbarer Nähe zu der Metallschicht angeordnet sind, tragen die Farbstoffe bzw. Lumineszenzstoffe der Schicht 22 zum Großteil zu der vorgenannten Effektverstärkung bei, wodurch sie die nachfolgend erläuterten Effekte besonders einprägsam verwirklichen lassen. Fig. 6b zeigt das Sicherheitselement nach Fig. 6a mit dem Unterschied, dass hier die Schicht 22 relativ dick gewählt ist. Selbst wenn die Gesamtmenge an Farbstoffen in der Schicht 22 in dem Ausführungsbeispiel nach Fig. 6a und Fig. 6b gleich gewählt ist, so ist in dem Ausführungsbeispiel nach Fig. 6b deutlich weniger Farbstoff bzw. Lumineszenzstoff im Abstand mit erhöhtem E-Feld angeordnet und die verstärkte Absorption bzw. Lumineszenz tritt nur in geringem Maße auf, da der Farbstoff, welcher mehr als eine Wellenlänge von der Oberfläche der Metallschicht 21 entfernt ist, hauptsächlich als "normaler" Farbfilter wirkt. Entsprechend unterschiedlich wird in den Ausführungsbeispielen nach Fig. 6a und Fig. 6b das reflektierende Licht 54 bzw. 55 von dem Farbstoff bzw. Lumineszenzstoff beeinflusst.

Die Schichtdicke der Schicht 22 ist vorzugsweise im Bereich von 20 nm bis 2 $\mu$m, insbesondere 50 nm bis 1 $\mu$m und besonders bevorzugt im Bereich von 100 nm bis 500 nm zu wählen.

Durch die Nutzung des oben beschriebenen Effekts lassen sich zahlreiche einprägsame und überraschende optische Effekte erzielen.

Wird ein Farbstoff, welcher einen ähnlichen Farbeindruck wie die Reliefstruktur 61 aufweist, verwendet, lässt sich folgender Effekt erzielen: Wird beispielsweise ein roter Farbstoff auf die Metallschicht 21 in einem Bereich mit einer Reliefstruktur 61 aufgebracht, welche (ohne Farbstoff) bei nahezu senkrechter Betrachtung einen roten Farbeindruck aufweist und bei gekippter Betrachtung (etwa bei 30°) einen grünen Farbeindruck aufweist, so wird der rote Farbeindruck deutlich verstärkt. Ist die Konzentration des roten Farbstoffes in der Schicht 22 gering genug, so bleibt der grüne Farbeindruck nahezu unverändert. Insgesamt resultiert hieraus ein starker sichtbarer Farbkippeffekt von rot nach grün. Es hat sich gezeigt, dass hierfür die Konzentration des roten Farbstoffes so gering sein kann, dass ein metallischer Spiegel, welcher ebenfalls mit der Farbschicht überzogen ist, nahezu unverändert, d.h. ohne zusätzlichen Farbeffekt oder Farbschattierung aussieht. Dies hat den Vorteil, dass die Farbschicht vollflächig aufgebracht werden kann und nicht partiell und registergenau zu den Bereichen mit der Reliefstruktur 61 aufgebracht werden muss.

Alternativ kann auch ein gelber Farbstoff eine Verstärkung sowohl des roten, als auch des grünen Farbeindrucks bewirken. Zusätzlich kann ein derartiger vollflächig aufgetragener gelber Farbstoff in Bereichen ohne die Reliefstruktur 61 den Eindruck einer Goldfolie erzeugen, wenn die Konzentration des Farbstoffes hoch genug ist. Je nach Auswahl des Farbstoffes kann also der Farbeindruck gezielt verändert werden.

Optional kann der Farbstoff auch noch andere zusätzliche Funktionen aufweisen. Z.B. kann der Farbstoff fluoreszierende Eigenschaften aufweisen, was durch einen einfachen Laserpointer überprüft werden kann. Wird als Farbstoff beispielsweise Lumogen Rot verwendet und der Mehrschichtkörper mit einem Laserpointer mit der Wellenlänge 532nm bestrahlt, so ändert sich die Farbe des Leuchtspots von Grün (Bereiche ohne den Farbstoff) zu Gelb (Bereiche mit dem Farbstoff).

Alternativ wird der Farbstoff, insbesondere in höherer Konzentration, nur dort aufgebracht, wo die Strukturen des ersten Bereichs repliziert wurden oder diese Strukturen des ersten Bereichs werden (mit den üblichen Passertoleranzen) dort repliziert, wo der Farbstoff vorliegt. Dadurch ist ein stärkerer Einfluss auf den Farbeffekt möglich ohne gleichzeitig Bereiche außerhalb des ersten Bereichs für das menschliche Auge erkennbar einzufärben.

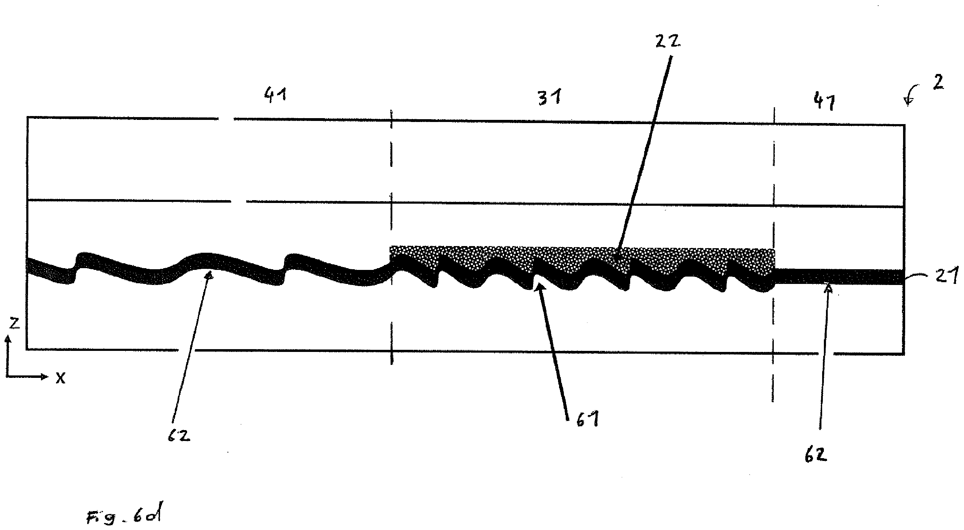

Dies ist beispielhaft in Fig. 6d gezeigt: Fig. 6d zeigt das Sicherheitselement 2 mit der Metallschicht 21 sowie mit mehreren optionalen weiteren Schichten, insbesondere eine unterhalb der Metallschicht 21 vorgesehene, insbesondere transparenten Replizierlackschicht ein oder mehrere insbesondere transparenten weiteren Schichten, beispielsweise eine Replizierlackschicht, ein oder mehrere Lackschichten und einer Haftvermittlungsschicht. In dem Bereich 31 ist die Reliefstruktur 61 in die Metallschicht 21 abgeformt und in dem Bereich 41 ist eine zweite Reliefstruktur 62 oder eine Spiegelfläche abgeformt. Bezüglich der Ausgestaltung der Metallschicht 21 sowie der Reliefstruktur 61 und des Schichtaufbaus des Sicherheitselements 2 wird auf vorhergehende Ausführungen nach Fig. 1 bis Fig. 5f verwiesen. Das Sicherheitselement 2 nach Fig. 6a weist weiterhin noch die Schicht 22 auf, welche die ein oder mehreren Farbstoffe und Lumineszenzstoffe enthält. Bezüglich der Ausgestaltung der Schicht 22 wird auf vorhergehende Ausführungen insbesondere zu den Figuren Fig. 6a bis Fig. 6c verwiesen. Wie in Fig. 6d gezeigt, ist die Schicht 22 nur im Bereich 31 auf die Metallschicht 21 aufgebracht und damit nur in dem Bereich auf die Metallschicht 21 aufgebracht, in welchem die Reliefstruktur 61 in die Metallschicht 21 abgeformt ist.

Neben dem partiellen Aufbringen des Farbstoffs im ersten Bereich ist es auch möglich, den Farbstoff in unterschiedlicher Konzentration innerhalb und außerhalb des ersten Bereichs oder zwei unterschiedliche Farbstoffe innerhalb und außerhalb des ersten Bereichs aufzubringen.

Unter Registergenauigkeit oder Passergenauigkeit ist die Lagegenauigkeit zweier Flächenbereiche und/oder Schichten relativ zueinander zu verstehen. Diese Lagegenauigkeit wird beispielsweise über sogenannte Registermarken oder Passermarken oder andere technische Hilfsmittel, z.B. optische Sensoren, eingestellt. Je nach den verwendeten Prozessen sind die Toleranzen der Lagegenauigkeit, d.h. die Passertoleranzen unterschiedlich groß und können beispielsweise im Bereich weniger Mikrometer bis zu einigen Millimetern reichen.

Wird die Konzentration viel höher gewählt, so wird der rote Farbeindruck der Reliefstruktur 61 noch massiv verstärkt. Bei gekippter Betrachtung kann dann allerdings auch der rote Farbeindruck vorliegen. Dies entspricht einer stabilen roten Farbe, welche nur im Bereich der Reliefstruktur 61 sichtbar ist, also registergenau zu dem Bereich der Reliefstruktur 61. Es kann so beispielsweise die Schicht 22 vollflächig sowohl in dem Bereich 31 als auch in dem Bereich 41 aufgebracht werden. Da in dem Bereich 41 der oben beschriebene Verstärkungseffekt nicht eintritt, ist bei entsprechend geringer Wahl der Konzentration des Farbstoffes und/oder Lumineszenzstoffes in der Schicht 22 der rote Farbeindruck so in dem Bereich 41 für den menschlichen Betrachter nicht oder kaum sichtbar, jedoch in dem Bereich 31 aufgrund des oben beschriebenen Verstärkungseffekts sichtbar. Hierdurch kann so beispielsweise ein roter Farbeindruck mit einer weit höheren Passergenauigkeit strukturiert werden, als mittels eines Druckverfahren möglich ist und absolut registergenau zu optisch variablen Effekten angeordnet werden, welche beispielsweise von zweiten oder ersten Reliefstrukturen erzeugt werden.

Wird beispielsweise ein Farbstoff verwendet, welcher einen anderen Farbeindruck als die Reliefstruktur 61 aufweist, wird der Farbeindruck des Sicherheitselements 2 nicht nur verstärkt, sondern auch verändert. Wird beispielsweise ein blauer Farbstoff auf eine rot erscheinende Reliefstruktur aufgebracht, so kann ein stark violetter Farbeindruck erzeugt werden.

Weiter ist es auch möglich, dass die Farbe des Farbstoffes so gewählt wird, dass sie mit der Farbe der Reliefstruktur 61 übereinstimmt, welche unter einem größeren Reflexionswinkel (beispielsweise $\alpha_{in} = \alpha_{ex} = 30°$) generiert wird. Hierdurch kann Folgendes bewirkt werden: Wird beispielsweise von der Reliefstruktur 61 ein Farbwechsel bewirkt, bei dem die beiden Farben eine stark unterschiedliche Reflektivität aufweisen (wobei beispielsweise die Farbe unter $\alpha_{in} = \alpha_{ex} = 0°$ eine deutlich stärkere Reflexion als die unter $\alpha_{in} = \alpha_{ex} = 30°$ auftretende Farbe aufweist), kann die Farbe des Farbstoffes so gewählt werden, dass sie mit der schwächeren der beiden Farben übereinstimmt. Hierdurch kann die Sichtbarkeit des schwächeren Farbeindrucks verbessert werden. Weiter ist es möglich, die Schicht 21 musterförmig, beispielsweise in Form eines Logos, eines Textes oder eines Bildes aufzubringen, und die Farbe des Farbstoffes so zu wählen, dass diese mit der Farbe übereinstimmt, die erscheint, wenn das Sicherheitselement 2 gedreht wird. Auf diese Weise kann erreicht werden, dass beispielsweise das Logo oder das Bild plötzlich mit hoher Lichtstärke erscheint, wenn das Sicherheitselement 2 gedreht wird.

Der Einfluss der Schicht 22 auf den Farbeindruck des Sicherheitselements 2 ist weiter in Fig. 6c verdeutlicht. Fig. 6c zeigt nun den Farbeindruck des Sicherheitselements 2 in Reflexion ohne Farbstoff (durchgezogene Linie) und mit Farbstoff (gestrichelte Linie) bei einer Ausgestaltung der Reliefstruktur 61 gemäß Fig. 5a bis Fig. 5f. Beleuchtungswinkel und Betrachtungswinkel ist 8°. Hierbei wurde auf die Metallschicht 21 aus Aluminium eine eingefärbte Polymerschicht von 150 nm Dicke aufgebracht. Die Polymerschicht weist einen roten Farbstoff, nämlich Acrotest Prüftinte 42 mN auf, welche in einer Matrix aus Polyacrylsäure eingebettet ist und so stark verdünnt ist, dass ein unstrukturierter Bereich der Metallschicht, d.h. ein Spiegelbereich, für den menschlichen Betrachter nahezu unverändert erscheint. Weiter ist die Transmission der Polymerschicht so gewählt, dass mindestens 90% des einfallenden sichtbaren Lichtes im Wellenlängenbereich von 400 nm bis 700 nm durch die Polymerschicht hindurch tritt. Trotzdem unterscheiden sich die beiden gemessenen Reflexionsspektren mit und ohne Farbstoffe markant, wie in Fig. 6c gezeigt. Die Wechselwirkung des Farbstoffes mit der Metallschicht mit abgeformter Reliefstruktur 61 führt, wie in Fig. 6c gezeigt, einerseits zu einer Verschiebung der Hochpasskante um ca. 60 nm zu höheren Wellenlängen. Gleichzeitig erhöht sich die reflektierte Intensität oberhalb einer Wellenlänge von 600 nm. Insgesamt entstehen ein breiteres Reflexionsminimum und eine stärker ausgeprägte Reflexionskante, was in einem kräftigeren Rot-Ton resultiert. Bei $\alpha = 30°$ (nicht gezeigt) verschiebt sich die Reflexionskante durch den Farbstoff ebenfalls zu größeren Wellenlängen. Gleichzeitig reduziert sich die Intensität des Reflexionspeak bei ca. 535 nm.

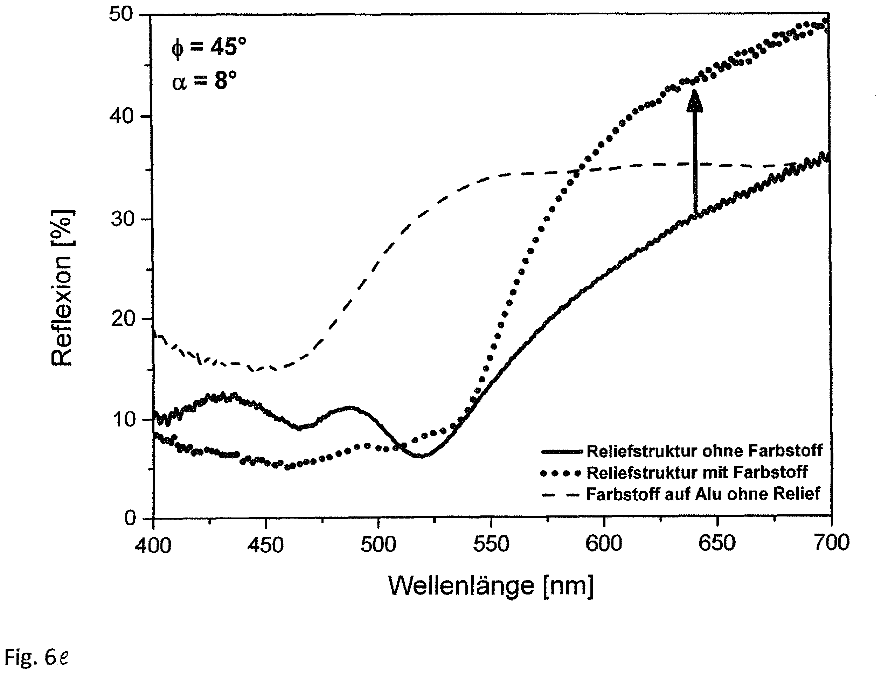

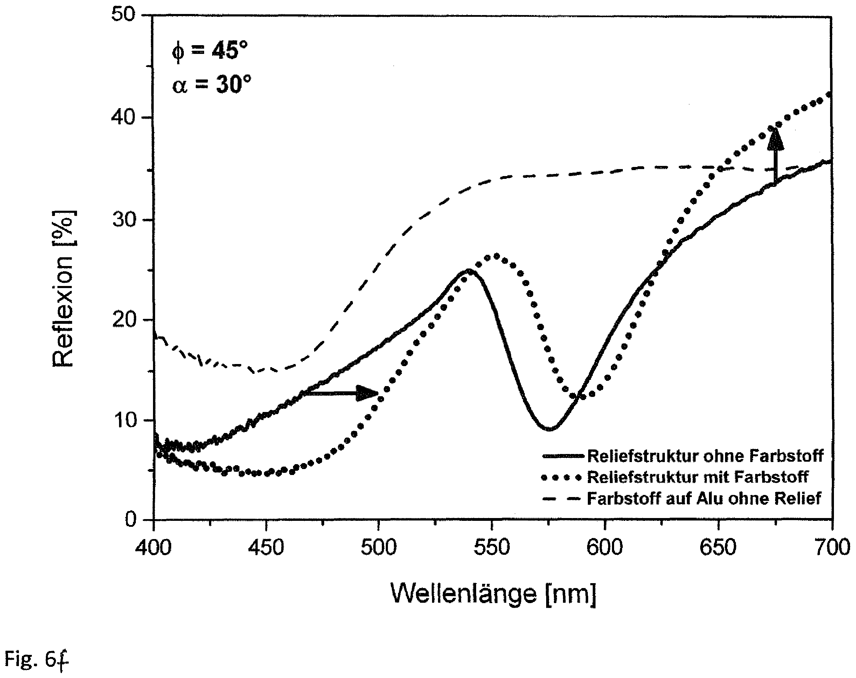

Fig. 6e und 6f zeigen gemessene Reflexionsspektren eines Beispiels eines Sicherheitselements 2, welches mit einer Schicht 22 versehen ist, die einen Farbstoff in so hoher Konzentration aufweist, dass das Sicherheitselement 2 eingefärbt erscheint. Fig. 6e und 6f zeigen nun den Farbeindruck des Sicherheitselements 2 in Reflexion ohne Farbstoff (durchgezogene Linie) und mit Farbstoff (gepunktete Linie) bei einer Ausgestaltung der Reliefstruktur 61 gemäß Fig. 5a bis Fig. 5f. Beleuchtungswinkel und Betrachtungswinkel sind 8° bei Fig. 6e und 30° bei Fig. 6f. Hierbei wurde auf die Metallschicht 21 aus Aluminium eine eingefärbte Polymerschicht von ca. 240 nm Dicke aufgebracht. Die Polymerschicht weist einen gelben Farbstoff, insbesondere Solvent Yellow 82 auf, welcher in einer Matrix aus Polymethylmethacrylat (PMMA) eingebettet ist. Die Konzentration des gelben Farbstoffes ist so hoch, dass das Sicherheitselement 2 in Bereichen ohne die Reliefstruktur 61 wie eine sogenannte "Goldfolie" aussieht. Zum Vergleich ist in beiden Figuren dünn gestrichelt das bei 8° gemessene Reflexionsspektrum des eingefärbten Sicherheitselementes 2 in einem Bereich ohne Reliefstruktur - d.h. nur Farbstoff auf Aluminium - zu sehen.

Die Wechselwirkung des gelben Farbstoffes mit der Metallschicht mit abgeformter Reliefstruktur 61 führt, wie in Fig. 6e gezeigt, einerseits zu einer massiv höheren reflektierten Intensität oberhalb einer Wellenlänge von 560nm. Die Kante des Reflexionsspektrums ist auch deutlich steiler. Andererseits ist die reflektierte Intensität unterhalb 500nm noch unter 10% Reflexion gedrückt. Beides ergibt einen stärkeren und kontrastreicheren roten Farbeindruck bei diesem Betrachtungswinkel von 8°. Bei einem Betrachtungswinkel von 30° liegt ebenfalls ein stärkerer und kontrastreicherer - in diesem Fall grüner - Farbeindruck vor (Fig. 6f). Der für den grünen Farbeindruck relevante Reflexionspeak ist leicht zu höheren Wellenlängen verschoben und weist vor allem steilere Flanken auf.

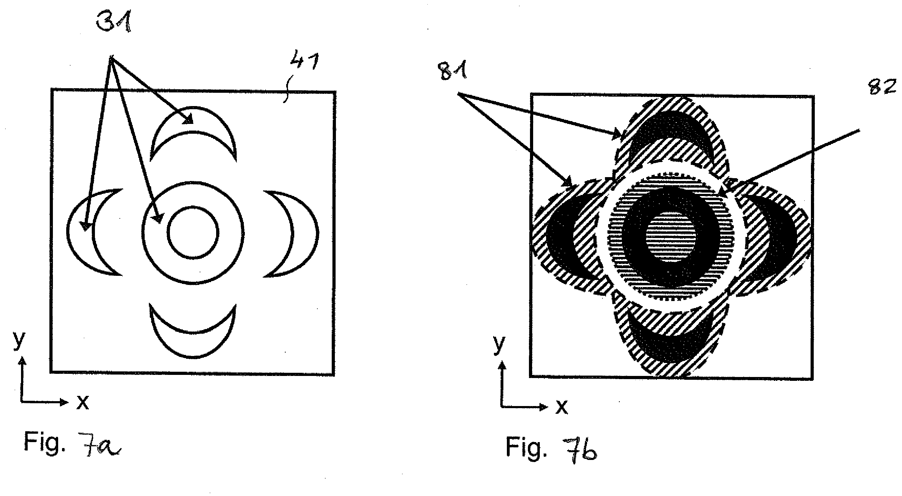

Durch den Einsatz von ein oder mehreren Schichten 22, welche ein oder mehrere Farbstoffe und/oder Lumineszenzstoffe enthalten, lassen sich so beispielsweise die anhand der Figuren Fig. 7a und Fig. 7b erläuterten Effekte verwirklichen:

Fig. 7a und Fig. 7b zeigen jeweils einen Ausschnitt des Sicherheitselements 2, welcher mehrere Bereiche 31 und einen diese umschließenden Hintergrundbereich 41 aufweist. In den Bereichen 31 ist - wie oben dargelegt - die Reliefstruktur 61 in die Metallschicht 21 abgeformt und in dem Bereich 41 ist eine hiervon unterschiedliche Reliefstruktur 62, beispielsweise eine holographische Struktur, oder eine Spiegelfläche abgeformt. Die Reliefstruktur 61 kann in den Bereichen 31 identisch sein oder sich unterscheiden, z.B. in der Periode P unterscheiden.

Wie in Fig. 7b gezeigt, wird weiter in Bereichen 81 eine erste Schicht 22 und in einem Bereich 82 eine zweite Schicht 22 benachbart zu der Metallschicht 21 angeordnet, beispielsweise auf die Metallschicht 21 aufgedruckt. Die in den Bereichen 81 vorgesehene Schicht 22 weist hierbei einen ersten Farbstoff und die in dem Bereich 82 vorgesehene Schicht 22 einen zweiten Farbstoff auf, wobei der erste Farbstoff und der zweite Farbstoff unterschiedliche Farbstoffe sind, welche unterschiedliche Farben besitzen. Durch die Wechselwirkung zwischen der Reliefstruktur 61 in den Bereichen 31 und den Farbstoffen der in den Bereichen 81 und 82 angeordneten Schichten 22 ergeben sich zwei unterschiedliche Farbeindrücke, die aber genau auf den Bereich der Reliefstruktur 61, d. h. auf die Bereiche 31 beschränkt sind. Dieses Auftreten der starken Farbeindrücke ist in Fig. 7b auf die schwarz gekennzeichneten Flächen beschränkt. Die anderen Bereiche des Sicherheitselements 2, beispielsweise der Bereiche 41 ist mit Reliefstrukturen belegt, welche nicht mit den Farbstoffen der Schichten 22 regieren, sodass in diesen Bereichen die Farbeffektschichten 22 nicht oder kaum sichtbar sind. Hierzu ist die Konzentration der Farbstoffe mit Schichten 22 wie oben dargelegt bevorzugt so zu wählen, dass Bereiche, welche mit diesen Schichten bedruckt werden und keine wie die Reliefstruktur 61 ausgebildete Reliefstrukturen aufweisen, nahezu unverändert sind, d. h. nicht gefärbt aussehen. Alternativ können die Bereiche 81 und 82 mit den Farbstoffen kleiner ausfallen als die Bereiche 31. Hierdurch ist es bei passergenauer Replikation in diese Bereiche 81 und 82 möglich sicherzustellen, dass nur in Bereichen 31 mit der Reliefstruktur die Farbstoffe vorliegen.

Weiter treten die oben beschriebenen Wechselwirkungen zwischen Farbstoffen bzw. Lumineszenzstoffen und der Reliefstrukturen 61 auch in Transmission auf, sodass die obigen Ausführungsbeispiele nach den Fig. 6a bis 7b auch entsprechend auf eine Ausgestaltung des Sicherheitelements nach Fig. 3 übertragbar sind.

Die Parameter der Reliefstruktur 61, d. h. insbesondere die Periode P, der Azimutwinkel, die Relieftiefe t, die Grundfläche und die Profilform können im gesamten Gebiet eines Bereichs 31 bzw. 32 konstant gewählt sein. So ist es beispielsweise möglich, dass in einem rechteckförmigen Bereich ein in Form eines Buchstabens "A" ausgeformter Bereich 31 mit einer Reliefstruktur 61 belegt ist, welcher bei senkrechter Betrachtung rot und bei schräger, d.h. gekippter, Betrachtung grün erscheint. Weiter ist ein in Form eines Buchstabens "B" ausgeformter Bereich 32 vorgesehen, welcher mit einer unterschiedlichen Reliefstruktur 61 belegt ist, welcher bei senkrechter Betrachtung gelb erscheint, und bei der diese Farbe beim Verkippen verschwindet. Weiter ist ein Hintergrundbereich 41 vorgesehen, in dem die Reliefstruktur von einer Mattstruktur gebildet ist. Bei senkrechter Betrachtung zeigt sich so ein rotes "A" und ein gelbes "B" gegen einen grauen Hintergrund.

Es ist weiter auch möglich, dass ein oder mehrere dieser Parameter in dem Bereich 31 bzw. 32 variiert. So ist es beispielsweise möglich, dass die Periode der Reliefstruktur 61 vom Rand zur Mitte eines Bereichs 31 bzw. 32 leicht zunimmt und dann zum gegenüberliegenden Rand leicht wieder abnimmt. Die Variation der Periode sollte hierbei weniger als ±10%, besser weniger als ±5% betragen, insbesondere zwischen 10 nm und 50 nm betragen. Durch eine derartige Vorgehensweise lassen sich Bewegungseffekte erzielen. Es hat sich gezeigt, dass die steile Flanke und auch der Peak in den Reflexions- bzw. Transmissionsspektren der Reliefstruktur 61 mit zunehmender Gitterperiode zu größeren Wellenlängen wandert. Dieser Peakshift bzw. Flankenshift wird für den vorgenannten Bewegungseffekt ausgenutzt. Weiter ist es auch denkbar, dass durch Variation des Azimutwinkels φ ein Bewegungseffekt imitiert wird. Bei Kreuzgittern ist jedoch zu berücksichtigen, dass der Azimutwinkel nur zwischen 0° und 45° variiert werden kann, bei Hexagonalgittern nur zwischen 0° und 30°.

Weiter ist es auch möglich, dass die Bereiche 31 und 32 ein oder mehrere Zonen umfassen, in welchen ein oder mehrere der Parameter der ersten Reliefstruktur 61 unterschiedlich gewählt sind.

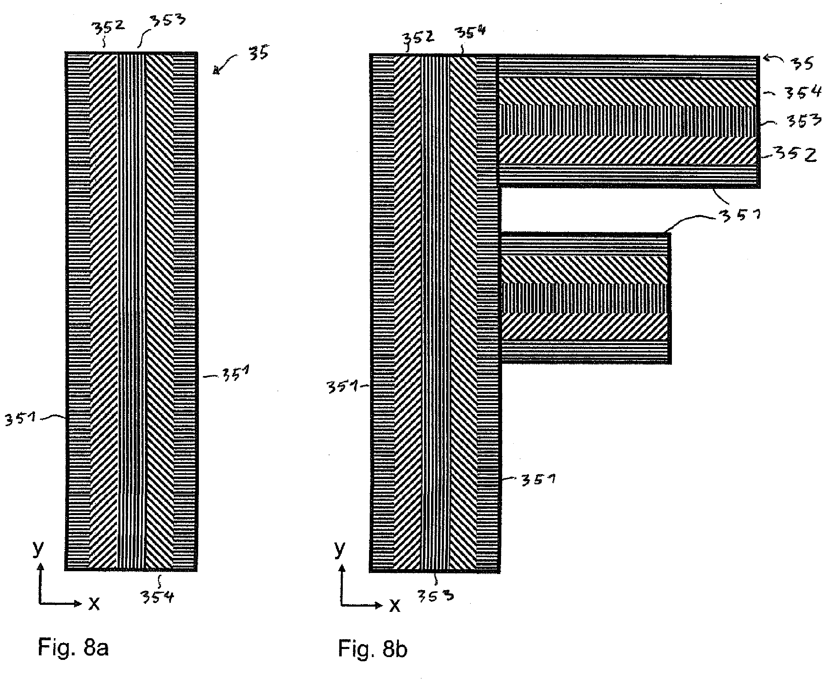

So zeigt Fig. 8a und Fig. 8b jeweils einen Bereich 35, welcher in Form eines "I" bzw. "F" ausgeformt ist und welcher jeweils in mehrere Zonen 351, 352, 353 und 354 unterteilt ist. In den Zonen 351, 352, 353 und 354 sind jeweils ein oder mehrere der Parameter der Reliefstrukturen 61 unterschiedlich gewählt, insbesondere die Periode P, die Relieftiefe t oder der Azimutwinkel der Reliefstruktur 61 unterschiedlich gewählt. Weiter ist es auch möglich, dass ein oder mehrere der vorgenannten Parameter in den jeweiligen Zonen 351, 352, 353 und 354 unterschiedlich variiert ist, wie dies auch vorgehend bereits ausgeführt ist.

Die Zonen 351, 352, 353 und 354 weisen weiter bevorzugt mindestens eine laterale Abmessung von weniger als 300 μm auf, beispielsweise eine Breite von weniger als 300 μm und eine Länge von mehr als 2 mm auf. Auf diese Weise lassen sich beispielsweise auch gegenläufige Bewegungseffekte in den Bereichen 35 realisieren.

Im Fall des "I" aus Fig. 8a ergibt sich ein "rolling bar"-Effekt, bei welchem ein Farbband scheinbar über das "I" wandert. Beispielsweise kann ein rötlicher Kern des "I" (mit einem gelblich oder grünlichen Außenbereich) wandern, wenn der Mehrschichtkörper in Richtung des Blickwinkels gekippt wird.

Im Fall des "F" aus Fig. 8b kann der "rolling bar" Effekt sogar so ausgestaltet werden, dass er in dem senkrechten Steg des "F" von links nach rechts und in den waagrechten Stegen des "F" von oben nach unten wandert. Dies sind sehr auffällige Effekte, selbst für den Laien.

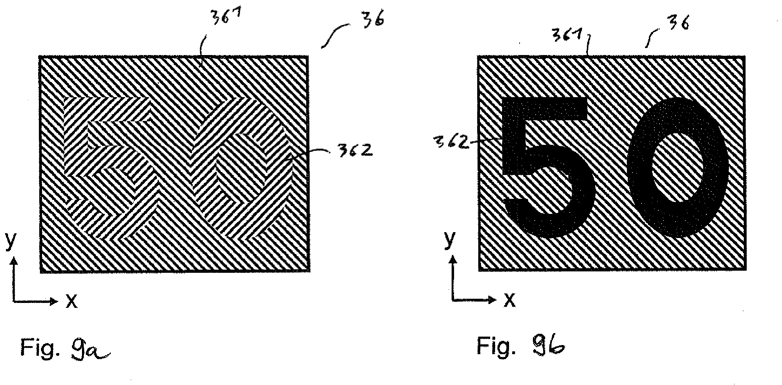

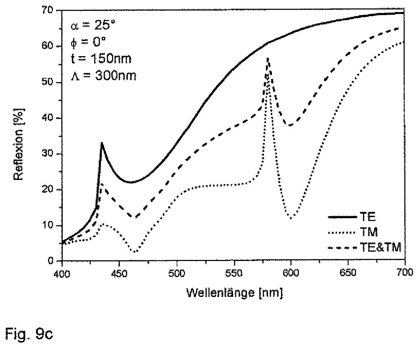

Die Figuren Fig. 9a und Fig. 9b zeigen weiter einen Bereich 36 des Sicherheitselements 2, welcher aus zwei Zonen 361 und 362 besteht. In den Zonen 361 und 362 sind die Parameter der Reliefstruktur 61 so gewählt, dass sich diese Bereiche in ihren Polarisationseigenschaften unterscheiden. So zeigt Fig. 9c die Reflexion eines Kreuzgitters einer Periode von 300 nm und einer Tiefe von 150 nm für die TE-polarisierte Komponente des reflektierten Lichts sowie für die TMpolarisierte Komponente des reflektierten Lichts (bei einem Betrachtungswinkel von 25°). Bei Betrachtung der TE-polarisierten Komponente zeigt sich ein im Wesentlichen gelber Farbeindruck. Wird der Polarisator um 90° gedreht, sieht man die TM-Komponente, welche Rot erscheint. Unpolarisiert sieht man das gemittelte Spektrum TE und TM. Ohne Polarisator betrachtet ist der Farbeindruck der Reliefstruktur 61 typischerweise sehr ähnlich bis nahezu identisch, beim Drehen in der x/y-Ebene, d. h. unabhängig vom Azimutwinkel. Dies gilt insbesondere für Kreuzgitter. Durch einen Polarisator aufgelöst betrachtet, ist dies nicht notwendigerweise der Fall, sodass sich auch ein Design realisieren lässt, welches ohne Polarisator betrachtet eine einfarbige Fläche aufweist, mit Polarisator betrachtet hingegen eine zusätzliche Information preisgibt.

Hierzu wird die Reliefstruktur 61 in den Zonen 361 und 362 gewählt, dass sich der Azimutwinkel ϕ der Reliefstruktur 61 in den Zonen 361 und 362 unterscheidet, beispielsweise der Azimutwinkel ϕ in der Zone 362 um mindestens 15° gegenüber der Zone 361 gedreht gewählt wird. Bevorzugt werden bei Verwendung von Kreuzgittern die Azimutwinkel ϕ in den Zonen 361 und 362 um ca. 45° gegeneinander verdreht angeordnet.

Durch diese Vorgehensweise kann so ein Sicherheitsmerkmal realisiert werden, bei dem ein Bereich, beispielsweise der Bereich 36, bei Betrachtung ohne Polarisator in einer einheitlichen Farbe erscheinen, bei Betrachtung durch einen Polarisator jedoch eine durch eine unterschiedliche Farbgebung hervortretende Information sichtbar wird, so beispielsweise die Zone 361 gelb und die Zone 362 rot erscheinen.

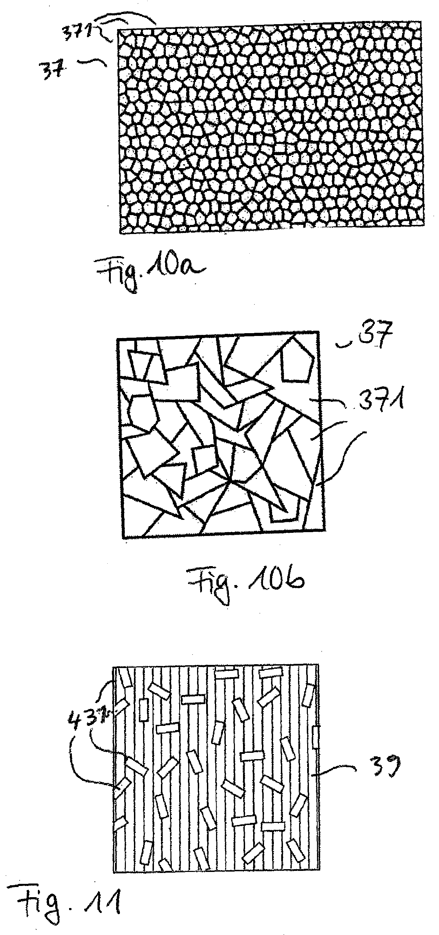

Weiter ist es möglich durch eine entsprechende Ausgestaltung der Reliefstruktur 61 auch Glitzereffekte oder Glimmereffekte in das farbige Erscheinungsbild zu integrieren. Dies wird im Folgenden anhand der Figuren Fig. 10a bis Fig. 10d verdeutlicht.

Fig. 10a und Fig. 10b zeigen einen Bereich 37, welcher aus einer Vielzahl von Teilbereichen 371 zusammengesetzt ist. Die Teilbereiche 371 weisen vorzugsweise eine möglichst unregelmäßige Formgebung auf. In jeden der Teilbereiche 371 sind die Parameter der Reliefstruktur 61 gemäß einer vorgegebenen Reliefstruktur gewählt, welche pseudo-zufällig für den jeweiligen Teilbereich 371 aus einem Satz von vordefinierten Reliefstrukturen ausgewählt ist. Es werden mehrere Reliefstrukturen, beispielsweise Reliefstrukturen G1, G2, G3 und G4 vordefiniert, die sich beispielsweise in ihrer Azimutorientierung und/oder ihrer Periode und ihrer Relieftiefe unterscheiden. Aus diesem Satz von Reliefstrukturen G1 bis G4 wird sodann für jeden der Teilbereiche 371 pseudo-zufällig eine der Reliefstrukturen G1 bis G4 ausgewählt und eine entsprechende Reliefstruktur als Reliefstruktur 61 in dem jeweiligen Teilbereich 371 abgeformt.

Weiter können derartige Glitzereffekte auch mittels der in Fig. 11 gezeigten Anordnung von Bereiche realisiert werden.

Fig. 11 zeigt einen Ausschnitt aus einem Sicherheitselement 2, welches einen aus einer Vielzahl von Teilbereichen 431 bestehenden Bereich aufweist, in welcher die Reliefstruktur 62 abgeformt ist, und aus einem Bereich 39 besteht, in dem die Reliefstruktur 61 abgeformt ist und welcher den Hintergrundbereich zu den Teilbereichen 431 ausbildet. Die Reliefstruktur 62 besteht vorzugsweise aus einer Spiegelfläche oder einer achromatischen Struktur, beispielsweise einem Blaze-Gitter, dessen Azimutorientierung zufällig gewählt ist. Weiter sind die Teilbereiche 431 vorzugsweise zufällig vor dem Hintergrund des Bereichs 39 angeordnet und/oder in ihrer Orientierung, beispielsweise der Orientierung ihrer Längenkante, pseudo-zufällig gewählt. Hierdurch wird metallisches Glitzern zu der Farbfläche hinzugefügt, was ähnlich wie bei Metalliclacken von Autos edel wirkt.

Bezüglich der Ausbildung der Reliefstruktur 61 in dem Bereich 39 wird auf die vorhergehenden Ausführungen verwiesen.

Weiter ist es auch möglich, dass in den Teilbereichen 431 die Reliefstruktur 61 und in dem Bereich 39 die Reliefstruktur 62 abgeformt ist.

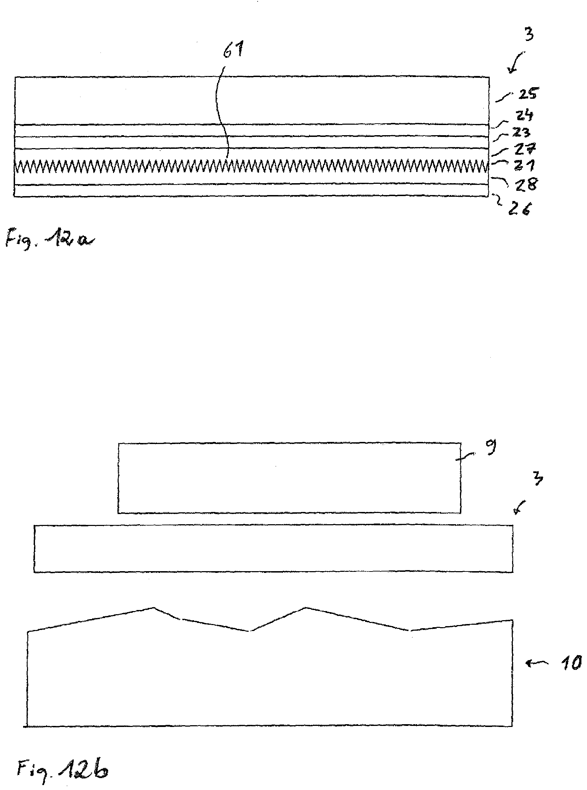

Weiter ist es auch möglich, dass das Sicherheitselement 2 durch Abprägen eines Teilbereichs einer Übertragungslage einer Transferfolie bereitgestellt wird. Fig. 12a zeigt so beispielhaft eine Transferfolie 3 mit einer Trägerfolie 25, einer Ablöseschicht 24, einer Schutzlackschicht 23, einer Replizierlackschicht 27, der Metallschicht 21, einer Schutzlackschicht 28 und einer Kleberschicht 26. In die Metallschicht 21 ist die Reliefstruktur 61 abgeformt. Bzgl. der Ausgestaltung der Metallschicht 21 und der Reliefstruktur 61 wird hier auf die obigen Ausführungen und insbesondere auf die Figuren Fig. 1 bis Fig. 11 verwiesen.

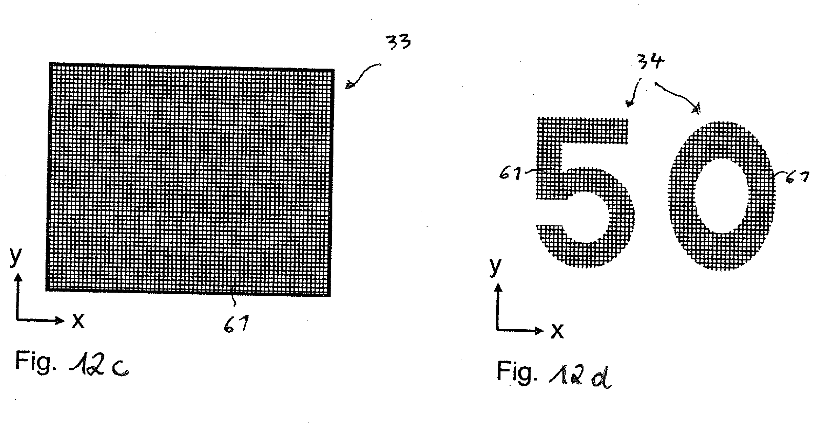

Die Transferfolie 3 wird sodann, wie in Fig. 12b gezeigt, mittels eines Prägewerkzeuges 9 auf die Oberfläche eines Substrats, beispielsweise des Substrats 10 des Sicherheitsdokuments 1 abgeformt. Nach dem Abprägen wird sodann die Trägerfolie 25 mit den Bereichen der Übertragungslage, welche von dem Prägewerkzeug 9 nicht gegen das Substrat 10 gepresst worden sind, abgezogen. Hierdurch sind zwei verschiedene Effekte erzielbar: So wird zum Einen die in dem Bereich 33 vollflächig in der Transferfolie 3 vorgesehene Metallschicht 21 mit der Reliefstruktur 61 (siehe Fig. 12c) nicht vollständig auf das Substrat 10 übertragen, sondern lediglich musterförmig in dem Bereich übertragen, in dem das Prägewerkzeug die Transferfolie 3 gegen das Substrat 10 presst. Nach dem Abprägen ergibt sich so beispielsweise die in Fig. 12d gezeigte Formgestaltung der Metallschicht 21 mit der Reliefstruktur 61, d.h. die Metallschicht 21 mit der Reliefstruktur 61 ist in einem Bereich 34 auf dem Substrat 10 vorgesehen, welcher beispielsweise in Form der Zahl "50" ausgeformt ist. Weiter ergibt sich je nach Art des Substrats folgender Effekt: Wie in Fig. 12b angedeutet, weist die Oberfläche des Substrats 10 vorzugsweise keine glatte und ebene Oberfläche auf, sondern weist eine Oberfläche auf, welche über eine gewisse Oberflächenrauigkeit verfügt, beispielsweise ein mattes Erscheinungsbild zeigt, oder in welcher bereits eine Grobstruktur abgeformt ist. Der Prägedruck, mit dem das Prägewerkzeug 9 nun die Transferfolie 3 gegen das Substrat 10 presst, wird vorzugsweise nun so gewählt, dass die Grundfläche 616 der Reliefstruktur 61 gemäß der Reliefstruktur der Oberfläche des Substrats 10 verformt wird, beispielsweise ebenfalls in Form einer Mattstruktur oder einer Grobstruktur verformt wird. Es hat sich gezeigt, dass durch eine derartige Vorgehensweise beispielsweise der Blickwinkel, unter dem die Farbeffekte der Reliefstruktur 61 in dem Bereich 34 sichtbar ist, deutlich erhöht werden kann, oder dass zusätzlich Bewegungs-, Formwandel- (Morphing) oder 3-D - Effekte durch entsprechende Wahl einer Grobstruktur auf diese Weise in das Sicherheitselement 2 eingebracht werden können.

Alternativ ist es auch möglich, ein Sicherheitselement 2 mit der Metallschicht 21 und der in dieser abgeformten Reliefstruktur 61 in einem weiteren Arbeitsgang mittels eines Blindprägewerkzeuges zu bearbeiten, in dessen Prägefläche eine Grobstruktur oder Mattstruktur abgeformt ist. Auch hier wird der Prägedruck, mit dem das Blindprägewerkzeug gegen das Sicherheitselement 2 gepresst wird, vorzugsweise so gewählt, dass die Grundfläche der Reliefstruktur 61 gemäß der Grobstruktur oder Mattstruktur des Blindprägewerkzeuges verformt wird, wodurch auch durch diese Vorgehensweise die oben beschriebenen Vorteile erzielbar sind.

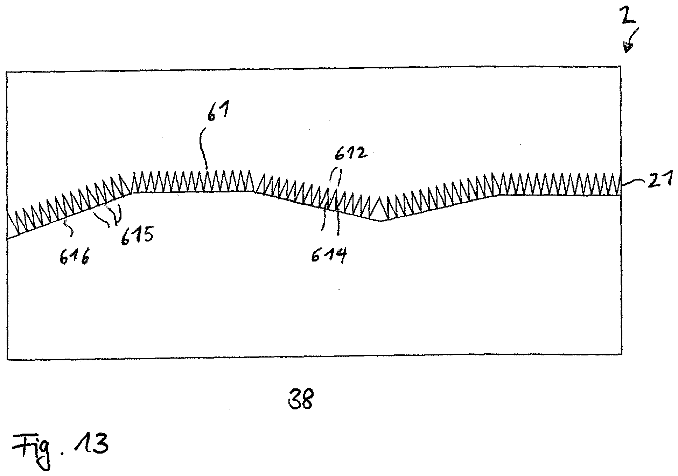

Weiter ist es auch möglich, die Reliefstruktur 61 bereits bei der Herstellung des Sicherheitselements 2 derart zu gestalten, dass die Grundfläche der Reliefstruktur 61 nicht die Form einer ebenen Fläche, sondern die Formgebung einer Grobstruktur oder Mattstruktur besitzt. Allerdings ist die Tiefe derartiger Strukturen meist deutlich geringer als sie bei Blindprägung erreicht werden kann. Fig. 13 zeigt beispielhaft einen Ausschnitt aus einem Sicherheitselement 2 mit der Metallschicht 21, in welche eine derartige Reliefstruktur 61 abgeformt ist. Bzgl. der Ausgestaltung des Sicherheitselements 2 wird auf die vorgehenden Ausführungen nach Fig. 1 bis Fig. 11 verwiesen. In einem Bereich 38 ist nun die Grundfläche 616 der Reliefstruktur 61, wie in Fig. 13 gezeigt, nicht als Ebene, sondern in Form einer Grobstruktur abgeformt, wodurch sich die oben beschriebenen Effekte realisieren lassen.

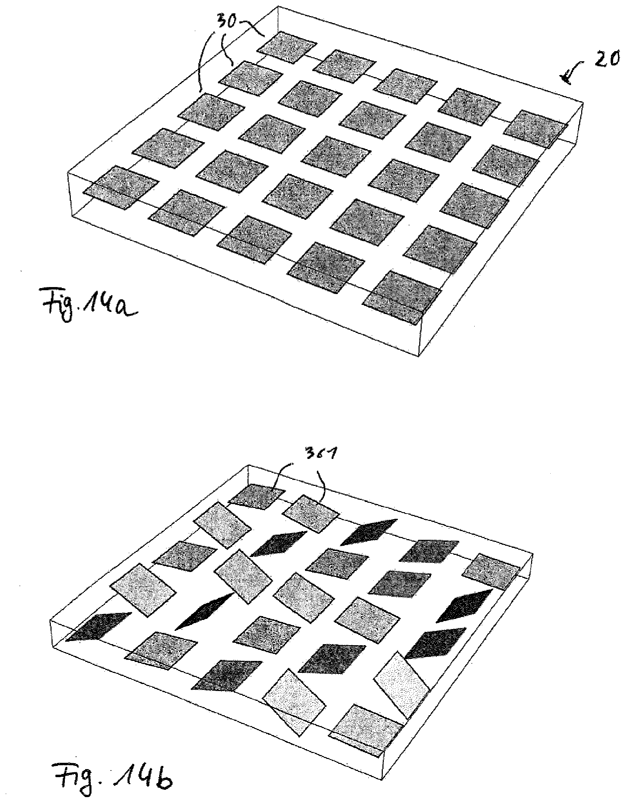

Weiter ist es auch möglich, Bewegungseffekte und Glitzereffekte durch folgende Vorgehensweise bereitzustellen: Ein Bereich oder mehrere Bereiche des Sicherheitselements 2 weisen eine Vielzahl von Teilbereichen auf, wobei jeder der Teilbereiche eine kleinste Abmessung von 3 μm und eine größte Abmessung von weniger als 300 μm aufweist. Fig. 14a zeigt beispielhaft den Ausschnitt eines solchen Bereichs des Sicherheitselements 2 mit einer Vielzahl von Teilbereichen 30.

In den Teilbereichen 30 wird nun die Reliefstruktur 61 in die Metallschicht 21 abgeformt. Für jeden der Teilbereiche 30 wird weiter ein oder mehrere der Parameter der Reliefstruktur 61 und/oder des Teilbereichs 30 pseudo-zufällig variiert. Besonders vorteilhaft ist es hierbei, zumindest einen der Parameter: Form des Teilbereichs, Flächengröße des Teilbereichs, Position des Flächenschwerpunkts des Teilbereichs, Neigungswinkel der Grundfläche 616 der Reliefstruktur 61 gegen eine Grundebene, Drehwinkel der Grundfläche 616 der Reliefstruktur 61 um eine auf der Grundebene senkrecht stehenden Achse, Azimutwinkel der Reliefstruktur 61, Periode P der Reliefstruktur pseudo-zufällig innerhalb eines jeweils vordefinierten Variationsbereich zu variieren. Fig. 14b verdeutlicht so beispielsweise ein entsprechende pseudozufällige Variation des Neigungswinkels der Grundfläche 616 der Reliefstruktur 61 für die Teilbereiche 30.

Außerhalb der Teilbereiche 30 ist die Reliefstruktur 61 vorzugsweise nicht in die Metallschicht 21 abgeformt. In diesen Bereichen ist vorzugsweise die Reliefstruktur 62 abgeformt oder die Metallschicht 21 ist in diesem Bereichen nicht vorgesehen, sodass in diesen Bereichen von der Metallschicht 21 keine optische Wirkung entfalten wird.

**Patentansprüche**

1. Mehrschichtkörper (1, 2, 3), insbesondere Sicherheitselement für Sicherheitsdokumente, mit einer Oberseite (201) und einer Unterseite (202), wobei der Mehrschichtkörper eine Metallschicht (21) aufweist, wobei in einer zur Oberseite (201) des Mehrschichtkörpers weisende oder die Oberseite des Mehrschichtkörpers bildende erste Oberfläche der Metallschicht (21) und/oder in einer zur Unterseite (202) des Mehrschichtkörpers weisenden oder die Unterseite des Mehrschichtkörpers bildenden zweiten Oberfläche der Metallschicht (21) zumindest bereichsweise ein optisch aktives Oberflächenrelief abgeformt ist, wobei in zumindest einem ersten Bereich (31 bis 39) des Mehrschichtkörpers das Oberflächenrelief von einer ersten Reliefstruktur (61) gebildet ist, die in zumindest einer durch einen zugeordneten Azimutwinkel bestimmten Richtung (617) eine Abfolge von Erhebungen (612) und Vertiefungen (614) aufweist, deren Erhebungen (612) mit einer Periode P aufeinander abfolgen, welche kleiner als eine Wellenlänge des sichtbaren Lichtes ist, wobei die Minima (615) der Vertiefungen (614) auf einer Grundfläche liegen und die erste Reliefstruktur (61) eine Relieftiefe t aufweist, welche durch die Beabstandung der Maxima (613) der Erhebungen (612) der ersten Reliefstruktur (61) von der Grundfläche (616) in einer senkrecht auf der Grundfläche (616) stehenden Richtung bestimmt ist, und wobei die Profilform und/oder die Relieftiefe t der ersten Reliefstruktur (61) so gewählt ist, dass die farbige Erscheinung des auf den ersten Bereich (31 bis 39) unter zumindest einem ersten Einfallswinkel einfallenden und von der Metallschicht (21) im ersten Bereich direkt reflektierten bzw. durch die Metallschicht direkt transmittierten Lichts (52, 53) verändert wird, insbesondere durch Plasmon-Resonanz der Metallschicht mit dem einfallenden Licht verändert wird, **dadurch gekennzeichnet, dass** die erste Reliefstruktur (61) eine in Bezug auf eine Spiegelung an der Grundfläche (616) asymmetrische Profilform aufweist, wobei die Breite (618) der Erhebungen (612) oder Vertiefungen (614) der ersten Reliefstruktur (61), bezogen auf einen Abstand von t/2 von der Grundfläche (616), mindestens 0,6 x P vorzugsweise 0,7 x P oder höchstens 0,4 x P, insbesondere höchstens 0,3 x P beträgt.

2. Mehrschichtkörper (1, 2, 3) nach Anspruch 1, **dadurch gekennzeichnet,**

   **dass** die Profilform und/oder die Relieftiefe t der ersten Reliefstruktur (61) so gewählt ist, dass die Metallschicht (21) bei direkter Reflexion für das unter dem ersten Einfallswinkel einfallende Licht (51) im ersten Bereich (31 bis 39) in einem für das menschliche Auge sichtbaren ersten Spektralbereich einer Breite von mindestens 50 nm eine Reflexion von weniger als 15% aufweist, insbesondere von weniger als 10% aufweist und in einem für das menschliche Auge sichtbaren zweiten Spektralbereich einer Breite von 10 nm und höchstens 200 nm, insbesondere 20 nm bis 150 nm, eine mindestens zweifach, bevorzugt mindestens 2,5-fach, weiter bevorzugt mindestens 3-fach und insbesondere 4-fach höhere Reflexion aufweist bezogen auf den Mittelwert der Reflexion im ersten Spektralbereich, und/oder

   **dass** die Profilform und/oder die Relieftiefe t der ersten Reliefstruktur (61) so gewählt ist, dass bei einem vom ersten Einfallswinkel unterschiedlichen zweiten Einfallswinkel die farbige Erscheinung des von der Metallschicht in dem ersten Teilbereich direkt reflektierten bzw. durch die Metallschicht direkt transmittierten Lichts unterschiedlich verändert wird und sich unter diesen Einfallswinkeln bei Auflichtbetrachtung bzw. bei Durchlichtbetrachtung insbesondere unterschiedliche Farben zeigen.

3. Mehrschichtkörper (1, 2, 3) nach einem der vorhergehenden Ansprüche, **dadurch gekennzeichnet, dass** die Flankensteilheit der ersten Reliefstruktur (61), bezogen auf einen Abstand t/2 von der Grundfläche (616), zwischen 60° und 90°, insbesondere zwischen 70° und 85° beträgt, und/oder **dass** die Flankensteilheit der ersten Reliefstruktur (61), bezogen auf jeden Abstand zwischen t/4 und ¾ t von der Grundfläche (616), zwischen 40° und 90°, insbesondere zwischen 50° und 85° beträgt, und/oder dass die Flankensteilheit der ersten Reliefstruktur (61), bezogen auf jeden Abstand zwischen 0 und t/4 und/oder zwischen t x 3/4 und t von der Grundfläche (616) zwischen 0° und 50°, insbesondere zwischen 0° und 40° beträgt.

4. Mehrschichtkörper (1, 2, 3) nach einem der vorhergehenden Ansprüche, **dadurch gekennzeichnet, dass** die Schichtdicke d der Metallschicht (21) im Bereich der Flanken der ersten Reliefstruktur (61), bezogen auf einen Abstand von t/2 von der Grundfläche (616), gegenüber der Dicke der Metallschicht im Bereich der Maxima (613) der Erhebungen und/oder der Minima (615) der Vertiefungen (614) um mindestens 30%, weiter bevorzugt um mindestens 50% reduziert ist.

5. Mehrschichtkörper (1, 2, 3) nach einem der vorhergehenden Ansprüche, **dadurch gekennzeichnet, dass** die Periode P der ersten Reliefstruktur (61) zwischen 200 nm und 500 nm, insbesondere zwischen 250 nm und 450 nm, und bevorzugt zwischen 250 nm und 400 nm beträgt, und/oder **dass** die Relieftiefe t der ersten Reliefstruktur (61) zwischen 80 nm und 500 nm, insbesondere zwischen 100 nm und 400 nm, bevorzugt zwischen 200 nm und 300 nm beträgt.

6. Mehrschichtkörper (1, 2, 3) nach einem der vorhergehenden Ansprüche, **dadurch gekennzeichnet, dass** die Metallschicht (21) im ersten Bereich eine Schichtdicke zwischen 10 nm und 100 nm, bevorzugt zwischen 15 nm und 80 nm, weiter bevorzugt zwischen 20 nm und 50 nm aufweist, und/oder **dass** die Metallschicht (21) im ersten Bereich eine Schichtdicke d aufweist, welche einer optischen Dicke zwischen 0,5 und 2,5, insbesondere zwischen 0,7 und 2,3, bevorzugt zwischen 1,0 und 2,0 entspricht.

7. Mehrschichtkörper (1, 2, 3) nach einem der vorhergehenden Ansprüche, **dadurch gekennzeichnet, dass** das Oberflächenrelief in ein oder mehreren zweiten Bereichen (41, 42) und/oder weiteren Bereichen von einer zweiten und/oder weiteren Reliefstruktur gebildet ist, die ausgewählt ist bzw. ausgewählt sind aus der Gruppe: diffraktive Reliefstruktur, holographische Reliefstruktur, Spiegelfläche, Mattstruktur, Makrostruktur, Linse, Mikrolinsenraster, insbesondere dass der mindestens eine erste Bereich und der mindestens eine zweite Bereich von einer Vielzahl von Teilbereichen gebildet sind, wobei die Teilbereiche des ersten Bereichs und die Teilbereiche des zweiten Bereichs ineinandergerastet sind.

8. Mehrschichtkörper (2) nach einem der vorhergehenden Ansprüche,
**dadurch gekennzeichnet,**
**dass** in dem ersten Bereich (38) oder in mindestens einem der ersten Bereiche die Grundfläche (616) der ersten Reliefstruktur (61) von einer Grobstruktur oder Mattstruktur gebildet ist.

9. Mehrschichtkörper (1, 2, 3) nach einem der vorhergehenden Ansprüche, **dadurch gekennzeichnet,** **dass** der Mehrschichtkörper in dem ersten Bereich (31) oder in mindestens einem der ersten Bereiche Farbstoffe und/oder Lumineszenzstoffe aufweist, welche weniger als 2 $\mu$m, insbesondere weniger als 1 $\mu$m, bevorzugt weniger als 500 nm, weiter bevorzugt weniger als 300 nm weit von der ersten Oberfläche und/oder der zweiten Oberfläche der Metallschicht (21) entfernt angeordnet sind.

10. Mehrschichtkörper (1, 2, 3) nach einem der vorhergehenden Ansprüche, **dadurch gekennzeichnet,** **dass** der Mehrschichtkörper mindestens eine an die erste Oberfläche der Metallschicht (21) angrenzende erste Schicht (22) und/oder eine an die zweite Oberfläche der Metallschicht (21) angrenzende zweite Schicht (23) aufweist, welche Farbstoffe und/oder Lumineszenzstoffe aufweist, wobei die erste und/oder zweite Schicht vorzugsweise die erste Oberfläche bzw. die zweite Oberfläche der Metallschicht bereichsweise oder vollflächig im ersten Bereich oder in mindestens einem der ersten Bereiche, in welchem die erste Reliefstruktur in die erste bzw. zweite Oberfläche abgeformt ist, bedeckt.

11. Mehrschichtkörper nach Anspruch 11,
**dadurch gekennzeichnet,**
**dass** die erste Schicht und/oder die zweite Schicht lediglich im ersten Bereich auf die erste Oberfläche bzw. zweite Oberfläche der Metallschicht aufgebracht ist oder die erste Schicht und/oder die zweite Schicht lediglich in Bereichen der ersten Oberfläche bzw. zweiten Oberfläche auf die erste bzw. zweite Oberfläche der Metallschicht aufgebracht ist, in denen die erste Reliefstruktur in die erste Oberfläche bzw. zweite Oberfläche abgeformt ist, insbesondere dass die erste Schicht (22) und/oder die zweite Schicht (23) eine Schichtdicke zwischen 20 nm und 2 $\mu$m, insbesondere zwischen 50 nm und 1 $\mu$m und bevorzugt zwischen 100 nm und 500 nm aufweist.

12. Mehrschichtkörper nach einem der Ansprüche 11 und 12,
**dadurch gekennzeichnet,**
**dass** die Konzentration der Farbstoffe bzw. der Lumineszenzstoffe in dem von der ersten bzw. zweiten Oberfläche der Metallschicht weniger als 1 $\mu$m, insbesondere weniger als 500 nm, bevorzugt weniger als 300 nm entfernten Bereich der ersten und/oder zweiten Schicht höher als in dem übrigen Bereich der ersten bzw. zweiten Schicht ist.

13. Mehrschichtkörper (1, 2, 3) nach einem der Ansprüche 11 bis 13,
**dadurch gekennzeichnet,**
**dass** die Konzentration des Farbstoffs und/oder Lumineszenzstoffe in der ersten Schicht (22) und/oder in der zweiten Schicht (23) so gewählt ist, dass dessen optische Wirkung in einem zweiten Bereich (41), in welchem das Oberflächenrelief von einer Spiegelfläche, einer diffraktiven Struktur, einer Makrostruktur oder einer Mattstruktur gebildet ist, für den menschlichen Betrachter bei einem Betrachtungsabstand von mehr als 30 cm und bei einer Beleuchtung mit einer Beleuchtungsstärke von weniger als 10000 LUX nicht sichtbar ist, und/oder und/oder zweiten Schicht so gewählt ist, dass dessen Farbe bzw. dessen Farbe bei Anregung der von der ersten Reliefstruktur für einen bestimmten Einfallswinkel des einfallenden Lichts in direkter Reflexion bzw. Transmission generierten Farbe entspricht oder sich von diesen Farben unterscheidet.

14. Verfahren zur Herstellung eines Sicherheitselements (1, 2, 3) umfassend:

    Fertigen eines Mehrschichtkörpers umfassend eine Metallschicht (21) mit einem in eine erste Oberfläche und/oder einer der ersten Oberfläche gegenüberliegenden zweiten Oberfläche abgeformten optisch aktiven Oberflächenrelief, wobei in mindestens einem ersten Bereich (31 bis 39) des Mehrschichtkörpers das Oberflächenrelief von einer ersten Reliefstruktur (61) gebildet ist, die in zumindest einer durch einen zugeordneten Azimutwinkel $\phi$ bestimmten Richtung eine Abfolge von Erhebungen (612) und Vertiefungen (614) aufweist, deren Erhebungen mit einer Periode P aufeinander abfolgen, welche kleiner als eine Wellenlänge des sichtbaren Lichtes ist, wobei die Minima (615) der Vertiefungen (614) eine Grundfläche (616) definieren und die erste Reliefstruktur (61) eine Relieftiefe t aufweist, welche durch die Beabstandung der Maxima (613) der Erhebungen (612) der Reliefstruktur von der Grundfläche (616) in einer senkrecht auf der Grundfläche stehenden Richtung bestimmt ist, und wobei die Profilform und/oder die Relieftiefe t der ersten Reliefstruktur (61) so gewählt wird, dass die farbige Erscheinung des auf den ersten Bereich (31 bis 39) unter zumindest einem ersten Einfallswinkel einfallenden und von der Metallschicht (21) im ersten Bereich direkt reflektierten bzw. durch die Metallschicht direkt transmittierten Lichts (52, 53) verändert wird, insbesondere durch Plasmon-Resonanz der Metallschicht mit dem einfallenden Licht verändert wird, wobei die erste Reliefstruktur (61) eine in Bezug auf eine Spiegelung an der Grundfläche (616) asymmetrische Profilform aufweist, wobei die Breite der Erhebungen oder Vertiefungen der ersten Reliefstruktur, bezogen auf einen Abstand von t/2 von der Grundfläche, mindestens 0,6 x P vorzugsweise 0,7 x P oder höchstens 0,4 x P, insbesondere höchstens 0,3 x P beträgt.

**Claims**

1. Multilayer body (1, 2, 3), in particular security element for security documents, having an upper side (201) and an underside (202), wherein the multilayer body has a metal layer (21), wherein an optically active surface relief is moulded, at least in regions, in a first surface of the metal layer (21) facing towards the upper side (201) of the multilayer body or forming the upper side of the multilayer body and/or in a second surface of the metal layer (21) facing towards the underside (202) of the multilayer body or forming the underside of the multilayer body, wherein, in at least one first region (31 to 39) of the multilayer body, the surface relief of a first relief structure (61) is formed, which has a sequence of elevations (612) and depressions (614) in at least one direction (617), determined by an assigned azimuth angle, whose elevations (612) occur in sequence with a period P, which is smaller than a wavelength of the visible light, wherein the minima (615) of the depressions (614) lie on a basal surface and the first relief structure (61) has a relief depth t which is determined by the distance of the maxima (613) of the elevations (612) of the first relief structure (61) from the basal surface (616), in a direction perpendicular to the basal surface (616), and wherein the profile shape and/or the relief depth t of the first relief structure (61) is chosen such that the coloured appearance of the light (52, 53), which strikes the first region (31 to 39) at at least one first angle of incidence, and the light that is directly reflected from the metal layer (21) or is directly transmitted through the metal layer (21), is changed, in particular is changed by plasmon resonance of the metal layer with the incident light, **characterised in that**, the first relief structure (61) has an asymmetrical profile shape with respect to a reflection onto the basal surface (616), wherein the width (618) of the elevations (612) or depressions (614) of the first relief structure (61), relative to a distance of t/2 from the basal surface (616), is at least 0.6 x P, preferably 0.7 x P or at most 0.4 x P, in particular no higher than 0.3 x P.

2. Multilayer body (1, 2, 3) according to claim 1, **characterised in that**, the profile shape and/or the relief depth t of the first relief structure (61) is chosen such that the metal layer (21) has a reflection of less than 15% under direct reflection for the incident light (51) in the first region (31 to 39) at the first angle of incidence in a first spectral range of a width of at least 50 nm, which is visible to the human eye, and has in particular a reflection of less than 10%, and in a second spectral range visible to the human eye has a width of 10 nm and at most 200 nm, in particular 20 nm to 150 nm, an at least two times, preferably at least 2.5 times, further preferably at least 3 times and in particular 4 times higher reflection relative to the mean reflection in the first spectral range, and/or the profile shape and/or relief depth t of the first relief structure (61) is chosen such that, at a second angle of incidence that is different from the first angle of incidence, the coloured appearances of the light which is directly reflected by the metal layer in the first section or is directly transmitted through the metal layer is variously changed and, in particular, different colours are revealed under these angles of incidence when viewed under incident or transmitted light.

3. Multilayer body (1, 2, 3) according to one of the preceding claims, **characterised in that**, the edge steepness of the first relief structure (61), relative to a distance t/2 from the basal surface (616), is between 60° and 90°, in particular between 70° and 85°, and/or the edge steepness of the first relief structure (61), relative to each distance between t/4 and ¾ t from the basal surface (616), is between 40° and 90°, in particular is between 50° and 85°, and/or the edge steepness of the first relief structure (61), relative to each distance between 0 and t/4 and/or between t x 3/4 and t from the basal surface (616), is between 0° and 50°, in particular is between 0° and 40°.

4. Multilayer body (1, 2, 3) according to one of the preceding claims, **characterised in that**, the layer thickness d of the metal layer (21) in the region of the edges of the first relief structure (61), relative to a distance from the basal surface (616) of t/2, is reduced with respect to the thickness of the metal layer in the region of the maxima (613) of the elevations and/or the minima (615) of the depressions (614) by at least 30%, further preferably is reduced by at least 50%.

5. Multilayer body (1, 2, 3) according to one of the preceding claims, **characterised in that**, the period P of the first relief structure (61) is between 200 nm and 500 nm, in particular between 250 nm and 450 nm, and preferably between 250 nm and 400 nm and/or
the relief depth t of the first relief structure (61) is between 80 nm and 500 nm, in particular between 100 nm and 400 nm, preferably between 200 nm and 300 nm.

6. Multilayer body (1, 2, 3) according to one of the preceding claims,
**characterised in that**,
the metal layer (21) in the first region has a layer thickness of between 10 nm and 100 nm, preferably between 15 nm and 80 nm, more preferably between 20 nm and 50 nm, and/or the metal layer (21) in the first region has a layer thickness d, which corresponds to an optical thickness of between 0.5 and 2.5, in particular between 0.7 and 2.3, preferably between 1.0 and 2.0.

7. Multilayer body (1, 2, 3) according to one of the preceding claims,
**characterised in that**,
the surface relief is formed in one or several second regions (41, 42) and/or further regions of a second and/or further relief structure, which is/are selected from the groups: diffractive relief structure, holographic relief structure, reflecting surface, matt structure, macrostructure, lens, microlens array, in particular the at least one first region and the at least one second region are formed from a plurality of sections, wherein the sections of the first region and the sections of the second region are interfolded.

8. Multilayer body (2) according to one of the preceding claims,
**characterised in that**,
in the first region (38) or in at least one of the first regions, the basal surface (616) of the first relief structure (61) is formed from a coarse structure or a matt structure.

9. Multilayer body (1, 2, 3) according to one of the preceding claims,
**characterised in that**,
the multilayer body in the first region (31) or in at least one of the first regions has dyes and/or luminescent substances which are located less than 2 $\mu$m, in particular less than 1 $\mu$m, preferably less than 500 nm, more preferably less than 300 nm away from the first surface and/or the second surface of the metal layer (21).

10. Multilayer body (1, 2, 3) according to one of the preceding claims,
**characterised in that**,
the multilayer body has at least one first layer (22) adjacent to the first surface of the metal layer (21) and/or a second layer (23) adjacent to the second surface of the metal layer (21), which has dyes and/or luminescent substances, wherein the first and/or second layer preferably covers the first surface or the second surface of the metal layer regionally or completely in the first region or in at least one of the first regions, in which the first relief structure is moulded into the first or the second surface.

11. Multilayer body according to claim 11,
**characterised in that**,
the first layer and/or the second layer is applied only in the first region on the first surface or second surface of the metal layer, or the first layer and/or the second layer is applied only in regions of the first surface or second surface on the first or the second surface of the metal layer, in which the first relief structure is moulded into the first surface or second surface, in particular the first layer (2k2) and/or the second layer (23) has a layer thickness of between 20 nm and 2 $\mu$m, in particular between 50 nm and 1 $\mu$m, and preferably between 100 nm and 500 nm.

12. Multilayer body according to one of claims 11 and 12,
**characterised in that**,
the concentration of the dyes or the luminescent substances in the region which is less than 1 $\mu$m, in particular less than 500 nm and preferably less than 300 nm away from the first or second surface of the metal layer is higher than in the remaining region of the first or second layer.

13. Multilayer body (1, 2, 3) according to one of claims 11 to 13,
**characterised in that**,
the concentration of the dye and/or luminescent substances in the first layer (22) and/or in the second layer (23) is chosen such that, in a second region (41) in which the surface relief is formed by a reflecting surface, a diffractive structure, a macrostructure or a matt structure, its optical effect is not visible to the human eye from a viewing distance of more than 30 cm and by lighting with an illumination strength of less than 10000 LUX, and/or the second layer is so chosen that its colour, or its colour when stimulated by the colours generated by the first relief structure for a specified angle of incidence of the incident light in direct reflection or transmission, corresponds to or is different from these colours.

14. Method for the production of a security element (1, 2, 3), comprising:

preparation of a multilayer body comprising a metal layer (21) having an optically active surface relief moulded into a first surface and/or a second surface situated opposite the first surface, wherein, in at least one first region (31 to 39) of the multilayer body, the surface relief of a relief structure (61) is formed, which has a sequence of elevations (612) and depressions (614) in at least one direction determined by an assigned azimuth angle, whose elevations follow in sequence with a period P which is smaller than the wavelength of visible light, wherein the minima (615) of the depressions (614) define a basal surface (616) and the first relief structure (61) has a relief depth t which is determined by the distance of the maxima (613) of the elevations (612) of the relief structure from the basal surface (616) in a direction perpendicular to the basal surface, and wherein the profile shape and/or the relief depth t of the first relief structure (61) is chosen such that the coloured appearance of the light (52, 53), which strikes the first region (31 to 39) at at least one first angle of incidence, and the light that is directly reflected from the metal layer (21) or is directly transmitted through the metal layer (21), is changed, in particular is changed by plasmon resonance of the metal layer with the incident light, wherein the first relief structure (61) has an asymmetrical profile shape with respect to a reflection onto the basal surface (616), wherein the width of the elevations or depressions of the first relief structure, relative to a distance of t/2 from the basal surface, is at least 0.6 x P, preferably 0.7 x P, or at highest 0.4 x P, in particular at most 0.3 x P.

## Revendications

1. Corps multicouche (1, 2, 3), en particulier élément de sécurité pour des documents de sécurité, avec un côté supérieur (201) et un côté inférieur (202), dans lequel le corps multicouche présente une couche métallique (21), dans lequel dans une première surface de la couche métallique (21) tournée vers le côté supérieur (201) du corps multicouche ou formant le côté supérieur du corps multicouche et/ou dans une seconde surface de la couche métallique (21) tournée vers le côté inférieur (202) du corps multicouche ou formant le côté inférieur du corps multicouche, au moins par endroits un relief de surface actif optiquement est moulé, dans lequel dans au moins une première zone (31 à 39) du corps multicouche, le relief de surface est formé par une première structure de relief (61) qui présente dans au moins une direction (617) déterminée par un angle azimutal associé une suite d'élévations (612) et de cavités (614), dont les élévations (612) se suivent avec une période P qui est inférieure à une longueur d'onde de la lumière visible, dans lequel les minima (615) des cavités (614) se trouvent sur une surface de base et la première structure de relief (61) présente une profondeur de relief t qui est déterminée par l'espacement des maxima (613) des élévations (612) de la première structure de relief (61) de la surface de base (616) dans une direction se trouvant perpendiculaire à la surface de base (616), et dans lequel la forme profilée et/ou la profondeur de relief t de la première structure de relief (61) est choisie de sorte que l'apparence colorée de la lumière (52, 53) incidente sur la première zone (31 à 39) selon au moins un premier angle d'incidence et réfléchie directement par la couche métallique (21) dans la première zone ou transmise directement par la couche métallique, soit modifiée, en particulier soit modifiée par résonance de plasmon de la couche métallique avec la lumière incidente,
**caractérisé en ce**
**que** la première structure de relief (61) présente une forme profilée asymétrique relativement à une réflexion sur la surface de base (616), dans lequel la largeur (618) des élévations (612) ou des cavités (614) de la première structure de relief (61) s'élève par rapport à une distance de t/2 de la surface de base (616), à au moins 0,6 x P, de préférence 0,7 x P ou au plus 0,4 x P, en particulier au plus 0,3 x P.

2. Corps multicouche (1, 2, 3) selon la revendication 1,
**caractérisé en ce**
**que** la forme profilée et/ou la profondeur de relief t de la première structure de relief (61) est choisie de sorte que la couche métallique (21) présente en cas de réflexion directe pour la lumière (51) incidente selon le premier angle d'incidence dans la première zone (31 à 39) dans une première plage spectrale visible pour l'oeil humain d'une largeur d'au moins 50 nm une réflexion de moins de 15 %, en particulier de moins de 10 % et dans une seconde plage spectrale visible pour l'oeil humain d'une largeur de 10 nm et au plus de 200 nm, en particulier de 20 nm à 150 nm, une réflexion supérieure d'au moins deux fois, de préférence d'au moins 2,5 fois, encore de préférence d'au moins 3 fois et en particulier de 4 fois par rapport à la valeur médiane de la réflexion dans la première plage spectrale, et/ou
**que** la forme profilée et/ou la profondeur de relief t de la première structure de relief (61) est choisie de sorte qu'en cas de second angle d'incidence différent du premier angle d'incidence l'apparence colorée de la lumière réfléchie directement par la couche métallique dans la première zone partielle ou transmise directement par la couche métallique, est modifiée différemment et en particulier différentes couleurs se montrent selon ces angles d'incidence en cas d'observation par réflexion de lumière ou en cas d'observation par transmission de lumière.

3. Corps multicouche (1, 2, 3) selon l'une des revendications précédentes,
caractérisé en ce
la pente de flanc de la première structure de relief (61) s'élève par rapport à une distance t/2 de la surface de base (616) entre 60° et 90° en particulier entre 70° et 85°, et/ou

que la pente de flanc de la première structure de relief (61) s'élève par rapport à chaque distance entre t/4 et 3/4 t de la surface de base (616), entre 40° et 90°, en particulier entre 50° et 85°, et/ou

que la pente de flanc de la première structure de relief (61) s'élève par rapport à chaque distance entre 0 et t/4 et/ou entre t x 3/4 et t de la surface de base (616) entre 0° et 50°, en particulier entre 0° et 40°.

4. Corps multicouche (1, 2, 3) selon l'une des revendications précédentes, **caractérisé en ce** que l'épaisseur de couche d de la couche métallique (21) est réduite dans la zone des flancs de la première structure de relief (61) par rapport à une distance de t/2 de la surface de base (616), envers l'épaisseur de la couche métallique dans la zone des maxima (613) des élévations et/ou des minima (615) des cavités (614) d'au moins 30 %, encore de préférence d'au moins 50 %.

5. Corps multicouche (1, 2, 3) selon l'une des revendications précédentes, **caractérisé en ce** que la période P de la première structure de relief (61) s'élève entre 200 nm et 500 nm, en particulier entre 250 nm et 450 nm, et de préférence entre 250 nm et 400 nm, et/ou que la profondeur de relief t de la première structure de relief (61) s'élève entre 80 nm et 500 nm, en particulier entre 100 nm et 400 nm, de préférence entre 200 nm et 300 nm.

6. Corps multicouche (1, 2, 3) selon l'une des revendications précédentes, **caractérisé en ce** que la couche métallique (21) présente dans la première zone une épaisseur de couche entre 10 nm et 100 nm, de préférence entre 15 nm et 80 nm, encore de préférence entre 20 nm et 50 nm, et/ou que la couche métallique (21) présente dans la première zone une épaisseur de couche d qui correspond à une épaisseur optique entre 0,5 et 2,5, en particulier entre 0,7 et 2,3, de préférence entre 1,0 et 2,0.

7. Corps multicouche (1, 2, 3) selon l'une des revendications précédentes, **caractérisé en ce** que le relief de surface est formé dans une ou plusieurs secondes zones (41, 42) et/ou d'autres zones par une seconde et/ou autre structure de relief qui est ou sont sélectionnée (s) dans le groupe : structure de relief diffractive, structure de relief holographique, surface de miroir, structure mate, macrostructure, lentille, trame de microlentille, en particulier **que** l'au moins une première zone et l'au moins une seconde zone sont formées par une pluralité de zones partielles, dans lequel les zones partielles de la première zone et les zones partielles de la seconde zone sont encliquetées les unes dans les autres.

8. Corps multicouche (2) selon l'une des revendications précédentes, **caractérisé en ce** que dans la première zone (38) ou dans au moins une des premières zones la surface de base (616) de la première structure de relief (61) est formée par une structure grossière ou structure mate.

9. Corps multicouche (1, 2, 3) selon l'une des revendications précédentes, **caractérisé en ce** que le corps multicouche présente dans la première zone (31) ou dans au moins une des premières zones des colorants et/ou des substances luminescentes qui sont agencées à une distance de moins de 2 $\mu$m, en particulier moins de 1 $\mu$m, de préférence moins de 500 nm, encore de préférence moins de 300 nm de la première surface et/ou de la seconde surface de la couche métallique (21).

10. Corps multicouche (1, 2, 3) selon l'une des revendications précédentes, **caractérisé en ce** que le corps multicouche présente au moins une première couche (22) contiguë à la première surface de la couche métallique (21) et/ou une seconde couche (23) contiguë à la seconde surface de la couche métallique (21), qui présente des colorants et/ou des substances luminescentes, dans lequel la première et/ou seconde couche recouvre de préférence la première surface ou la seconde surface de la couche métallique par endroits ou sur toute la surface dans la première zone ou dans au moins une des premières zones, dans laquelle la première structure de relief est moulée dans la première ou seconde surface.

11. Corps multicouche selon la revendication 11, **caractérisé en ce** que la première couche et/ou la seconde couche est appliquée juste dans la première zone sur la première surface ou seconde surface de la couche métallique ou la première couche et/ou la seconde couche est appliquée juste dans des zones de la première surface ou seconde surface sur la première ou seconde surface de la couche métallique, dans lesquelles la première structure de relief est moulée dans la première surface ou seconde surface, en particulier en ce que la première couche (22) et/ou la seconde couche (23) présente une épaisseur de couche entre 20 nm et 2 $\mu$m, en particulier entre 50

nm et 1 μm et de préférence entre 100 nm et 500 nm.

**12.** Corps multicouche selon l'une des revendications 11 et 12,
**caractérisé en ce**
**que** la concentration des colorants ou des substances luminescentes est dans la zone éloignée de la première ou seconde surface de la couche métallique de moins de 1 μm, en particulier de moins de 500 nm, de préférence moins de 300 nm de la première et/ou seconde couche plus élevée que dans la zone restante de la première ou seconde couche.

**13.** Corps multicouche (1, 2, 3) selon l'une des revendications 11 à 13,
**caractérisé en ce**
**que** la concentration du colorant et/ou des substances luminescentes est choisie dans la première couche (22) et/ou dans la seconde couche (23) de sorte que son action optique ne soit pas visible dans une seconde zone (41), dans laquelle le relief de surface est formé par une surface de miroir, une structure diffractive, une macrostructure ou une structure mate, pour l'observateur humain en cas de distance d'observation de plus de 30 cm et en cas d'éclairage avec une intensité d'éclairage de moins de 10 000 LUX, et/ou
et/ou la seconde couche est choisie de sorte que corresponde sa couleur ou sa couleur lors de l'excitation à la couleur générée par la première structure de relief pour un angle d'incidence déterminé de la lumière incidente en réflexion ou transmission directe ou se distingue de ces couleurs.

**14.** Procédé de fabrication d'un élément de sécurité (1, 2, 3) comprenant :

la fabrication d'un corps multicouche comprenant une couche métallique (21) avec un relief de surface actif optiquement moulé dans une première surface et/ou une seconde surface opposée à la première surface, dans lequel dans au moins une première zone (31 à 39) du corps multicouche, le relief de surface est formé par une première structure de relief (61) qui présente dans au moins une direction déterminée par un angle azimutal associé une suite d'élévations (612) et de cavités (614), dont les élévations se suivent avec une période P qui est inférieure à une longueur d'onde de la lumière visible, dans lequel les minima (615) des cavités (614) définissent une surface de base (616) et la première structure de relief (61) présente une profondeur de relief t qui est déterminée par l'espacement des maxima (613) des élévations (612) de la structure de relief de la surface de base (616) dans une direction se trouvant perpendiculaire à la surface de base, et dans lequel la forme profilée et/ou la profondeur de relief t de la première structure de relief (61) est choisie de sorte que l'apparence colorée de la lumière (52, 53) incidente sur la première zone (31 à 39) selon au moins un premier angle d'incidence et directement réfléchie par la couche métallique (21) dans la première zone ou directement transmise par la couche métallique soit modifiée, en particulier soit modifiée par la résonance de plasmon de la couche métallique avec la lumière incidente, dans lequel la première structure de relief (61) présente une forme profilée asymétrique relativement à une réflexion sur la surface de base (616), dans lequel la largeur des élévations ou des cavités de la première structure de relief s'élève par rapport à une distance de t/2 de la surface de base, à au moins 0,6 x P de préférence 0,7 x P ou au plus 0,4 x P, en particulier au plus 0,3 x P.

Fig. 1a

Fig. 1b

Fig. 2

Fig. 3

Fig. 4a

EP 2 917 041 B1

Fig. 46

EP 2 917 041 B1

Fig. 4c

EP 2 917 041 B1

Fig. 4d

Fig. 4e

Fig. 4f

Fig. 4g

Fig. 5a

Fig. 5b

Fig. 5c

Fig. 5d

Fig. 5e

Fig. 5f

Fig. 5g

44

Fig. 6a

Fig. 66

EP 2 917 041 B1

Fig. 6c

Fig. 6d

EP 2 917 041 B1

Fig. 6e

Fig. 6f

Fig. 7a

Fig. 7b

31

41

81

82

EP 2 917 041 B1

Fig. 8b

Fig. 8a

Fig. 9b

Fig. 9a

53

Fig. 9c

Fig. 10a

Fig. 10b

Fig. 11

61

3

25

24

23

27

21

28

26

Fig. 12a

9

3

10

Fig. 12b

EP 2 917 041 B1

33

y

x

61

Fig. 12c

34

61

50

61

y

x

Fig. 12d

38

Fig. 13

30

20

Fig. 14a

361

Fig. 14b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03059643 A1
- WO 2012136777 A1
- DE 102007061979 A1
- WO 2011104551 A1
- EP 1873202 A1